(19) Europäisches Patentamt

European Patent Office

Office européen des brevets

(11) EP 1 249 298 B1

(12) **EUROPÄISCHE PATENTSCHRIFT**

(45) Veröffentlichungstag und Bekanntmachung des Hinweises auf die Patenterteilung:
**28.09.2005 Patentblatt 2005/39**

(51) Int Cl.⁷: **B23K 11/25**, B23K 11/24, B23K 9/095

(21) Anmeldenummer: **02005357.5**

(22) Anmeldetag: **14.03.2002**

(54) **Verfahren und Vorrichtung zur Erfassung der Qualität und zur Steuerung und Regelung von Pressschweiss- und Schmelzschweissprozessen**

Method and apparatus for assessing the quality of and control and monitor pressure welding and fusion welding processes

Procédé et appareil pour évaluer la qualité, contrôler et surveiller des procédés de soudage

(84) Benannte Vertragsstaaten:
**AT BE CH CY DE DK ES FI FR GB GR IE IT LI LU MC NL PT SE TR**

(30) Priorität: **10.04.2001 DE 10117854**

(43) Veröffentlichungstag der Anmeldung:
**16.10.2002 Patentblatt 2002/42**

(73) Patentinhaber: **BADISCHE DRAHTWERKE GmbH 77694 Kehl (DE)**

(72) Erfinder:
• **Albrecht, David**
  **77866 Rheinau (DE)**
• **Danilov, Vladimir**
  **77694 Kehl (DE)**

(74) Vertreter: **Beetz & Partner Steinsdorfstrasse 10 80538 München (DE)**

(56) Entgegenhaltungen:
EP-A- 0 668 711          EP-A- 0 774 319
SU-A- 1 258 653          US-A- 5 489 757

• QUERO J M ET AL: "Neural network approach to weld quality monitoring" INDUSTRIAL ELECTRONICS, CONTROL AND INSTRUMENTATION, 1994. IECON '94., 20TH INTERNATIONAL CONFERENCE ON BOLOGNA, ITALY 5-9 SEPT. 1994, NEW YORK, NY, USA,IEEE, 5. September 1994 (1994-09-05), Seiten 1287-1291, XP010137516 ISBN: 0-7803-1328-3

**Beschreibung**

Die Erfindung betrifft Verfahren und Vorrichtungen zur Erfassung sowie zur Steuerung und zur Regelung der Qualität von Preßschweiß- und Schmelzschweißprozessen und insbesondere von Widerstandsschweißprozessen und/oder der Qualität damit erzeugter Schweißverbindungen.

Die Erfindung ist grundsätzlich auf sämtliche Arten von Preßschweiß- und Schmelzschweißverfahren anwendbar, besonders auf das Widerstandspunktschweißen von Blechen und Drähten. Zu den Preßschweißverfahren, bei denen die Erfindung eingesetzt werden kann, gehören besonders das Reibschweißen, das Lichtbogenpreßschweißen und das Widerstandsschweißen, das wiederum das Punktschweißen, das Buckelschweißen, das Rollennahtschweißen, das Abbrennstumpfschweißen, das Preßstumpfschweißen und das Kammerschweißen umfasst.

Die Druckschrift EP-A-0 774 319, die als nächstliegender Stand der Technik angesehen wird, offenbart ein Verfahren und eine Vorrichtung zur Erfassung der Qualität und zur Steuerung von Widerstandschweißprozessen, bei denen die Fuzzy-Logik-Theoric augewandt wird.

Zu den Schmelzschweißverfahren, auf welche die vorliegende Erfindung angewandt werden kann, gehören das Widerstandsschmelzschweißen, das Elektroschlackeschweißen, das Elektronenstrahlschweißen sowie besonders das Lichtbogenschweißen, zu dem wiederum das Kohle-Lichtbogenschweißen, das Metall-Lichtbogenschweißen, das Wolfram-Schutzgasschweißen und das Metallschutzgasschweißen gehören.

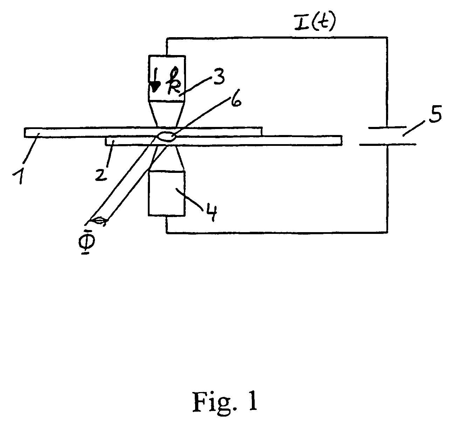

Im folgenden wird das Widerstandspunktschweißen als typisches Widerstandsschweißverfahren im Hinblick auf die vorliegende Erfindung unter Bezug auf Fig. 1 erläutert. In Fig. 1 ist der Aufbau einer Widerstandspunktschweißvorrichtung schematisch dargestellt. Beim Widerstandspunktschweißen werden die beiden zu verschweißenden Teile 1, 2, im dargestellten Fall zwei Bleche, unter hohem Druck zwischen zwei meist ballenförmigen Elektroden 3, 4 punktförmig zusammengepresst. Nach dem Aufbringen der Schweißkraft k wird mit einem Schweißtransformator als Schweißstromquelle 5 bei einer Schweißspannung von üblicherweise < 20 V mit unterschiedlichen Frequenzen ein Strom I(t) von mehreren Kiloampere durch die Schweißstelle 6 geleitet, der in Fig. 1 eine Verbindungsfläche Φ zugeordnet ist, die während des Schweißvorgangs praktisch konstant bleibt. Dadurch werden die beiden zu verbindenden Teile 1, 2 aufgrund des Übergangswiderstands quasi punktförmig auf die Schmelztemperatur oder eine etwas darunter liegende Temperatur erhitzt, so, dass der plastische und mitunter auch der flüssige Zustand der Werkstücke lokal erreicht wird. Die Verbindung geschieht aufgrund der Schweißkraft k, mit der die beiden zu verbindenden Teile 1, 2 an der Berührungsstelle zusammengepresst werden; hierbei diffundieren die in Kontakt stehenden Materialien ineinander.

Das Widerstandsschweißen und besonders das Widerstandspunktschweißen wird bekanntermaßen besonders in der Automobilindustrie, beim Fügen schwer schweißbarer Werkstoffe und beim Fügen von Drähten, z.B. bei der Herstellung von Betonstahlmatten, besonders nach DIN 488, eingesetzt.

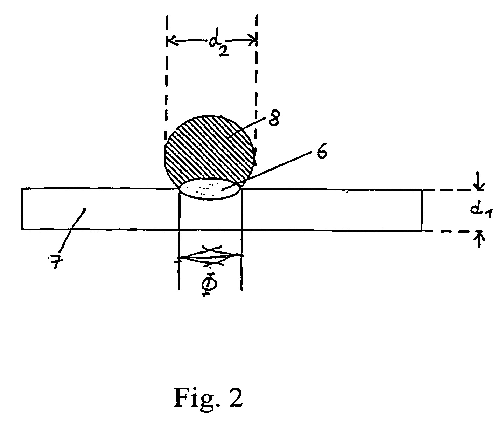

Im Fall des Verschweißens von Drähten, das in Fig. 2 schematisch dargestellt ist, werden die zum Kreuzstoß übereinanderliegenden Drähte 7, 8 durch Elektroden mit planer Oberfläche aufeinandergepresst und an der Schweißstelle 6 verschweißt, wobei eine Verbindungsfläche Φ resultiert.

Elektrische Zusammenhänge:

Im folgenden werden zunächst die grundlegenden elektrischen Zusammenhänge beim Widerstandspunktschweißen erläutert.

Der elektrische Strom I erwärmt aufgrund des Übergangswiderstandes $R_{\text{Übergang}}$ die Schweißstelle 6. Die bei einer Spannung U aufgewandte Leistung P wird beschrieben durch

$$P = U \cdot I \tag{1}$$

Der Strom wird hier durch den Übergangswiderstand $R_{\text{Übergang}}$ begrenzt und lautet nach dem Ohmschen Gesetz

$$I = \frac{U}{R_{\text{Übergang}}} \tag{2}$$

Setzt man Gleichung (2) in Gleichung (1) ein, so erhält man für die zur Erwärmung zur Verfügung stehende Leistung P am Schweißknoten

$$P = I^2 \cdot R_{\text{Übergang}} \tag{3}$$

Der elektrische Widerstand R eines Leiters läßt sich durch den spezifischen Widerstand ρ des Leitermaterials, die Berührungsfläche Φ und die Länge 1 des stromdurchflossenen Leiters ausdrücken durch

$$R = \rho \cdot \frac{1}{\Phi} \tag{4}$$

Setzt man Gleichung (4) in Gleichung (3) ein, erhält man für die Leistung P am Schweißknoten

$$P = I^2 \cdot \rho \cdot \frac{1}{\Phi} \tag{5}$$

Zu beachten ist hierbei, dass sich der spezifische Widerstand ρ mit der Temperatur ändert, also nicht über den Schweißprozess konstant ist.

Geometrische Einflüsse:

Für den Fall des Verschweißens von Drähten, die etwa senkrecht zueinander verlaufen, wie dies in Fig. 2 dargestellt ist, werden die Drähte 7, 8 in ihrem Ausgangszustand als ideal runde zylindrische Körper angesehen, die ferner eine glatte Oberfläche aufweisen. Beim Kreuzstoß dieser zylindrischen Körper gibt es eine genau punktförmige Berührungsstelle.

Für Gleichung (5) ergeben sich damit folgende Randbedingungen:

1. Die Länge 1 ist anfänglich gleich der Summe der Durchmesser $d_1$, $d_2$ der Drähte 7, 8:

$$l = d_1 + d_2$$

Drähte, wie sie etwa zur Herstellung von Baustahlmatten verwendet werden, weisen Durchmesser von bis zu etwa 20 mm auf.

2. Für die stromdurchflossene Fläche Φ ergibt sich aus der Praxis für solche Drähte näherungsweise:

$$\Phi \approx 2 \text{ mm}^2$$

Diese Betrachtungen gelten nur für den Anfangszustand des Schweißprozesses. Mit Fortschreiten des Schweißvorgangs ändern sich diese Größen mit der Zeit t und beeinflussen den Verlauf des Schweißprozesses in erheblichem Maße:

$$l = f(t); \ \Phi = f(t)$$

Zeitlicher Ablauf des Schweißprozesses:

Da die Vorgänge während des Schweißprozesses relativ komplex sind und zudem maßgeblich durch zeitlich nicht konstante Größen und Parameter beeinflusst werden, soll zunächst nur die erste Halbwelle eines Wechselstroms betrachtet werden. Bei Verwendung von Wechselstrom zum Schweißen ist der Strom I zeitabhängig (I(t)). Damit ist die am Schweißknoten auftretende Leistung gemäß Gleichung (5) ebenfalls eine Funktion der Zeit. Dieser Umstand spielt bei der Betrachtung der Wärmebilanz eines Schweißvorgangs eine große Rolle. Zur punktuellen Erwärmung des direkten Berührungspunktes annähernd bis zum Schmelzpunkt muss zuerst eine bestimmte Wärmemenge zugeführt werden, die durch Wärmeleitung teilweise in das umliegende Material geführt wird.

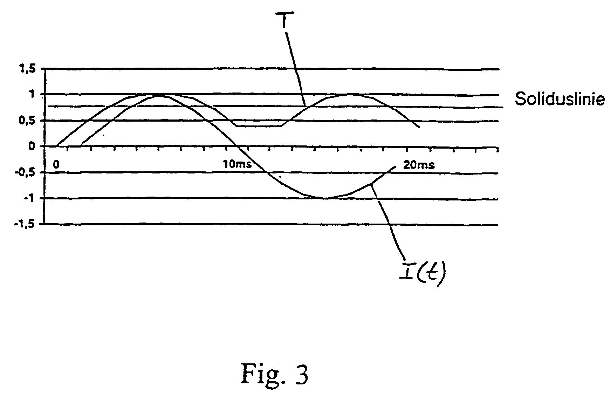

Fig. 3 zeigt qualitativ den zeitlichen Verlauf des Schweißstroms I(t) unter Verwendung eines relativen Ordinatenmaßstabs von 0 bis 1/-1 und der Temperatur T im Schweißpunkt in einem ebenfalls relativen Ordinatenmaßstab im Zeitbereich bis etwa 20 ms.

Am Anfang der ersten Schweißperiode wird durch den Schweißstrom I(t) ein dreidimensionales Wärmefeld aufgebaut. Der Schweißpunkt beginnt sich daraufhin, zeitlich verzögert, zu erwärmen. Dabei kann der Schmelzpunkt des zu verschweißenden Materials überschritten werden (Temperatur T oberhalb der Soliduslinie), das Material wird zumindest jedoch plastisch. Durch den durch die Schweißkraft k erzeugten Schweißdruck werden die Drähte aneinandergepresst. Das erweichte oder sogar flüssige Material wird dabei teilweise radial nach außen verdrängt. Das Maß dieser Stauchung wird bestimmt durch die Fließfähigkeit des erwärmten Materials, die durch den E-Modul beschreibbar ist, und durch den Schweißdruck.

Mit abnehmender Stromstärke kühlen sich die Schmelze und der Schweißpunkt wieder ab. Dabei wird die Soliduslinie erneut durchlaufen, und zwar zu niedrigeren Temperaturen T hin. Mit der zweiten Halbwelle der ersten Schweißperiode wiederholt sich dieser Vorgang, wobei die Ausgangstemperatur höher ist als bei der ersten Halbwelle. Betrachtet man entsprechend die Größen I und Φ, welche die Leistungsaufnahme nach Gleichung (5) beeinflussen, nach der ersten Halbwelle erneut, so ergibt sich:

$$I_{(0\ ms)} > I_{(10\ ms)}$$

$$\Phi_{(0\ ms)} < \Phi_{(10\ ms)}.$$

Die Länge l verringert sich entsprechend im Verlauf des Schweißvorgangs, während die Fläche Φ größer wird.

Dies hat zur Folge, dass die während der nächsten Halbwelle eingebrachte Energie kleiner ist als die in der ersten Halbwelle.

Hauptsächliche Faktoren, welche die Güte der Schweißung beeinflussen:

Da der Schweißpunkt 6 zu dem Zeitpunkt, zu dem das Material annähernd seine höchste Temperatur erreicht hat (vgl. Fig. 3), gegenüber dem Ausgangszustand größer ist (Fläche Φ in Fig. 2), liegt folgende Situation vor:

Auf beiden Seiten des Schweißpunktes 6 befindet sich erwärmtes, aber noch festes Material des Grundwerkstoffs. Daran schließen sich eine Zone von höher erwärmtem Material, das bereits plastische Eigenschaften aufweist, sowie eine Zone von verflüssigtem Material an. Diese Zonen besitzen eine nur sehr geringe Schichtdicke, jedoch ist ihre Existenz aufgrund der hohen Energiedichte vorauszusetzen. Die flüssigen Zonen der beiden Drähte 7, 8 werden durch eine äußerst dünne Plasmaschicht getrennt. Da die Temperatur der flüssigen Phasen sehr hoch ist, entsteht Metalldampf, der durch den hohen Strom in einen ionisierten Zustand gebracht wird. Die Dicke der Plasmaschicht hängt vom Plasma-Innendruck, der größenordnungsmäßig etwa $10^4$ bis etwa $10^6$ bar beträgt, und dem durch die Schweißkraft k hervorgerufenen Schweißdruck ab. Damit sollte die Plasmaschicht eine Dicke von größenordnungsmäßig einigen Mikrometern aufweisen. Diese Dicke der Plasmaschicht hat nun wiederum entscheidende Bedeutung für die Diffusionsvorgänge, die im Schmelzbereich stattfinden.

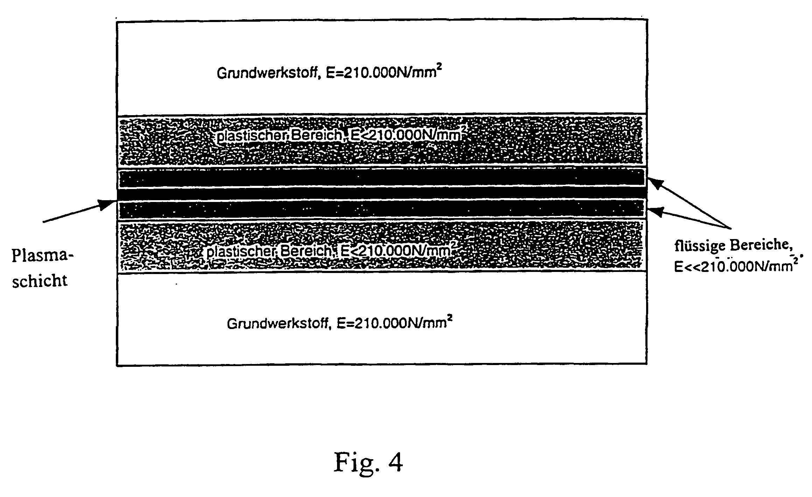

In Fig. 4 ist für das Widerstandspunktschweißen dieser Zustand schematisch dargestellt, wobei E-Modulen der entsprechenden Zonen (Grundwerkstoff: $E = 210.000\ N/mm^2$; plastischer Bereich: $E < 210.000\ N/mm^2$) beispielhaft angegeben sind. Zwischen den flüssigen Bereichen ($E \ll 210.000\ N/mm^2$) befindet sich die anfänglich gebildete Plasmaschicht. Je besser die Materialien in den Schmelzbereichen der beiden zu verschweißenden Teile 1, 2 bzw. 7, 8 ineinanderdiffundieren können, umso höher ist die Güte der erhaltenen Schweißverbindung.

Mit dem Ausschalten des Schweißstroms I(t) versiegt andererseits die punktuelle Wärmequelle, und das Plasma verschwindet. Nach Beendigung der Wärmezufuhr durch Widerstandserwärmung kühlt die Schmelze sehr schnell ab, so dass nur sehr kurze Zeiträume zur Diffusion der beiden Schmelzbereiche ineinander zur Verfügung stehen.

Aufgrund dieser Situation weisen nach herkömmlichen Widerstandsschweißverfahren erzeugte Verbindungen im Zugversuch sehr glatte Bruchstellen auf, woraus die nicht ideale, unvollständige Verbindung zu ersehen ist. Andererseits sind Bruchstellen anzustreben, die eine kristalline Oberfläche zeigen, wie sie beispielsweise im Zugversuch bei duktilen Werkstoffen auftreten.

Fläche Φ eines Schweißpunktes:

Beim Verschweißen ebener Flächen, z.B. von Blechen oder Blechprofilen, wie dies etwa in Fig. 1 dargestellt ist, ist die Größe der Fläche Φ eines Schweißpunktes 6 durch die Größe und Form der Elektroden 3, 4 vorgegeben. Die Fläche Φ ist im Fall der Schweißverbindung ebener oder praktisch ebener Flächen als über den gesamten SchweißProzess konstant anzusehen, $\Phi \approx const.$ .

Beim Widerstandpunktschweißen von Drähten, beispielsweise bei der Herstellung von Betonstahlmatten aus Drähten, treten die gleichen Effekte auf wie beim Schweißen von ebenen Flächen, wie etwa von Blechen, zum Beispiel beim Widerstandpunktschweißen von Karosserieteilen in der Automobilindustrie. Der Unterschied besteht in der zeitlichen Veränderung der geometrischen Form der Schweißverbindung beim Schweißen von Drähten. Während beim Schweißen von ebenen Flächen die Verbindungsfläche Φ fast konstant bleibt, ist sie beim Schweißen von Drähten im Kreuzstoß insbesondere eine Funktion der Schweißdauer, der Schweißkraft und des Schweißstroms, unterliegt also einer zeitlichen Veränderung während des Schweißprozesses (vgl. Fig. 2): Φ ≠ const. .

Durch das Anschmelzen der beiden zylindrischen Körper und aufgrund der Schweißkraft K werden die beiden Drähte (7, 8 in Fig. 2) fortschreitend ineinandergedrückt. Aufgrund der gewölbten Oberfläche der beiden Drähte nimmt dabei die Berührungs-fläche Φ während des Schweißens stetig zu, wobei der Prozess aber nicht so weit geht, dass die Mittellinie der beiden Körper durchlaufen wird. Nach Gleichung (5) ist die am Schweißknoten abfallende elektrische Leistung P umgekehrt proportional zur Berührungsfläche Φ. Die Folge ist eine Abnahme der elektrischen Leistung am Schweißknoten bei sonst konstanten Parametern im Verlauf des Schweißprozesses.

Die für die Festigkeit maßgebliche Fläche entspricht annähernd der Schnittfläche bei der dreidimensionalen Durchdringung von zwei Zylindern unter 90° in Abhängigkeit von der Eindringtiefe. Für eine große Festigkeit des Schweißknotens also diese Eintauchtiefe ('Stauchweg') bei der Schweißung möglichst groß sein.

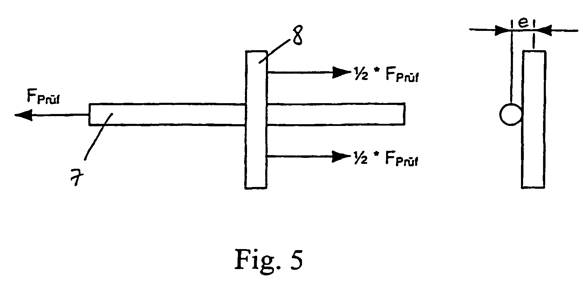

Die Prüfung der Festigkeit und die Grenzwerte für die Festigkeit von Schweißknoten bei Betonstahlmatten sind in DIN 488 festgelegt. Danach wird die Prüfung der Scherfestigkeit des Schweißknotens in einer Zugprüfmaschine gefordert. 95 % aller Schweißknoten müssen danach eine Scherfestigkeit aufweisen, die mindestens 30 % der Zugfestigkeit des Drahtes beträgt, die größenordnungsmäßig um 10 kN/mm$^2$ liegt. Eine derartige Scherfestigkeitsprüfung ist in Fig. 5 schematisch dargestellt.

Die Kraftangriffspunkte für den Festigkeitstest liegen am Querdraht 8 symmetrisch zum Längsdraht 7, der mit der entgegengesetzt gerichteten Prüfkraft $F_{Prüf}$ beauf schlagt wird. Dementsprechend wirkt an den beiden Enden des Querdrahtes 8 jeweils die halbe Prüfkraft $1/2 \cdot F_{Prüf}$. Durch den geometrischen Versatz e der Achsen von Längsdraht 7 und Querdraht 8 ergibt sich im Schweißknoten ein dreiachsiger Spannungszustand, der aufgrund der kleinen Größe des außermittigen Kraftangriffs aber näherungsweise auf eine reine Scherspannung reduziert werden kann. Die Festigkeit des Schweißknotens wird unter Bezug auf die Zugfestigkeit des Grundwerkstoffs angegeben.

Die Festigkeit einer Schweißverbindung wird maßgeblich durch zwei Größen bestimmt: zum einen durch die erreichte Querschnittsfläche Φ der Schweißverbindung, d.h., die Fläche zwischen den beiden Werkstücken, die durch den Schweißprozess eine Verbindung erfahren hat, und zum anderen durch die Güte der Schweißverbindung, d.h., die Festigkeit der erzielten Verbindung pro Flächeneinheit. Die Güte einer Schweißverbindung bzw. einer Schweißnaht gibt somit Auskunft darüber, welche Kraft pro Quadratmillimeter der Verbindungsfläche Φ angelegt werden kann, ohne dass es zu einer Deformation oder gar zu einer Zerstörung des Schweißpunktes kommt. Die Güte ist also als relative Kenngröße zu verstehen, die mit der Fläche Φ multipliziert die absolute Größe der Kraft angibt, die der Schweißknoten tragen kann.

Bei der industriellen Anwendung des Widerstandsschweißens werden sehr kurze Schweißzeiten gefordert. Durch die entsprechend erforderlichen hohen Aufheizgeschwindigkeiten bildet sich zwischen den Schmelzzonen der zu verbindenden Teile ein Metalldampfplasma, das die Durchmischung der beiden Schmelzzonen praktisch verhindert. Erst nach dem Erlöschen des Plasmas (Schweißstromabsenkung bzw. -ende) können die Schmelzen ineinanderdiffundieren, bis dieser Prozess durch Erstarrung der Schmelzen zum Stillstand kommt. Dieses Phänomen tritt partiell im Schweißpunkt oder über die ganze Schweißlinse auf. Die Verbindungsfläche Φ und die Güte bestimmen somit die Festigkeit der Schweißverbindung, die bei den bisher angewandten Verfahren qualitativ nicht zufriedenstellend ist.

Die komplizierten, zumeist mit Energieumsatz verknüpften Vorgänge in der Schweißzone sowie im Fall der Widerstandsschweißung auch im entsprechenden Stromkreis führen zu einer sehr komplexen und wegen ihrer Komplexität nicht verständlichen Modulation des Schweißstroms.

Außer den oben erläuterten Prozessen, die in der Schweißzone ablaufen, hängt die resultierende Modulation des Schweißstroms und damit auch die erzielte Schweißqualität unter anderem von folgenden weiteren Einflußgrößen ab:

- dem Auftreten von Metalldampf oder Metallplasma in der Fügezone und der Zeitdauer dieser Vorgänge,
- der Art der Elektroden,
- dem Zustand der Elektroden,
- dem Anpreßdruck,
- der eingebrachten Formänderungsarbeit,
- der Temperatur bzw. dem zeitlichen Temperaturverlauf,
- Verunreinigungen, wie z.B. Öl, Zunder, Wasser, etc.,
- Querströmen von anderen, parallel arbeitenden Schweißtransformatoren.

Da die wechselseitige Abhängigkeit der für die Schweißqualität relevanten Größen voneinander wie auch der Einfluß ihrer Absolutwerte, soweit sie einstellbar sind, wie etwa der Schweißstrom und die Schweißdauer, auf die erzielte Schweißgüte bisher weder quantitativ noch qualitativ verstanden werden konnten, war bisher die Reproduzierbarkeit der Festigkeit von Schweißverbindungen durch Widerstandsschweißen und vor allem durch Punktschweißen nur innerhalb einer großen und für die Praxis nicht annähernd zufriedenstellenden Streubreite zu gewährleisten. So ließ sich bisher durch Überwachung von Widerstand, Schweißstrom, Schweißspannung und Schweißkraft keine zuverlässige Aussage über die erreichte Schweißqualität treffen. Daher ist eine exakte Überwachung von solchen Schweißprozessen und insbesondere eine Online-Überwachung bisher nicht möglich, zumal die Festigkeit eines Schweißpunkts erst nach der Schweißung durch ein zerstörendes Prüfverfahren ermittelt werden kann. Die Ergebnisse solcher zerstörender Prüfungen erlauben jedoch wiederum nur in einem relativ weiten Rahmen einen Schluß auf die im Serienschweißprozess erzielbare Festigkeit von Schweißverbindungen. Somit waren bisher weder eine prognostische Qualitätserfassung noch eine qualitätsbezogene Steuerung oder Regelung von Schweißprozessen möglich.

Im Rahmen der Erfindung ergab sich, dass eine direkte Korrelation der Modulation des Schweißstroms I(t) selbst mit der erzielten Schweißgüte, besonders der relativen Scherfestigkeit von Schweißpunkten, nicht möglich ist. Auch eine Frequenzanalyse des Stromsignals I(t) führte direkt zu keiner Korrelationsmöglichkeit. Gleiches gilt für die digitale Weiterverarbeitung des Stromsignals I(t) durch Integration, Interpolation, Näherungen und statistische Auswertungen, die sämtlich ebenfalls nicht mit der Festigkeit bzw. Güte von Schweißverbindungen korreliert werden konnten.

Hinzu kommt bei den Schweißverfahren, auf die sich die Erfindung bezieht, dass die Modulation des Schweißstroms während der Dauer eines Schweißvorgangs nicht gleichbleibend oder konstant ist, sondern einer zeitlichen Änderung unterliegt, so dass der Informationsgehalt des Schweißstroms etwa hinsichtlich der oben genannten Einflussgrößen ebenfalls nicht zeitlich gleichbleibend oder konstant ist.

Der vorliegenden Erfindung liegt die Aufgabe zugrunde, Verfahren und Vorrichtungen zur Erfassung der Qualität von Preßschweiß- und Schmelzschweißprozessen und insbesondere von Widerstandsschweißprozessen und/oder der Qualität damit erzeugter Schweißverbindungen anzugeben, mit denen eine reproduzierbare Festigkeit der Schweißverbindungen und eine genauere Aussage über die entsprechend erreichte Qualität erzielt werden können, insbesondere eine Qualitätsprognose. Ferner sollen entsprechende Verfahren und Vorrichtungen zur Steuerung oder zur Regelung von Preßschweiß- und Schmelzschweißprozessen angegeben werden. Es soll ferner auch möglich sein, die Verfahren zur Qualitätserfassung und zur Regelung in Echtzeit bzw. online durchzuführen.

Die Aufgabe wird gemäß den unabhängigen Ansprüchen gelöst.

Die abhängigen Ansprüche betreffen vorteilhafte Ausführungsformen der Erfindungskonzeption.

Das Erfindungskonzept beruht darauf, dass der Schweißstrom bzw. seine charakteristische Modulation nicht als solche, sondern nach Differenzier- und Dämpfungs- bzw. Verstärkungsschritten als Informationsquelle verwendet werden. Dabei wird von folgenden Gegebenheiten ausgegangen:

1. Der Schweißstrom I(t) besitzt zu jedem Zeitpunkt und an jeder Stelle des Stromkreises die gleiche Größe und die gleiche Richtung.

2. Der Schweißstrom I(t) ist ein sehr schneller Informationsträger.

3. Jeder energetische Prozess im Stromkreis bewirkt eine charakteristische Modulation des Schweißstroms I(t).

4. Der Schweißstrom I(t) kann auch außerhalb der Schweißzone aufgenommen und ausgewertet werden.

5. Zur Messung des Stroms I(t) stehen zuverlässige und schnelle Systeme zur Verfügung (analoge und digitale Systeme).

Das erfindungsgemäße Verfahren zur Erfassung der Qualität von Preßschweiß- und Schmelzschweißprozessen und insbesondere von Widerstandsschweißprozessen und/oder der Qualität damit erzeugter Schweißverbindungen umfasst folgende Schritte:

(I) Erfassung des Stroms (I(t)), der durch die Schweißstelle fließt oder der mit der Leistungserzeugung an der Schweißstelle korreliert ist (A*),
(II) Bildung der 1. Ableitung des erfassten Stroms (I(t)) (A*) nach der Zeit t (dI(t)/dt) (A),
(III) Bildung der 2. Ableitung des Stroms (I(t)) nach der Zeit t ($d^2I(t)/dt^2$) (B),
(IV) als wahlweisen Schritt
Bildung der 3. Ableitung des Stroms (I(t)) nach der Zeit t ($d^3I(t)/dt^3$) (C),
(V) als wahlweisen Schritt
frequenzabhängige Gewichtung der 2. Ableitung ($d^2I(t)/dt^2$) (B) bzw. der 3. Ableitung ($d^3I(t)/dt^3$) (C) des Stroms (I(t)) durch frequenzabhängige Dämpfung oder Verstärkung, wobei bei höheren Frequenzen ($f_i$) stärker verstärkt oder schwächer gedämpft wird als bei niedrigeren Frequenzen ($f_i$), unter Erhalt einer frequenzgewichteten 2. Ableitung ($[d^2I(t)/dt^2]f_i$) (D) bzw. einer frequenzgewichteten 3. Ableitung ($[d^3I(t)/dt^3]f_i$) (E), die eine erste Bewertungsgröße (BG1/D bzw. BG1/E) darstellen,

(VI) als wahlweisen Schritt
Bildung der Ableitung

- der 2. Ableitung ($d^2I(t)/dt^2$) (B) nach der Zeit t ($d^3I(t)/dt^3$) (C) bzw.
- der 3. Ableitung ($d^3I(t)/dt^3$) (C) nach der Zeit t ($d^4I(t)/dt^4$) (C') bzw.
- der frequenzgewichteten 2. Ableitung ($[d^2I(t)/dt^2]f_i$) (D) nach der Zeit t ($d[d^2I(t)/dt^2]f_i/dt$) (F) bzw.
- der frequenzgewichteten 3. Ableitung ($[d^3I(t)/dt^3]f_i$) (E) nach der Zeit t ($d[d^3I(t)/dt^3]f_i/dt$) (G), die eine zweite Bewertungsgröße (BG2/C bzw. BG2/C' bzw. BG2/F bzw. BG2/G) darstellen,

und

(VII) Erzeugung einer Korrelation oder Verwendung einer vorgegebenen Korrelation einer Bewertungsgröße (BG), welche

- die 2. Ableitung des Stroms (I(t)) nach der Zeit t ($d^2I(t)/dt^2$) (B)
und/oder
- die 3. Ableitung des Stroms (I(t)) nach der Zeit t ($d^3I(t)/dt^3$) (C)
und/oder
- die erste Bewertungsgröße (BG1/D; BG1/E)
und/oder
- die zweite Bewertungsgröße (BG2/C; BG2/C'; BG2/F; BG2/G) darstellt, mit einer auf den Schweißprozess und/oder auf erzeugte Schweißverbindungen bezogenen Qualitätsgröße (QG) unter Erhalt einer entsprechenden Qualitätsgröße (QG/B; QG/C; QG/D; QG/E; QG/C'; QG/F; QG/G).

Die oben definierten Verfahrensweisen führen entsprechend zu Bewertungsgrößen, die, vor allem bei hinsichtlich der auftretenden Modulation des Schweißstroms einfacheren Verhältnissen, bereits als qualitative Kriterien für die Qualität von Schweißverbindungen herangezogen werden können.

Eine quantitative Korrelation mit einer Qualität (Qualitätsgröße) wird im Rahmen des erfindungsgemäßen Verfahrens durch die Erzeugung einer Korrelation oder Verwendung einer vorgegebenen Korrelation der Bewertungsgröße (BG) mit einer auf den Schweißprozess und/oder auf erzeugte Schweißverbindungen bezogenen Qualitätsgröße (QG) durchgeführt.

Vorzugsweise wird in Schritt VII die Korrelation der Bewertungsgröße (BG) mit der Qualitätsgröße (QG) unter Verwendung eines neuronalen Netzwerks vorgenommen.

Dazu sind eine ganze Reihe von "Feedforward"-Netzen und rückgekoppelten neuronalen Netzen geeignet, wie Multilayer-Perceptron-Netze (MLP-Netze), Time-Delay-Netze, Netze mit radialen Basisfunktionen und rekursive neuronale Netze. Bevorzugt werden die neuronalen Netze mit einem Backpropagation-Lernverfahren für ihre Aufgabe, hier die Bildung einer Korrelation der Bewertungsgröße (BG) mit der Qualitätsgröße (QG), trainiert. Die Erfindung ist jedoch nicht auf die genannten neuronalen Netze und das Backpropagation-Lernverfahren beschränkt, sondern umfaßt das allgemeine Konzept der Korrelation der oben beschriebenen Bewertungsgrößen mit einer Qualitätsgröße unter Anwendung von neuronalen Netzwerken.

Die Eingangsgrößen für das neuronale Netzwerk können einzelne Werte oder zeitliche Verläufe der oben beschriebenen Bewertungsgrößen oder davon durch weitere Verarbeitung abgeleitete Größen sein.

Bevorzugt werden in Schritt VII folgende Maßnahmen durchgeführt:

(VIIa) Frequenzanalyse der Bewertungsgröße (BG) unter Erhalt von Frequenzteilbereichen zugeordneten Frequenzbereichsgrößen ($FG_1$, $FG_2$, ... $FG_n$),

(VIIb) Zuführung der Frequenzbereichsgrößen ($FG_1$, $FG_2$, ... $FG_n$) als Eingangsgrößen zu Eingangsneuronen eines neuronalen Netzwerks
und

(VIIc) Zuordnung von entsprechenden Qualitätsgrößen (QG/B; QG/C; QG/D; QG/E; QG/C'; QG/F; QG/G), die vorzugsweise Qualitätsklassen entsprechen, zu den Ausgangsneuronen des neuronalen Netzwerks.

Durch die Frequenzanalyse der Bewertungsgröße (BG) werden die spektralen Eigenschaften der Bewertungsgröße (BG) analysiert; die gewonnenen Frequenzbereichsgrößen werden den Eingangsneuronen des neuronalen Netzwerks zugeführt. Dies ist besonders für eine Auswertung der Oberschwingungen der erfassten Signale von Vorteil.

Die Frequenzanalyse kann in Form einer Kurzzeitanalyse für einen zeitlichen Teilbereich der Bewertungsgröße erfolgen und in einem bestimmten zeitlichen Abstand periodisch wiederholt werden oder die gesamte Dauer des Schweißvorgangs auf einmal erfassen. Die zeitliche und frequenzmäßige Auflösung der Frequenzanalyse ist entsprechend den Eigenschaften des zu analysierenden Schweißstroms und der daraus abgeleiteten Signale anzupassen. Bei der Verwendung von wechselstromartigen Schweißströmen sind beispielsweise die Grundperiode, die ungefähre mittlere Periodendauer der Oberschwingungen (und eventuell die Abtastfrequenz) für die Dimensionierung der Frequenzanalyse nach allgemeinen Regeln der Signalverarbeitung zu berücksichtigen.

Die Ausgangsneuronen des neuronalen Netzes können jeweils einzelnen Qualitätsklassen zugeordnet werden. Die Qualitätsklassen stellen einzelne Bereiche (Intervalle) des Wertebereichs der entsprechenden Qualitätsgröße dar. Beispielsweise wird der Wertebereich einer Qualitätsgröße in zehn gleich große Bereiche aufgeteilt, denen jeweils ein Ausgangsneuron zugeordnet wird. Wird ein solches Ausgangsneuron aktiviert, zeigt es einen Wert der Qualitätsgröße in dem zugeordneten Wertebereich an. In Abhängigkeit vom Aktivierungszustand der Ausgangsneuronen des neuronalen Netzes kann so der Wert der Qualitätsgröße ermittelt werden.

Der Wert der durch das neuronale Netz ermittelten Qualitätsgröße kann auch direkt durch Umrechnung aus dem Wert eines einzelnen Ausgangsneurons bestimmt werden. So wird beispielsweise der Wertebereich eines MLP-Ausgangsneurons von 0 bis 1 einer relativen Scherfestigkeit von 0 bis 100 % zugeordnet. Der Wert des MLP-Ausgangsneurons kann somit durch einfache Skalierung in die entsprechende Qualitätsgröße umgerechnet werden.

Weiterhin kann die Frequenzanalyse in Schritt VIIa durch Frequenzbereichen zugeordnete Bandpassfilter ($BP_1$, $BP_2$, ... $BP_n$) durchgeführt werden, wobei die erzeugten Frequenzbereichsgrößen ($FG_1$, $FG_2$, ... $FG_n$) gegebenenfalls mit vorgegebenen, unterschiedlichen Verstärkungs- oder Dämpfungsfaktoren gewichtet werden.

Die Bandpassfilter sind bevorzugte Mittel zur Frequenzanalyse, da sie jeweils unabhängig voneinander dimensioniert werden können. Die Anordnung der Bandpassfilter kann linear, d.h. mit gleichmäßigem Abstand der Bandpassmittenfrequenzen, logarithmisch oder nach einer anderen Aufteilung erfolgen. Die Bandpassfilter können den analysierten Frequenzbereich aneinandergrenzend oder überlappend abdecken. Auch können Verstärkungs- oder Dämpfungsfaktoren zur frequenzabhängigen Verstärkung oder Dämpfung in die Bandpassfilter eingerechnet werden. So kann beispielsweise ein Hochpass zur Bevorzugung von hohen Frequenzen realisiert werden.

Die Frequenzanalyse in Schritt VIIa kann auch durch Fourieranalyse vorgenommen werden, wobei die erhaltenen Frequenzkomponenten gegebenenfalls mit vorgegebenen, unterschiedlichen Verstärkungs- oder Dämpfungsfaktoren gewichtet werden können. Eine Fourieranalyse, speziell eine digital realisierte DFT oder FFT, kann bei einer großen Anzahl von Frequenzbändern günstiger sein als eine Frequenzanalyse durch Bandpassfilter. Durch entsprechende Dimensionierung und eine eventuell gewichtete Zusammenfassung von einzelnen Frequenzkomponenten können die zugehörigen Frequenzbereichsgrößen ermittelt werden.

Die Frequenzanalyse in Schritt VIIa kann in einem Gesamt-Frequenzbereich von 0 bis 500 kHz und vorzugsweise von 10 Hz bis 100 kHz durchgeführt werden, um die für die Qualität des Schweißvorgangs relevanten Frequenzkomponenten zu erfassen.

Vorzugsweise wird dazu die Frequenzanalyse unter Verwendung von Frequenzteilbereichen einer Bandbreite von 10 Hz bis 1 kHz und noch bevorzugter von 50 bis 500 Hz durchgeführt.

Weiterhin können die Frequenzbereichsgrößen ($FG_1$, $FG_2$, ... $FG_n$) vor der weiteren Verarbeitung nach einem Mittelungsverfahren gemittelt oder nach einem Summationsverfahren zeitlich summiert bzw. integriert werden. Auf diese Weise werden zeitliche Schwankungen im Signalverlauf beseitigt und die weitere Verarbeitung durch das neuronale Netz vereinfacht.

Das erfindungsgemäße Verfahren kann zur Steuerung der Prozessqualität von Preßschweiß- und Schmelzschweißprozessen und insbesondere von Widerstandsschweißprozessen und/oder der Qualität damit erzeugter Schweißverbindungen verwendet werden. Dazu können eine oder mehrere qualitätsrelevante Prozessvariable oder davon abgeleitete Größen in Abhängigkeit von erhaltenen Qualitätsgrößen (QG/B; QG/C; QG/D; QG/E; QG/C'; QG/F; QG/G) gesteuert oder geregelt werden.

In einem dem oben definierten Steuerungsverfahren vorgeschalteten oder nachgeschalteten Schritt können eine oder mehrere Verfahrensvariable (Prozessvariable) und ein oder mehrere Verfahrensparameter eingestellt werden.

Damit sind eine Qualitätsprognose und eine Qualitätskontrolle möglich, die zur Bewertung des jeweils für gegebene Verfahrensbedingungen erhaltenen Verfahrensergebnisses und zur Einstellung von Verfahrensparametern und Verfahrensvariablen im Sinne einer Steuerung herangezogen werden können, mit denen entsprechend steuerbare Qualitätsergebnisse erzielbar sind.

Die Ergebnisprognose erlaubt eine bis zum Optimum der erzielten Qualität gehende Einstellung der Verfahrensbedingungen.

Typische Prozessvariable bzw. Prozessparameter, die im Sinne der oben angeführten Steuerung eingestellt werden können, sind:

- der angewandte Pressdruck (k),
- die Schweißspannung (U(t)),
- die Dauer eines Schweißvorgangs,
- der Zeitpunkt und/oder die Dauer einer Erhöhung und/oder einer Verringerung des durch die Schweißstelle fließenden Stroms (I(t)),
- der Phasenanschnittwinkel,
- die Steilheit einer Erhöhung und/oder einer Verringerung des durch die Schweißstelle fließenden Stroms (I(t)),
- die Dauer eines konstanten oder quasikonstanten, durch die Schweißstelle fließenden Stroms (I(t)),
- der Zeitpunkt der Abschaltung des durch die Schweißstelle fließenden Stroms (I(t)),
- die Geschwindigkeit des Vorrückens der Schweißstelle bei der Herstellung nicht punktförmiger Schweißverbindungen.

Das erfindungsgemäße Verfahren zur Regelung der Prozessqualität von Preßschweiß- und Schmelzschweißprozessen und insbesondere von Widerstandsschweißprozessen und/oder der Qualität damit erzeugter Schweißverbindungen umfasst folgenden weiteren Schritt VIII, in dem folgende Maßnahmen durchgeführt werden:

(VIIIa) Festlegen eines Wertes oder Wertebereichs einer oder mehrerer Qualitätsgrößen (QG/B; QG/C; QG/D; QG/E; QG/C'; QG/F; QG/G) als Sollwert ($Q_{SOLL}$) (J),
(VIIIb) Vergleichen der erhaltenen Qualitätsgrößen (QG/B; QG/C; QG/D; QG/E; QG/C'; QG/F; QG/G) als Istwerte ($Q_{IST}$) (H) mit dem Sollwert ($Q_{SOLL}$) (J) unter Ermittlung der Regelabweichung ($|Q_{SOLL}-Q_{IST}|$) und
(VIIIc) Erzeugung einer Stellgröße (SG) (K), die eine oder mehrere qualitätsrelevante Prozessvariable oder davon abgeleitete Größen beeinflusst, zur Minimierung der Regelabweichung ($|Q_{SOLL}-Q_{IST}|$).

Die erfindungsgemäße Vorrichtung zur Erfassung der Qualität von Preßschweiß- und Schmelzschweißprozessen und insbesondere von Widerstandsschweißprozessen und/oder der Qualität damit erzeugter Schweißverbindungen, die sich insbesondere zur Durchführung der oben angegebenen Verfahren eignet, weist auf:

- eine Stromerfassungseinrichtung, die erfasst:

  • den Strom (I(t)), der durch die Schweißstelle fließt oder der mit der Leistungserzeugung an der Schweißstelle korreliert ist (Ausgangssignal A*), oder
  • die 1. Ableitung des Stroms (I(t)) (A*) nach der Zeit t (dI(t)/dt) (Ausgangssignal A),

und
- eine Auswertungseinrichtung, die mit der Stromerfassungseinrichtung verbunden ist und deren Ausgangssignale (A* oder A) empfängt und folgende Verarbeitungsschritte durchführt:

  • im Fall des Ausgangssignals A*:
  den vorgeschalteten Schritt

      (II) Bildung der 1. Ableitung des erfassten Stroms (I(t)) (A*) nach der Zeit t (dI(t)/dt) (A)

  • und nach Schritt II bzw. im Fall des Ausgangssignals A:

      (III) Bildung der 2. Ableitung des Stroms (I(t)) nach der Zeit t ($d^2I(t)/dt^2$) (B),
      (IV) als wahlweisen Schritt
      Bildung der 3. Ableitung des Stroms (I(t)) nach der Zeit t ($d^3I(t)/dt^3$) (C), und
      (V) als wahlweisen Schritt
      frequenzabhängige Gewichtung der 2. Ableitung ($d^2I(t)/dt^2$) (B) bzw. der 3. Ableitung ($d^3I(t)/dt^3$) (C) des Stroms (I(t)) durch frequenzabhängige Dämpfung oder Verstärkung, wobei bei höheren Frequenzen ($f_i$) stärker verstärkt oder schwächer gedämpft wird als bei niedrigeren Frequenzen ($f_i$), unter Erhalt einer frequenzgewichteten 2. Ableitung ($[d^2I(t)/dt^2]f_i$) (D) bzw. einer frequenzgewichteten 3. Ableitung ($[d^3I(t)/dt^3]f_i$) (E), die eine erste Bewertungsgröße (BG1/D bzw. BG1/E) darstellen,
      (VI) als wahlweisen Schritt
      Bildung der Ableitung

          - der 2. Ableitung ($d^2I(t)/dt^2$) (B) nach der Zeit t ($d^3I(t)/dt^3$) (C) bzw.

- der 3. Ableitung $(d^3I(t)/dt^3)$ (C) nach der Zeit t $(d^4I(t)/dt^4)$ (C') bzw.
- der frequenzgewichteten 2. Ableitung $([d^2I(t)/dt^2]f_i)$ (D) nach der Zeit t $(d[d^2I(t)/dt^2]f_i/dt)$ (F) bzw.
- der frequenzgewichteten 3. Ableitung $([d^3I(t)/dt^3]f_i)$ (E) nach der Zeit t $(d[d^3I(t)/dt^3]f_i/dt)$ (G), die eine zweite Bewertungsgröße (BG2/C bzw. BG2/C' bzw. BG2/F bzw. BG2/G) darstellen,

sowie

- eine Korrelationseinrichtung, die der Auswertungseinrichtung nachgeschaltet ist und folgenden Schritt VII durchführt:

(VII) Erzeugung einer Korrelation oder Verwendung einer vorgegebenen Korrelation einer Bewertungsgröße (BG), welche

- die 2. Ableitung des Stroms (I(t)) nach der Zeit t $(d^2I(t)/dt^2)$ (B) und/oder
- die 3. Ableitung des Stroms (I(t)) nach der Zeit t $(d^3I(t)/dt^3)$ (C) und/oder
- die erste Bewertungsgröße (BG1/D; BG1/E) und/oder
- die zweite Bewertungsgröße (BG2/C; BG2/C'; BG2/F; BG2/G) darstellt,

mit einer auf den Schweißprozess und/oder auf erzeugte Schweißverbindungen bezogenen Qualitätsgröße (QG) unter Erhalt einer entsprechenden Qualitätsgröße (QG/B; QG/C; QG/D; QG/E; QG/C'; QG/F; QG/G).

Die Korrelationseinrichtung kann ein neuronales Netz aufweisen, das die Korrelation der Bewertungsgröße (BG) mit der Qualitätsgröße (QG/B; QG/C; QG/D; QG/E; QG/C'; QG/F; QG/G) vornimmt.

Bevorzugt führt die Korrelationseinrichtung in Schritt VII folgende Maßnahmen durch:

(VIIa) Frequenzanalyse der Bewertungsgröße (BG) unter Erhalt von Frequenzteilbereichen zugeordneten Frequenzbereichsgrößen $(FG_1, FG_2, ... FG_n)$,
(VIIb) Zuführung der Frequenzbereichsgrößen $(FG_1, FG_2, ... FG_n)$ als Eingangsgrößen zu Eingangsneuronen des neuronalen Netzwerks und
(VIIc) Zuordnung von entsprechenden Qualitätsgrößen (QG/B; QG/C; QG/D; QG/E; QG/C'; QG/F; QG/G), die vorzugsweise Qualitätsklassen entsprechen, zu den Ausgangsneuronen des neuronalen Netzwerks.

Die Korrelationseinrichtung kann Frequenzbereichen zugeordnete Bandpassfilter $(BP_1, BP_2, ... BP_n)$ aufweisen, welche die Frequenzanalyse in Schritt VIIa durchführen. Die erzeugten Frequenzbereichsgrößen $(FG_1, FG_2, ... FG_n)$ werden gegebenenfalls mit vorgegebenen, unterschiedlichen Verstärkungs- oder Dämpfungsfaktoren gewichtet.

Die Korrelationseinrichtung weist vorzugsweise eine Fourieranalyseeinrichtung auf, welche die Frequenzanalyse in Schritt VIIa vornimmt. Die erhaltenen Frequenzkomponenten werden gegebenenfalls mit vorgegebenen, unterschiedlichen Verstärkungs- oder Dämpfungsfaktoren gewichtet.

Die erfindungsgemäße Vorrichtung kann zur Steuerung von Preßschweiß- und Schmelzschweißprozessen und insbesondere von Widerstandsschweißprozessen zur Einstellung und/oder Prognose der Prozessqualität und/oder der Qualität damit erzeugter Schweißverbindungen verwendet werden.

Die erfindungsgemäße Steuervorrichtung weist vorteilhaft eine Stelleinrichtung auf, mit der eine oder mehrere der folgenden Prozessvariablen beeinflussbar bzw. einstellbar sind:

- der angewandte Pressdruck (k),
- die Schweißspannung (U(t)),
- die Dauer eines Schweißvorgangs,
- der Zeitpunkt und/oder die Dauer einer Erhöhung und/oder einer Verringerung des durch die Schweißstelle fließenden Stroms (I(t)),
- der Phasenanschnittwinkel,
- die Steilheit einer Erhöhung und/oder einer Verringerung des durch die Schweißstelle fließenden Stroms (I(t)),
- die Dauer eines konstanten oder quasikonstanten, durch die Schweißstelle fließenden Stroms (I(t)),
- der Zeitpunkt der Abschaltung des durch die Schweißstelle fließenden Stroms (I(t)),
- die Geschwindigkeit des Vorrückens der Schweißstelle bei der Herstellung nicht punktförmiger Schweißverbindungen.

Die Stelleinrichtung weist vorzugsweise eine Ansteuerschaltung und eine von der Ansteuerschaltung ansteuerbare Stromstelleinrichtung oder Spannungsstelleinrichtung auf, mit welcher der durch die Schweißstelle fließende Strom (I(t)) über die Schweißstromquelle beeinflusst werden kann.

Die Qualitätsgrößen (QG/B; QG/C; QG/D; QG/E; QG/C'; QG/F; QG/G) beinhalten also eine Qualitätsinformation, die beispielsweise auf die Scherfestigkeit einer Punktschweißverbindung bezogen sein kann. Wie bereits oben zum Steuerverfahren erläutert, erlaubt die erfindungsgemäße Steuervorrichtung eine Prognose einer betrachteten Qualität, vorteilhaft z.B. der Scherfestigkeit einer Punktschweißverbindung.

Durch manuelle wie auch durch maschinelle und insbesondere durch automatisierte Einstellung einer oder mehrerer relevanter Prozessvariablen kann man sich so, z.B. schrittweise, einer angestrebten Qualität annähern oder die Vorrichtung, und damit auch das Verfahren, auf dieses Ergebnis, etwa die erzielte Scherfestigkeit der Schweißverbindung, hin optimieren. Dabei handelt es sich um ein offenes Wirksystem, also um eine Steuerung.

Dieser Aspekt der vorliegenden Erfindung ist für die Praxis, etwa bei der Herstellung von Baustahlmatten, bereits von großer Bedeutung, da unter industriellen Produktionsbedingungen in der Regel weitgehend gleichbleibende, quasikonstante Schweißbedingungen vorliegen und eine Qualitätseinstellung auf ein erwünschtes Niveau, eine Qualitätsverbesserung und sogar eine Qualitätsoptimierung ('Parameteroptimierung') durch das erfindungsgemäße Steuerverfahren und die erfindungsgemäße Steuervorrichtung erzielbar sind, ohne dass von einem Regelsystem mit geschlossenem Wirksystem, das möglichst in Echtzeit bzw. online arbeiten müsste, Gebrauch gemacht werden muss.

Die erfindungsgemäße Vorrichtung ist nach einer besonders bevorzugten Ausführungsform als Regelvorrichtung zur Regelung von Preßschweiß- und Schmelzschweißprozessen und insbesondere von Widerstandsschweißprozessen zur Regelung der Prozessqualität und/oder der Qualität damit erzeugter Schweißverbindungen ausgestaltet und weist zusätzlich eine Regeleinrichtung auf, die mit der Korrelationseinrichtung verbunden ist und von ihr Qualitätsgrößen (QG/B; QG/C; QG/D; QG/E; QG/C'; QG/F; QG/G) als Istwert ($Q_{IST}$) (H) erhält und durch Vergleichen des Istwertes ($Q_{IST}$) (H) mit einem Sollwert ($Q_{SOLL}$) (J), der als Wert oder Wertebereich einer oder mehrerer Qualitätsgrößen (QG/B; QG/C; QG/D; QG/E; QG/C'; QG/F; QG/G), zuvor festgelegt wurde, die Regelabweichung ($|Q_{SOLL}-Q_{IST}|$) ermittelt und eine Stellgröße (SG) (K) erzeugt, die eine oder mehrere Prozessvariable oder davon abgeleitete Größen beeinflusst, zur Minimierung der Regelabweichung ($|Q_{SOLL}-Q_{IST}|$).

Die erfindungsgemäße Regelvorrichtung weist vorteilhaft eine Stelleinrichtung auf, welche die Stellgröße (SG) von der Regeleinrichtung empfängt und eine oder mehrere ergebnisrelevante Prozessvariable oder davon abgeleitete Größen entsprechend der Stellgröße (SG) beeinflusst.

Typische derartige ergebnisrelevante Prozessvariable bei der Regelung sind die Schweißspannung (U), der beim Punktschweißen angewandte Pressdruck (k) und vor allem der Schweißstrom (I(t)), der durch die Schweißstelle fließt. Weitere solche Prozessvariable sind der zeitliche Verlauf des Absolutwertes des Stroms, besonders seine Anstiegsgeschwindigkeit oder Abfallgeschwindigkeit und Haltezeiten. Eine weitere Prozessvariable ist bei der Herstellung nicht punktförmiger Schweißverbindungen die Geschwindigkeit des Vorrückens der Schweißstelle.

Im Rahmen der Erfindungskonzeption kann vorteilhaft so vorgegangen werden, dass der Einfluß jeder Prozessvariablen auf das Schweißergebnis unter Konstanthaltung der jeweils übrigen Prozessvariablen geprüft wird; auf diese Weise kann die Prozessvariable ermittelt werden, die das Schweißergebnis am stärksten beeinflusst. Für solche Vorversuche wie auch zur Festlegung eines geeigneten qualitätsbezogenen Sollwertes ($Q_{SOLL}$) (J) eignet sich zum Beispiel das erfindungsgemäße Steuerungsverfahren. Die hier wichtigsten Prozessvariablen sind der Zeitpunkt des Stromanstiegs, seine Steilheit und die Haltezeiten.

Die Stelleinrichtung umfaßt vorzugsweise eine Ansteuerschaltung, die das Stellsignal (SG) von der Regeleinrichtung erhält, und eine von der Ansteuerschaltung ansteuerbare Stromstelleinrichtung, die eine ergebnisrelevante Prozessvariable beeinflusst, besonders den durch die Schweißstelle fließenden Strom über die Ansteuerung der Schweißstromquelle.

Die Stromstelleinrichtung ist vorteilhaft eine Thyristorschaltung, eine Phasenanschnittschaltung, ein Frequenzumrichter oder eine Einrichtung zur Steuerung der Strom- oder Spannungsamplitude.

Die erfindungsgemäße Vorrichtung kann ferner eine Ausgabeeinrichtung aufweisen, die der Auswertungseinrichtung nachgeschaltet ist und folgende Größen bzw. Signale ausgibt:

- die erste Bewertungsgröße (BG1/D bzw. BG1/E) und/oder
- die zweite Bewertungsgröße (BG2/F bzw. BG2/G) und/oder
- die Qualitätsgröße (QG/B; QG/C; QG/D; QG/E; QG/C'; QG/F; QG/G).

Bei der Ausgabeeinrichtung kann es sich um eine Anzeige, einen Drucker, eine Datenschnittstelle oder ähnliche, dem Fachmann an sich bekannte Einrichtungen handeln. Die Ausgabeeinrichtung kann auch mehrere der genannten Funktionen aufweisen. Besonders vorteilhaft ist es, das erzielte Regelergebnis oder die statistisch erzielte Schweißqualität, die einer Produktprognose entspricht, auszugeben.

Die Erfindung gibt ferner auch eine Schweißvorrichtung zum Pressschweißen oder Schmelzschweißen und insbesondere zum Widerstandsschweißen an, die sich insbesondere zur Durchführung der oben angegebenen Verfahren eignet und aufweist:

- Elektroden, zwischen denen die zu verschweißenden Werkstücke anzuordnen sind oder von denen eine Elektrode das Werkstück darstellt,
- eine Schweißstromquelle, die mit den Elektroden verbunden und schaltbar und/oder steuerbar ist, sowie
- eine erfindungsgemäße Vorrichtung, besonders eine Steuervorrichtung oder eine Regelvorrichtung gemäß der Erfindung.

Der Begriff'Schweißstromquelle' ist im Rahmen der vorliegenden Erfindung nicht im Sinne einer Konstantstromquelle oder einer Stromquelle zu verstehen, die einen bestimmten Strom einprägt, sondern im allgemeinen Sinne als Quelle für den Strom I beliebiger Art (Gleichstrom, gepulster Gleichstrom, Wechselstrom, phasenangeschnittener Wechselstrom, etc.), dessen Größe und zeitliche Modulation durch die elektrischen Verhältnisse und Vorgänge im Schweißstromkreis und insbesondere den Widerstand im Schweißstromkreis bestimmt werden.

Es kann sich dabei um eine Stromquelle handeln, die eine Gleichspannung oder eine Wechselspannung liefert.

Das Erfindungskonzept beruht darauf, dass die Oberschwingungen des Schweißstroms anhand der Bewertungsgrößen und insbesondere der Korrelation mit einem Qualitätskriterium identifiziert, aufbereitet und zur Beurteilung und zur Prognose der Schweißqualität sowie zu Steuer- und Regelzwecken herangezogen werden können.

Derartige Auswertungen des modulierten Stromsignals waren nach dem oben erläuterten Stand der Technik nicht möglich.

Aufgrund der mehrfachen Differenzierung des Stroms nach der Zeit und der - linearen oder nichtlinearen - Verstärkung der Ableitungssignale können die modulierten Schwingungen des Stroms I(t) ausgewertet werden. Dies geschieht nach frequenzabhängiger Gewichtung der Ableitungssignale, die beispielsweise durch Aufspaltung des Signals in mehrere Teilsignale durch Frequenzteiler und entsprechend gewählte Verstärkung der Teilsignale erzeugt werden. Diese Teilsignale werden zusammen oder getrennt bewertet, indem sie z.B. als Echtzeitsignale weiterverarbeitet werden; sie können zur Vereinfachung der Signalauswertung integriert werden.

Die frequenzabhängige Gewichtung der Ableitungssignale kann auch durch ein lineares Übertragungssystem mit entsprechender Übertragungsfunktion, insbesondere einen Hochpass, realisiert werden. Dabei eignet sich besonders eine Übertragungsfunktion, die einen Frequenzgang nach $V(f) = e^{2f}$ aufweist, um eine frequenzabhängige Verstärkung der Ableitungssignale zur Analyse der Oberschwingungen zu erzielen.

Die Ableitungssignale werden bevorzugt einer Frequenzanalyse zugeführt. Dazu können entsprechend dimensionierte Bandpassfilter oder eine Einrichtung zur Fouriertransformation (DFT/FFT) verwendet werden. Die Bandpassfilter können den zu analysierenden Frequenzbereich lückenlos, oder mit Lücken versehen, mit konstanter oder variabler Bandbreite abdecken und sich gegebenenfalls auch überlappen. Die frequenzabhängige Gewichtung kann auch direkt in der Dimensionierung der Bandfilter berücksichtigt werden. Die Ausgangssignale der Bandfilter (Merkmalsvektoren) können direkt oder nach einer zeitlichen Mittelung über eine vorgegebene Zeitdauer zur Erzeugung einer Korrelation oder Verwendung einer vorgegebenen Korrelation unter Erhalt der Qualitätsgröße QG herangezogen werden.

Die Frequenzanalyse der Ableitungssignale kann auch durch Zusammenfassen der DFT/FFT-Werte zu Frequenzbändern erfolgen. Die Frequenzbänder können den zu analysierenden Frequenzbereich lückenlos oder mit Lücken versehen mit konstanter oder variabler Bandbreite abdecken und sich gegebenenfalls auch überlappen. Die frequenzabhängige Gewichtung kann auch direkt in der Dimensionierung der Frequenzbänder berücksichtigt werden. Die Ausgangssignale der Frequenzbänder (Merkmalsvektoren) können direkt oder nach einer zeitlichen Mittelung über eine vorgegebene Zeitdauer zur Erzeugung einer Korrelation oder Verwendung einer vorgegebenen Korrelation unter Erhalt der Qualitätsgröße QG herangezogen werden.

Durch das Erfindungskonzept, das in den oben erläuterten Verfahren und Vorrichtungen verwirklicht ist, kann im Prinzip zu jedem Zeitpunkt eines Schweißprozesses auf den Zustand in der Schweißzone geschlossen werden; damit ist vor allem ein Schluss auf die nach Beendigung des Schweißvorgangs resultierende Festigkeit der Schweißverbindung möglich, besonders anhand von Qualitätsgrößen (QG/B; QG/C; QG/D; QG/E; QG/C'; QG/F; QG/G), die zu einem späteren Zeitpunkt oder innerhalb eines späteren Zeitintervalls nach Schweißbeginn erhalten wurden.

Dadurch kann eine reproduzierbare Qualität von Schweißverbindungen erzielt werden.

Die Erfassung des Stroms I(t) im Schritt (I) kann nach üblichen Verfahren erfolgen; sie muss jedoch so geschehen, dass die Modulation des Stroms I(t) hinreichend und vorzugsweise vollständig aufgelöst wird, damit keine Information verlorengeht, die für die nachfolgenden Verfahrensschritte zur Erzeugung der Bewertungsgrößen bzw. der Stellgröße gebraucht wird.

Grundsätzlich sind alle Stromsensoren mit geringem Eigenrauschen geeignet, die in Echtzeit ein der Stromstärke proportionales Signal verlustfrei liefern.

Eine Möglichkeit zur hoch zeitaufgelösten Strommessung besteht in der Verwendung eines Hall-Generators, der ein Stromsignal A* liefert. Die Ausgangssignale von Hall-Generatoren können aber durch elektrische Nebengeräusche belastet sein, so dass in diesem Fall eine Signalanalyse des Meßsystems ratsam ist.

Eine im Rahmen der Erfindung besonders geeignete Möglichkeit der Stromerfassung besteht in der Verwendung einer sog. Rogowski-Spule bzw. eines sog. Rogowski-Gürtels. Darunter versteht man eine Spule, die den stromdurchflossenen Leiter (Primärkreis) umschließt und einen Sekundärkreis darstellt. In dieser Spule entsteht durch das den stromdurchflossenen Leiter umgebende, dem Strom proportionale Magnetfeld eine induzierte Spannung, die der ersten Ableitung des Primärstroms I(t) proportional ist.

Für diese induzierte Spannung U gilt die Beziehung

$$U = \frac{\mu_0 \cdot n \cdot S}{2\pi \cdot r} \cdot \frac{dI}{dt} \tag{6},$$

in der bedeuten:

$\mu_0$  die Permeabilitätszahl im Vakuum,

n  die Anzahl der Windungen,

S  den Querschnitt einer Windung
und

r  den Radius des Spulenrings.

Damit erlaubt die Rogowski-Spule zum einen die direkte Erfassung der 1. Ableitung des Stroms, dI(t)/dt (Signal A), und zum anderen durch Integration des Signals über die Zeit dt eine Messung des Stroms I(t) selbst.

Die Rogowski-Spule bietet gegenüber anderen Stromwandlern zahlreiche Vorteile:

- Rogowski-Spulen sind auch für hohe Stromstärken einfach und preisgünstig;
- die Meßwerte U sind im Gegensatz zu Messungen an der Primärseite oder im Zwischenkreis von Transformatoren nicht durch Magnetisierungsströme verfälscht;
- die Oberschwingungen des Stroms und damit seine Modulation werden nicht verfälscht;
- Rogowski-Spulen sind leicht an bestehenden Anlagen montierbar, besonders bei Ausführung als offene Spulen;
- die eisenlose Ausführung ermöglicht die Erfassung sehr schneller Stromänderungen;
- die Meßgenauigkeit ist von der Lage um den stromdurchflossenen Leiter unabhängig;
- die Strommessung bzw. die Messung der 1. Ableitung des Stroms ist rückwirkungsfrei;
- Rogowski-Spulen sind gegen Einstreuung von Fremdfeldern unempfindlich.

Die hohe Ansprechgeschwindigkeit und die unverzerrte Übertragung von Strom-Oberschwingungen bzw. von Oberschwingungen der 1. Ableitung sind im Rahmen der Erfindung ebenfalls von großem Vorteil.

Allgemein gilt, dass die Stromerfassungseinrichtung bei Verfahren, bei denen die Schweißstelle durch einen Schweißstrom erhitzt wird, im Schweißstromkreis oder in Wirkverbindung mit dem Schweißstromkreis angeordnet ist. Beim Elektronenstrahlschweißen wird z.B. der über das Werkstück bzw. die elektronenaufnehmende Elektrode fließende Strom I(t) erfasst.

Die Erfindung bezieht sich, wie oben angegeben, nicht nur auf Pressschweiß- und Schmelzschweißprozesse, bei denen ein Strom I(t) durch die Schweißstelle fließt, also insbesondere das Widerstandsschweißen und das Lichtbogenschweißen sowie das Elektronenstrahlschweißen, sondern auch auf alle sonstigen Schweißverfahren, bei denen die Leistungserzeugung an der Schweißstelle mit einem Strom I(t) - oder einer entsprechenden Spannung - korreliert oder korrelierbar ist. Beispiele für derartige Fälle sind etwa das Reibschweißen sowie das Laserstrahlschweißen. Beim Reibschweißen, bei dem keine elektrische Energiequelle verwendet wird, kann ein Signal I(t) oder U(t) z.B. dadurch erhalten werden, dass ein Meßstrom durch die Schweißstelle geleitet wird, der beim Schweißvorgang einer entsprechenden Modulation unterliegt.

Beim Laserstrahlschweißen kann zwar der Strahlintensität ein entsprechendes Signal zugeordnet werden, jedoch eignet sich dieses Signal per se nicht zur Verwendung im Schritt I der erfindungsgemäßen Verfahren, da es nicht den Verlauf des Schweißvorgangs und den Zustand der Schweißstelle in Form einer Modulation abbildet. Auch in diesem Fall ist es aber in einfacher Weise möglich, ein erfindungsgemäß als Eingangssignal für Schritt I geeignetes Signal aus einem durch die Schweißstelle fließenden Meßstrom zu gewinnen. Dies kann auch durch Auswertung eines entsprechenden optischen Signals erfolgen.

Die Erfindungskonzeption ist nicht auf die Erzeugung unabhängiger Schweißpunkte, wie etwa beim Punktschweißen, beschränkt, sondern umfaßt auch Verfahren, bei denen nicht punktförmige Schweißverbindungen, etwa in Form von Schweißnähten oder Schweißraupen, erzeugt werden. In diesen Fällen wird der Strom I(t) bzw. die 1. Ableitung dieses Stroms in vorgegebenen festen Zeitabständen oder nach vorgegebenen Schweißraupenlängen erfasst. Quasikontinuierliche Schweißprozesse werden entsprechend in diskrete Einzelprozesse bzw. Prozessabschnitte zerlegt. In diesen Fällen wird vorteilhaft so verfahren, dass die Schritte I bis V oder I bis VII oder I bis VIII nach dem oben genannten Zeitregime durchgeführt werden.

Die Schritte II, III und/oder IV werden im Rahmen der Erfindung typischerweise nacheinander durchgeführt. Die Durchführung der betreffenden Schritte nacheinander entspricht einer sequentiellen Signalverarbeitung, bei der das Ausgangssignal eines Schrittes Eingangssignal für den nächsten Schritt ist.

Bei der Verwendung einer Rogowski-Spule zur Stromerfassung resultiert, wie oben erläutert, ein Signal, das bereits der 1. Ableitung des Stroms nach der Zeit, dI(t)/dt, also dem Ausgangssignal A von Schritt II, entspricht.

Die Gewichtung durch frequenzabhängige Dämpfung oder Verstärkung in Schritt V wird vorteilhaft so durchgeführt, dass innerhalb vorgegebener Bereiche der Frequenzen ($f_i$) mit einem jeweils konstanten Dämpfungsgrad gedämpft bzw. mit einem jeweils konstanten Verstärkungsfaktor verstärkt wird, vorzugsweise im Frequenzbereich von 1 Hz bis 10 kHz. Die Analyse des Frequenzspektrums ergab im Rahmen der Erfindung, dass die wesentlichen Modulationen des Schweißstroms und damit auch der auswertungsrelevante Informationsgehalt der Signale D, E, F und G überwiegend in diesem Frequenzbereich liegen.

Je nach dem vorliegenden Einzelfall kann es jedoch auch zweckmäßig sein, höhere Frequenzen in die Auswertung mit einzubeziehen, z.B. Frequenzen bis etwa 20 kHz oder darüber. Durch das Ergebnis der Korrelation läßt sich ein ergebnisrelevanter Frequenzbereich leicht ermitteln.

Zur Frequenzgewichtung wird vorteilhaft eine umkehrende Funktion verwendet, z.B. die Übertragungsfunktion $V(f) = e^{2f}$.

Die Signale A*, A, B, C, C', D, E, F, G, H, J, K sind elektrische Signale, welche die betreffende Größe repräsentieren. Die Signale können die Information in Form einer Spannung, eines Stroms oder in Form einer Modulation eines Trägersignals enthalten.

Sie können je nach der Konzeption der Vorrichtung unabhängig analoge oder digitale Signale darstellen.

Bei der Erfassung des Schweißstroms oder eines dem Schweißvorgang zugeordneten Meßstroms z.B. durch einen Hall-Generator oder eine Rogowski-Spule resultieren analoge Signale, die als solche weiterverarbeitet oder vor der Weiterverarbeitung einer A/D-Wandlung unterzogen werden können.

Die erfindungsgemäß ausgewerteten Schweißprozesse umfassen sowohl solche Prozesse, bei denen diskrete Schweißpunkte erzeugt werden, z.B. beim Punktschweißen von Blechen oder beim Punktschweißen von Stahlmatten, als auch kontinuierliche oder quasikontinuierliche Prozesse, bei denen Schweißnähte bzw. Schweißraupen erzeugt werden.

In allen Fällen wird ein diskreter oder quasidiskreter Schweißvorgang betrachtet, der entweder der Erzeugung eines Schweißpunkts oder einem EinzelProzess oder Prozessabschnitt entspricht und dem eine konkrete Schweißdauer (z.B. beim Punktschweißen) oder eine fiktive Schweißdauer (z.B. bei der Erzeugung einer Schweißnaht oder Schweißraupe) zugeordnet ist.

Diese konkrete oder fiktive Schweißdauer beträgt üblicherweise bis zu einigen Sekunden. Während der Schweißdauer ändern sich, hauptsächlich aufgrund der Schweißstromsteuerung durch Stromventile wie etwa Thyristorschaltungen und der oben erläuterten Phänomene bei der Schweißpunkterzeugung, zeitabhängig die Signale A*, A, B, C, C', D, E, F, G, H, J, K sowie davon abgeleitete Größen; die Modulation dieser Signale ist entsprechend zeitlich nicht konstant. Die Schweißdauer umfasst generell eine Aufheizphase, die eigentliche Schweißphase und die Abkühlphase.

Im Rahmen der Erfindung wird daher vorzugsweise zumindest die Erzeugung der Signale A* oder A, und gegebenenfalls auch die Erzeugung weiterer der oben genannten Signale, innerhalb eines Zeitbereichs (Zeitfensters) vorgenommen, der maximal etwa der Schweißdauer entspricht oder der innerhalb der Schweißdauer liegt und kürzer als die Schweißdauer ist. Innerhalb der Schweißdauer können auch mehrere Zeitfenster vorgesehen werden, in denen die Signalerfassung und gegebenenfalls auch die Signalauswertung erfolgt. Um die Modulation des Stromsignals innerhalb eines oder mehrerer solcher Zeitfenster auswerten zu können, muss die Modulation des Stromsignals und/oder anderer Signale entsprechend hoch zeitaufgelöst erfasst und ausgewertet werden. Bei digitaler Signalverarbeitung muss daher die Samplingfrequenz ausreichend hoch sein.

Wie bereits oben ausgeführt, ist die Signifikanz der Modulation des Stromsignals wie auch der davon abgeleiteten Signale innerhalb der Schweißdauer oder innerhalb zur Auswertung herangezogener Zeitfenster in aller Regel nicht konstant oder gleich. In den meisten Praxisfällen existieren Zeitbereiche, die einem auswertungsrelevanten Zeitfenster entsprechen und innerhalb deren die Signalerfassung und Signalverarbeitung, vorzugsweise in Echtzeit, durchgeführt werden. Solche auswertungsrelevanten Zeitfenster haben bei Punktschweißprozessen wie etwa dem Schweißen von Stahlmatten typischerweise eine Dauer von größenordnungsmäßig 80 bis 100 ms. Die auswertungsrelevanten Zeitfenster können jedoch in Abhängigkeit vom angewandten SchweißProzess und vom eingesetzten Material auch erheblich länger oder erheblich kürzer sein.

Die Größe und Lage auswertungsrelevanter Zeitfenster ist erforderlichenfalls durch einfache Versuche, etwa durch das erfindungsgemäße Steuerungsverfahren, leicht zu ermitteln, wobei in diesem Fall beispielsweise Lage und Größe des Zeitfensters bzw. mehrerer Zeitfenster als Variable herangezogen werden. Bei ungünstiger Lage bezüglich der oben genannten Phasen des Schweißprozesses oder bei zu kleinem oder zu großem Zeitfenster wird keine oder eine nur schlechte Korrelation mit einem Qualitätskriterium erzielt.

Das Zeitfenster bzw. die Zeitfenster liegen vorzugsweise in der eigentlichen Schweißphase und gegebenenfalls auch noch in der Abkühlphase.

Aufgrund der oben geschilderten Gegebenheiten bietet sich eine periodische Signalerfassung an.

Lage und Größe auswertungsrelevanter Zeitfenster ändern sich bei Änderung der Prozessvariablen meistens nicht wesentlich, so dass in der Praxis in der Regel keine Modifizierung einmal bestimmter und festgelegter Zeitfenster bei Änderung von Prozessvariablen erforderlich ist.

Vorteilhaft wird nur ein einziges Zeitfenster herangezogen; innerhalb des Zeitfensters können die zur Auswertung verwendeten Daten zu bestimmten Sampling-Zeitpunkten erfasst werden.

Eine Mittelung oder auch eine Integration von zu bestimmten Sampling-Zeitpunkten erhaltenen Daten ist möglich, wenn das betreffende Zeitfenster hinreichend klein ist.

Die Begriffe 'Größe' bzw. 'Bewertungsgröße' sind im Sinne der obigen Erläuterung zu verstehen. Sie sollen im Fall der vorliegenden Erfindung sowohl direkt durch Signalerfassung erhaltene einzelne diskrete numerische Werte bzw. entsprechende Signale als auch durch Mittelung, Integration oder andere kumulierende mathematische Maßnahmen daraus erhaltene Werte bzw. entsprechende Signale bezeichnen. Es kann sich ferner auch um eine Abfolge numerischer Werte bzw. einen Signalverlauf handeln.

Da nur der Schritt I bzw. II, also die Erfassung der Signale A* bzw. A, unbedingt in Echtzeit durchgeführt werden müssen, können einige oder sämtliche der nachgeschalteten Schritte zeitlich unabhängig davon vorgenommen werden, d.h., auch in Echtzeit und in zeitlicher Verknüpfung mit Schritt I bzw. II, oder, etwa nach Signalspeicherung, zu einem späteren Zeitpunkt.

Zur Erzeugung einer Korrelation zwischen einer der ersten oder zweiten Bewertungsgrößen und einem Qualitätskriterium, das in den meisten Fällen erst nach Ablauf der Schweißdauer geprüft werden kann, muss folglich nicht zwingend in Echtzeit ausgewertet werden.

Eine solche Korrelation kann auch bereits vorliegen, die z.B. aus Vorversuchen oder vorherigen Versuchen stammt. Für eine Qualitätsvorhersage bzw. Qualitätsdokumentation bezüglich des Schweißergebnisses eines einzelnen Schweißprozesses muss das erfmdungsgemäße Verfahren nicht insgesamt in Echtzeit durchgeführt werden. So können beispielsweise die Auswertungsdaten gespeichert und erst nach der Beendigung des Schweißvorganges die erzielte Qualität ermittelt werden.

Als Qualitätsgröße (QG) können eine oder mehrere der folgenden Größen herangezogen werden:

- die mechanische Festigkeit einer Schweißverbindung,
- der Energieverbrauch zur Erzeugung einer Schweißverbindung,
- die Schweißleistung zur Erzeugung einer Schweißverbindung,
- die Schweißdauer zur Erzeugung einer Schweißverbindung,
- der Schweißgutverbrauch bzw. der Verbrauch an abschmelzendem Elektrodenmaterial,
- die Freiheit von Einschlüssen,
- die Schweißnahtüberhöhung.

Wie oben erläutert, wird die Erzeugung einer Korrelation zwischen der Bewertungsgröße (BG) mit einer Qualitätsgröße (QG) im Rahmen der Erfindung vorzugsweise unter Verwendung eines neuronalen Netzwerks vorgenommen. Zu diesem Zweck eignen sich prinzipiell sämtliche Arten von neuronalen Netzwerken.

Neuronale Netzwerke und ihr anwendungsbezogenes Design per se sind dem Fachmann geläufig, so dass im folgenden nur die prinzipielle Auslegung für die Erfindung beschrieben wird.

Die einfachsten erfindungsgemäß geeigneten neuronalen Netze sind die sog. Feedforward-Netze, etwa vom Perceptron-Typ; es können jedoch auch neuronale Netzwerke mit Rückkopplung herangezogen werden.

Zur Auswertung von zeitlichen Verläufen sind neuronale Netze mit zeitlichen Verzögerungen der Eingangswerte und/oder der Zwischenwerte, sog. Time-Delay-Netze, besonders geeignet. Ein Time-Delay-Netzwerk weist interne Speicher auf, in denen die Eingangswerte und/oder Zwischenwerte für eine bestimmte Zeitdauer gespeichert und zu jedem Zeitschritt eine Position in einem Zeitfenster versetzt werden, bis sie nach einer vorgegebenen Anzahl von Zeitschritten das Zeitfenster verlassen und gelöscht werden.

Bei der einfachsten Signalverarbeitung gemäß der Erfindung wird so verfahren, dass für bestimmte Schweißpunkte gespeicherte Verläufe der Signale F oder G oder Verläufe der durch deren Frequenzanalyse erzeugten Werte (Merkmalsvektoren) bzw. deren zeitliche Mittel mit den später ermittelten Qualitätswerten, z.B. den relativen Scherfestigkeiten der Schweißpunkte, korreliert werden. Hierbei wird z.B. jeweils eine der oben erläuterten Prozessvariablen variiert und ihr Einfluß auf das Schweißergebnis mit Hilfe des neuronalen Netzes ermittelt. Auf diese Weise kann der Einfluß verschiedener Prozessvariabler auf das Schweißergebnis ermittelt und eine geeignete Prozessvariable ausgewählt werden.

Schritt VIII kann auch unter Anwendung von Fuzzy-Logik durchgeführt werden, wobei vorteilhaft eine Kombination eines neuronalen Netzwerkes mit nachgeschalteter Fuzzy-Logik-Auswertung angewandt wird.

Eine in dieser Weise erhaltene Korrelation, die aus mindestens einem Lernzyklus stammt, kann als vorgegebene feste Korrelation zur Erfassung und zur Regelung von späteren Schweißprozessen, die bei gleichen Prozessparametern durchgeführt werden (z.B. beim Verschweißen von Drähten aus gleichem Material, bei gleichem Pressdruck und bei gleicher Stromsteuerungscharakteristik), herangezogen werden, wodurch der Rechenaufwand bei der Echtzeit-Auswertung stark verringert wird.

Dabei wird eine geeignete Prozessvariable gewählt, die z.B. über das Korrelationsergebnis bestimmt werden kann, und zur Echtzeit-Regelung herangezogen. Der Sollwert kann dabei einem angestrebten Mindestwert der entsprechenden zu regelnden Qualitätseigenschaft, z.B. einer angestrebten Scherfestigkeit eines Schweißpunktes, zugeordnet sein.

Es ist im Rahmen der Erfindung nicht immer erforderlich, den gesamten Verlauf des ausgewerteten Signals während der Schweißdauer zur Qualitätsbeurteilung bzw. zur Regelung heranzuziehen. Wie oben erläutert, können in einfacher Weise ein oder mehrere auswertungsrelevante Zeitfenster ermittelt werden, wobei nur der in diesen Zeitfenstern liegende Signalverlauf (z.B. F oder G) ausgewertet und zur Steuerung bzw. zur Regelung herangezogen wird. Alternativ oder zusätzlich zu der Anwendung von Zeitfenstern können auch periodisch erfasste Signalwerte zur Auswertung verwendet werden, sofern sie in auswertungsrelevanten Signalbereichen liegen, was durch Vorversuche leicht zu ermitteln ist.

Nach einer vorteilhaften Ausführungsform wird jedoch die Korrelation bzw. der entsprechende Algorithmus, den z.B. ein neuronales Netzwerk nach dem Lernvorgang repräsentiert, nach Ablauf vorgegebener fester Zeitintervalle und/oder nach Ermittlung von Betriebsparametern, die von den bei der Ermittlung eines Algorithmus vorliegenden Betriebsparametern abweichen, neu ermittelt. Diesbezüglich besonders geeignet ist ein dynamisch arbeitendes neuronales Netzwerk, das seinen Algorithmus bei Änderung von Parametern aufgrund früherer Lernvorgänge anpasst.

In diesen Fällen liegt somit ein selbstlernendes und selbstoptimierendes System vor, das die Lernerfahrung bezüglich der Korrelation zwischen der Bewertungsgröße (BG) und der Qualitätsgröße (QG) zeitlich beibehalten kann.

Es ist im Rahmen des Erfindungskonzepts auch möglich, eine neu ermittelte Korrelation mit der zuvor ermittelten und angewandten Korrelation zu vergleichen. Bei einem neuronalen Netzwerk kann dies beispielsweise durch Vergleich der Gewichtungsfaktoren geschehen, wobei dann die neue Korrelation angewandt wird, wenn ihre Gewichtungsfaktoren von den vorherigen ergebnisrelevant verschieden sind, also die vorherige Korrelation bezüglich des Qualitätskriteriums 'schlechter' geworden ist.

Wenn das erfindungsgemäße Verfahren als Regelverfahren durchgeführt wird, kann die Erzeugung der Stellgröße in Schritt VIII gemäß einer beliebigen Reglerkennlinie erfolgen. Wenn nach einer gleichbleibenden Kennlinie geregelt wird, kann vorteilhaft eine P-, PI-, PID- oder PDPI-Charakteristik Anwendung finden. Es ist alternativ auch möglich, insbesondere bei digitaler Signalauswertung, ein Regelsystem ohne gleichbleibende Kennlinie zu realisieren, das z.B. zu einer Minimierung der Zugriffszeit führt. Günstigerweise wird in diesem Fall Fuzzy-Logik implementiert.

Bei den erfindungsgemäßen Verfahren und Vorrichtungen zur Qualitätserfassung, Qualitätskontrolle und Steuerung von Schweißprozessen wird die Auswertung unter Anwendung der Korrelation mit einem Qualitätskriterium zumeist erst nach der Beendigung des Schweißvorgangs vorgenommen, um Prozessvariable im Sinne einer Steuerung einzustellen oder zu optimieren.

Wie dem Fachmann geläufig ist, setzt im Gegensatz zur Steuerung eine Regelung in einem geschlossenen Wirkungskreis einen Stelleingriff in mindestens eine Prozessvariable während des Ablaufs des Schweißvorgangs voraus.

Entsprechende Zeitfenster oder Sampling-Zeitpunkte müssen daher zeitlich so weit vor dem Ende der Schweißdauer liegen, dass ein Eingriff in prozess- bzw. ergebnisrelevante Variable und damit eine Beeinflussung des Istwertes im Sinne einer Regelung möglich ist.

Damit sind Signalerfassung und -auswertung beim erfindungsgemäßen Regelverfahren in Echtzeit bzw. online oder quasi in Echtzeit bzw. quasi online durchzuführen. Das Wort 'quasi' soll die grundsätzlich mit einer Datenerfassung und Datenverarbeitung verbundene, unvermeidbare geringe Zeitverzögerung gegenüber dem echten Zeitablauf des zugundeliegenden Vorgangs beim Schweißprozess zum Ausdruck bringen.

Beim erfindungsgemäßen Regelverfahren ist es möglich, z.B. die Anstiegsgeschwindigkeit des durch die Schweißstelle fließenden Stroms und/oder die anschließende Haltezeit während des Schweißprozesses so zu beeinflussen, dass der, z.B. qualitätsbezogene, Istwert möglichst nahe am Sollwert liegt oder mit ihm übereinstimmt.

Im Grenzfall kann sich dieses Regelverfahren so auf den laufenden Schweißvorgang auswirken, dass kein mehrfaches Schwingen des Istwerts um den Sollwert, sondern praktisch nur eine Art Einschwingen darauf resultiert.

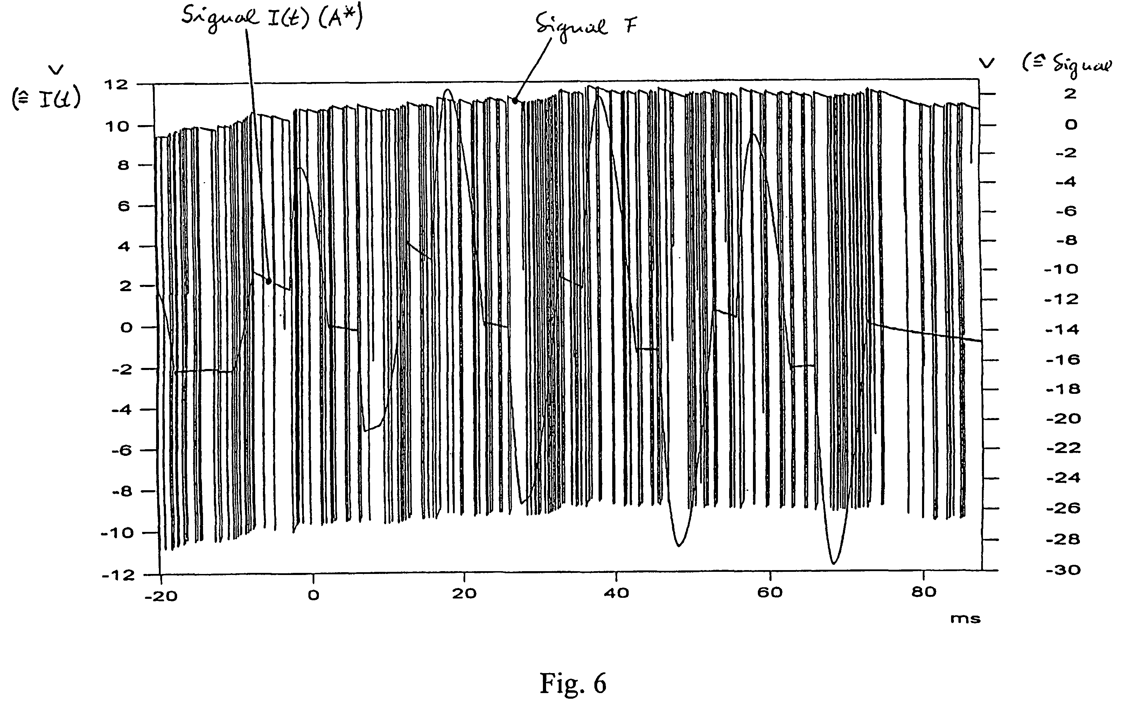

Die Erfindung wird im folgenden anhand von Ausführungsbeispielen unter Bezug auf die Figuren 6 bis 12 näher erläutert.

Fig. 6 ist ein Zeitdiagramm, das für die Punktschweißung eines Draht-Kreuzungspunkts (Längsdraht und Querdraht jeweils 6 mm Durchmesser) den Verlauf des Schweißstroms I(t) (Signal A*, Kurve A*) sowie den Verlauf des durch Verarbeitung in Echtzeit erhaltenen Signals F (Kurve F) zeigt. Der Strom I(t) und das Signal F sind dabei als Spannungen (V) dargestellt.

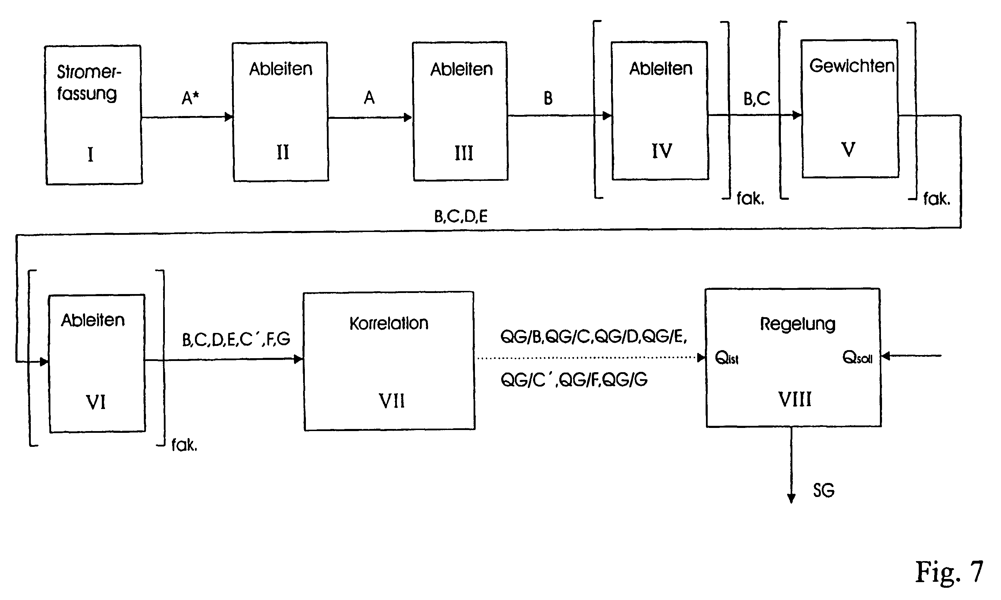

Die Fig. 7 zeigt schematisch die Verarbeitungsschritte des erfindungsgemäßen Verfahrens. In Schritt I erfolgt die Erfassung des Stroms I(t), der durch die Schweißstelle fließt oder der mit der Leistungserzeugung an der Schweißstelle korreliert ist. Das Ausgangssignal dieses Schrittes wird mit A* bezeichnet.

In Schritt II wird die 1. Ableitung des erfassten Stroms I(t) nach der Zeit gebildet. Das entsprechende Ausgangssignal von Schritt II wird mit A bezeichnet. Die Schritte I und II können auch gemeinsam unter Verwendung eines Rogowski-Gürtels, der direkt die 1. Ableitung des Stromes (A) liefert, durchgeführt werden.

In Schritt III wird das Signal A abgeleitet und so die 2. Ableitung des Stromes I(t) nach der Zeit (B) gebildet.

Der Schritt IV ist fakultativ und bildet die 3. Ableitung des Stromes I(t) nach der Zeit (C).

Es folgt wahlweise der Schritt V, bei dem eine frequenzabhängige Gewichtung der 2. Ableitung (B) bzw. der 3. Ableitung (C) des Stromes erfolgt. Je nach Eingangssignal (B) bzw. (C) wird eine frequenzgewichtete 2. Ableitung (D) bzw. eine frequenzgewichtete 3. Ableitung (E) erhalten.

Die Eingangssignale des wahlweisen Schrittes VI sind, je nach Vornahme der fakultativen Maßnahmen IV und V, die Signale B, C, D und E. In Schritt VI wird als fakultative Maßnahme eine weitere Ableitung des Eingangssignals gebildet. Die entsprechenden Ausgangssignale von Schritt VI sind die 3. Ableitung (C) bzw. die 4. Ableitung (C') des Stromes nach der Zeit bzw. die Ableitung der frequenzgewichteten 2. Ableitung (F) bzw. der frequenzgewichteten 3. Ableitung (G) nach der Zeit.

In Schritt VII erfolgt die Erzeugung einer Korrelation oder die Verwendung einer vorgegebenen Korrelation einer Bewertungsgröße (BG) mit einer auf den Schweißprozess und/oder auf erzeugte Schweißverbindungen bezogene Qualitätsgröße (QG). Das Eingangssignal, die Bewertungsgröße (BG), kann je nach Vornahme der fakultativen Maßnahmen der Schritte I bis VI das Signal B, C, D, E, C', F oder G) darstellen. Das Ergebnis von Schritt VII ist eine entsprechende Qualitätsgröße (QG/B; QG/C; QG/D; QG/E; QG/C'; QG/F; QG/G).

Die erhaltene Qualitätsgröße (QG/B; QG/C; QG/D; QG/E; QG/C'; QG/F; QG/G), kann zur Erfassung der Qualität von Preßschweiß- und Schmelzschweißprozessen und insbesondere von Widerstandsschweißprozessen verwendet werden. Weiterhin kann die Qualität damit erzeugter Schweißverbindungen erfasst werden.

Die erhaltene Qualitätsgröße (QG/B; QG/C; QG/D; QG/E; QG/C'; QG/F; QG/G) kann auch zur Steuerung einer oder mehrerer qualitätsrelevanter Prozessvariabler oder davon abgeleiteter Größen vorgesehen sein.

Besonders vorteilhaft ist eine Regelung der Prozessqualität und/oder der Qualität erzeugter Schweißverbindungen in Abhängigkeit von den Qualitätsgrößen (QG/B; QG/C; QG/D; QG/E; QG/C'; QG/F; QG/G). Diese werden in einem Schritt VIII als Istwert ($Q_{IST}$) mit einem Sollwert ($Q_{SOLL}$) zur Ermittlung der Regelabweichung ($|Q_{SOLL}-Q_{IST}|$) verglichen, und eine Stellgröße (SG) wird zur Minimierung der Regelabweichung ($|Q_{SOLL}-Q_{IST}|$) erzeugt. Die Stellgröße (SG) beeinflusst eine oder mehrere qualitätsrelevante Prozessvariable oder davon abgeleitete Größen.

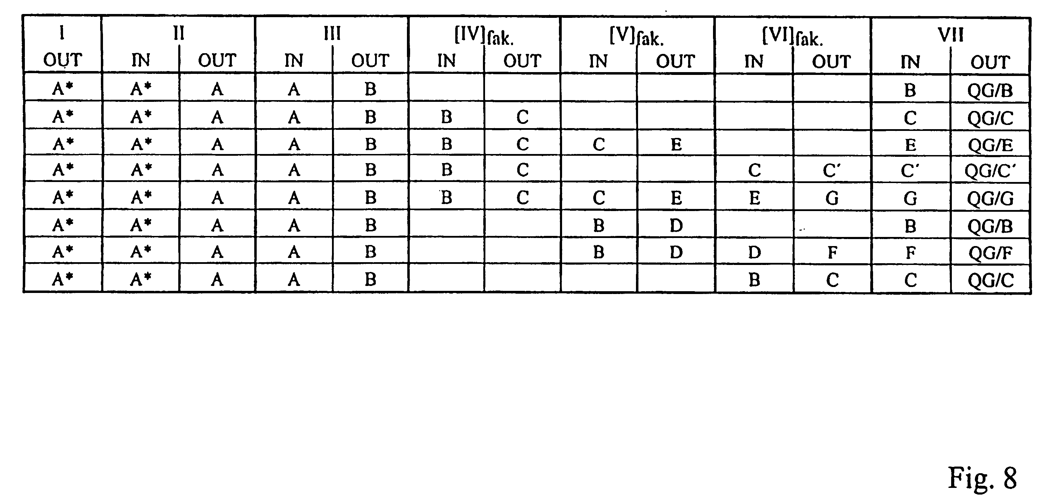

In Fig. 8 ist eine Tabelle zur Verdeutlichung der Zusammenhänge der Eingangs- und Ausgangsgrößen der einzelnen Schritte abgebildet. Die Spalte I gibt das Ausgangssignal A* des Schrittes I der Erfassung des Stroms an.

Die Spalten II und III geben die Eingangs- und Ausgangssignale der beiden Schritte II und III zur Bildung der Ableitungen an. Das Ausgangssignal des Schrittes III ist in jedem Fall die 2. Ableitung des Stromes nach der Zeit (B).

Die Spalte IV zeigt als Eingangssignal des wahlweisen Schrittes IV zur Bildung der 3. Ableitung das Signal B und als Ausgangssignal die 3. Ableitung des Stromes nach der Zeit (C).

In Spalte V werden die unterschiedlichen Eingangs- und Ausgangssignale der frequenzabhängigen Gewichtung des wahlweisen Schrittes V gezeigt. Falls Schritt IV die 3. Ableitung des Stromes (C) bildet, ist das Ausgangssignal eine frequenzgewichtete 3. Ableitung (E). Ohne Durchführung von Schritt IV ist das Eingangssignal für Schritt V die 2. Ableitung des Stromes nach der Zeit (B) und das Ausgangssignal entsprechend eine frequenzgewichtete 2. Ableitung (D).

In Spalte VI sind die verschiedenen Kombinationen für Eingangs- und Ausgangssignale der fakultativen Maßnahme VI gezeigt. Je nach Vorhandensein der vorangehenden Schritte IV und V ergeben sich als Eingangssignale C, E, D oder B und als entsprechende Ausgangssignale C', G, F oder C.

Die Spalte VII gibt in Abhängigkeit von den vorangehenden fakultativen Maßnahmen die möglichen Eingangssignale zur Erzeugung oder Verwendung einer Korrelation an. In Abhängigkeit des jeweiligen Eingangssignals, der Bewertungsgröße (BG), wird eine entsprechende Qualitätsgröße (QG/B; QG/C; QG/E; QG/C'; QG/G, QG/B; QG/F; QG/C) erhalten.

Die acht möglichen Kombinationen der drei fakultativen Maßnahmen IV, V und VI können einfach aus den entsprechenden Zeilen der Fig. 8 abgelesen werden. In jeder Zeile ist die Folge der verwendeten Eingangs- und Ausgangssignale unter Berücksichtigung der jeweils vorhandenen fakultativen Maßnahmen angegeben.

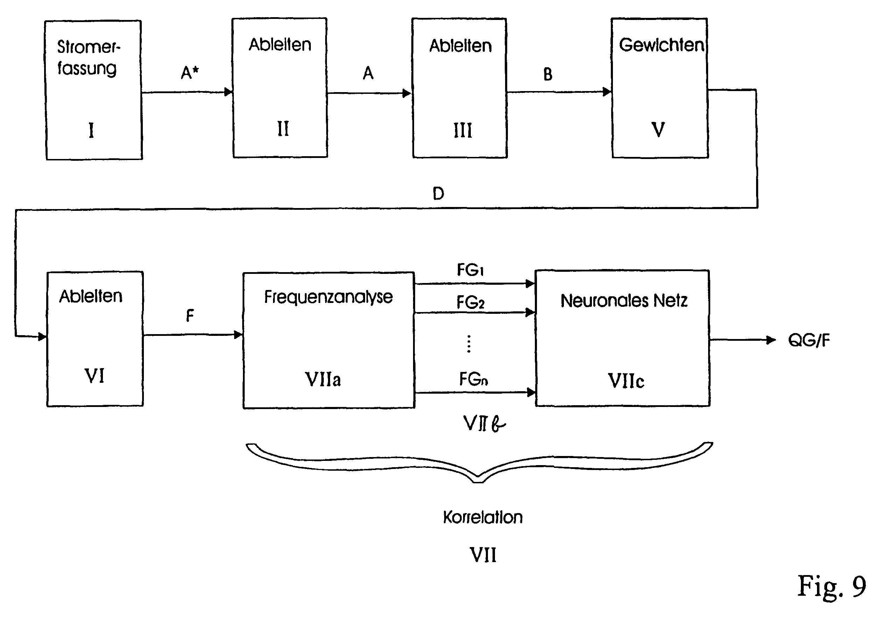

Die Fig. 9 zeigt ein Ausführungsbeispiel des erfindungsgemäßen Verfahrens, bei dem auf Schritt III unmittelbar Schritt V zur Bildung einer frequenzgewichteten 2. Ableitung (D) folgt. Nach der Bildung einer weiteren Ableitung in Schritt VI entsteht das Signal F. In Fig. 9 werden die Maßnahmen in Schritt VII genauer gezeigt.

Unter VIIa wird eine Frequenzanalyse des Signals F unter Erhalt von Frequenzteilbereichen zugeordneten Frequenzbereichsgrößen ($FG_1$, $FG_2$, ... $FG_n$) durchgefiihrt. Die Frequenzbereichsgrößen ($FG_1$, $FG_2$, ... $FG_n$) werden als Eingangsgrößen zu Eingangsneuronen eines neuronalen Netzes zugeführt. Die Korrelation der Frequenzbereichsgrößen der frequenzgewichteten 2. Ableitung (F) mit der Qualitätsgröße (QG) wird unter Verwendung eines neuronalen Netzes vorgenommen. Das Ausgangsneuron des neuronalen Netzes stellt die durch Schritt VII erhaltene Qualitätsgröße (QG/F) dar.

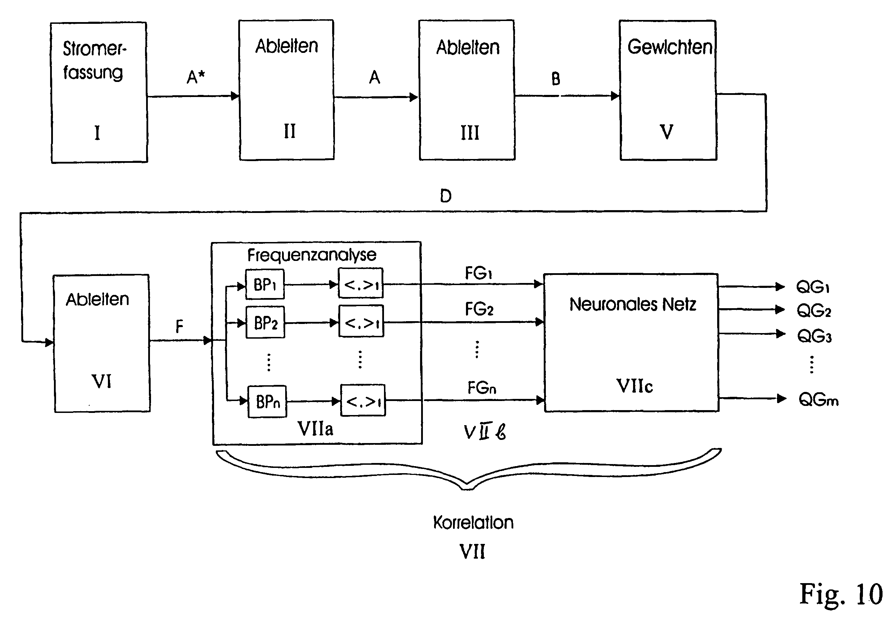

Die Fig. 10 zeigt eine weitere Ausführungsform des erfindungsgemäßen Verfahrens, wobei die Frequenzanalyse durch den Frequenzbereichen zugeordnete Bandpassfilter ($BP_1$, $BP_2$, ... $BP_n$) durchgeführt wird. Die gezeigten Bandpassfilter haben eine Bandbreite von 100 Hz und teilen den analysierten Frequenzbereich (0 bis 5 kHz) in 50 Frequenzteilbereiche. Die den 50 Frequenzteilbereichen zugeordneten Frequenzbereichsgrößen werden vor der weiteren Verarbeitung zeitlich gemittelt. Dies geschieht vorzugsweise durch die Bildung eines gleitenden Mittelwertes, der beispielsweise die Werte in einem Zeitfenster von 20 ms berücksichtigt.

Die Ausgangsneuronen des neuronalen Netzwerks sind entsprechenden Qualitätsklassen ($QG_1$, $QG_2$, ... $QG_m$) zugeordnet. Die Auswertung der Qualitätsklassen kann beispielsweise durch Ermittlung des Ausgangsneurons des neuronalen Netzwerks mit der größten Aktivität erfolgen. Die dem ausgewählten Ausgangsneuron entsprechende Qualitätsklasse gibt einen Bereich oder ein Intervall im Wertebereich der betrachteten Qualitätsgröße an. Beispielsweise wird bei Verwendung der relativen Scherfestigkeit als Qualitätsgröße der Wertebereich von 0 bis 100 % in 20 Qualitätsklassen aufgeteilt. Die erste Qualitätsklasse gibt eine relative Scherfestigkeit von 0 bis 5 %, die zweite Qualitätsklasse eine relative Scherfestigkeit von 5 bis 10 % usw. an. Natürlich sind auch andere, eventuell nicht gleichmäßige, Aufteilungen des Wertebereichs der Qualitätsgröße möglich.

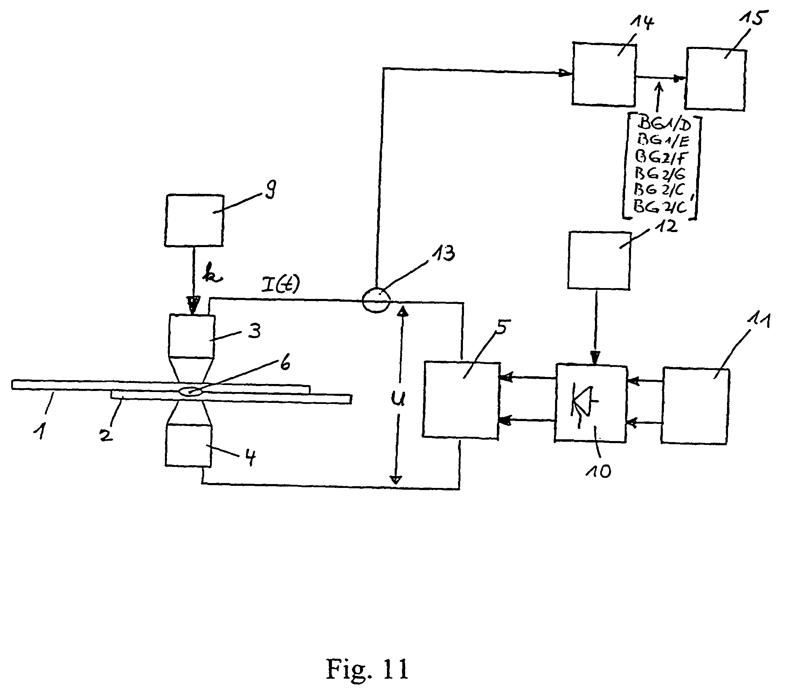

Fig. 11 zeigt eine erfindungsgemäße Vorrichtung, die Bewertungsgrößen (BG1/D, BG1/E, BG2/F, BG2/G, BG2/C, BG2/C') liefert, die mit einer Qualitätsgröße QG korreliert werden können. Diese einfache Ausführungsform kann insbesondere dann, wenn konstante Prozessverhältnisse und eine Korrelation mit der Qualitätsgröße vorliegt, für eine orientierende Prozessabschätzung und Ergebnisabschätzung herangezogen werden.

Die Vorrichtung von Fig. 11 umfaßt eine Schweißvorrichtung, wie sie in Fig. 1 dargestellt ist, mit zwei Elektroden 3, 4, zwischen denen die zu verschweißenden Werkstücke 1, 2, die Drähte sein können, mit einer Schweißkraft k zusammengepresst werden können, die durch eine Presseinrichtung 9 erzeugt wird. Der Schweißpunkt 6 wird zwischen den Elektroden 3, 4 erzeugt. Die Schweißvorrichtung weist ferner eine Schweißstromquelle 5 sowie eine im oder am Sekundärstromkreis angeordnete Stromerfassungseinrichtung 13 auf, vorteilhaft eine Rogowski-Spule. Die Schweißstromquelle 5 ist durch eine mit der Primärstromquelle 11 verbundene Stromstelleinrichtung 10, z.B. eine Phasenanschnittsteuerung, steuerbar.

Die Schweißstromquelle 5 kann einen ein- oder mehrphasigen Wechselstrom, aber auch einen Gleichstrom liefern, der beispielsweise getaktet ist. Es kann sich ferner auch um einen Frequenzumrichter handeln. Wenn die Schweißstromquelle 5 einen Transformator aufweist, handelt es sich vorteilhaft um einen Ringkerntransformator.

Die Ansteuerschaltung 12, welche die Stromstelleinrichtung 10 ansteuert, ist vorteilhaft so ausgelegt, dass die Stromstelleinrichtung 10 eine vorgebbare Strom-Zeit-Charakteristik für jeden Schweißvorgang erzeugt.

Das von der Stromerfassungseinrichtung 13 erfasste Signal des Stroms I(t) bzw. seiner Ableitung nach der Zeit, dI(t)/dt, wird in der Auswertungseinrichtung 14 verarbeitet, die mindestens die Verfahrensschritte I bzw. II und III und gegebenenfalls auch einen oder mehrere der Verfahrensschritte IV, V und VI durchführt. Das Ergebnis, das einem oder mehreren der Signale C, C', D, E, F und G in Form der zugehörigen Bewertungsgrößen entspricht, kann durch eine Ausgabeeinrichtung 15 ausgegeben, also z.B. angezeigt und/oder gedruckt werden. Die Ausgabeeinrichtung 15 kann auch ein Interface darstellen.

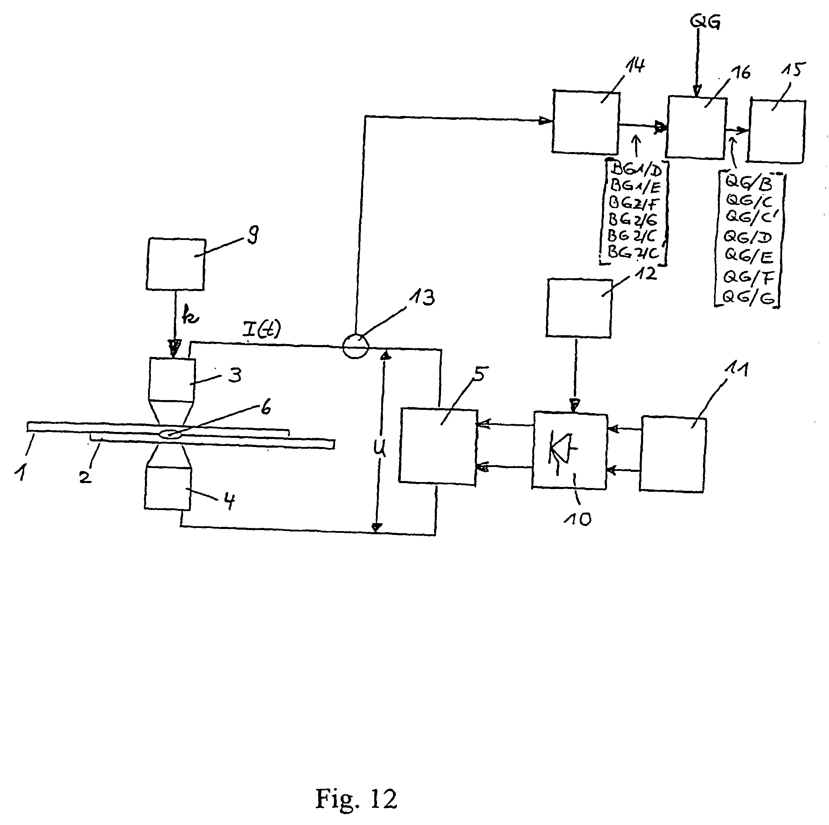

Die in Fig. 12 dargestellte Vorrichtung unterscheidet sich von der ansonsten gleichen Vorrichtung von Fig. 11 darin, dass zwischen der Auswertungseinrichtung 14 und der Ausgabeeinrichtung 15 eine Korrelationseinrichtung 16 vorgesehen ist, die eine vorgegebene Qualitätsgröße QG mit einer oder mehreren der Bewertungsgrößen BG1/D, BG1/E, BG2/F, BG2/G, BG2/C, BG2/C' korreliert, wobei entsprechende Qualitätsgrößen QG/B, QG/C, QG/C', QG/D, QG/E, QG/F, QG/G erhalten werden, welche die Korrelation repräsentieren. In der Korrelationseinrichtung 16 ist vorteilhaft ein neuronales Netzwerk implementiert. Diese Vorrichtung ist eine Steuervorrichtung, die beispielsweise so betrieben werden kann, dass für bestimmte gewählte Ansteuercharakteristiken für den Strom I(t), die von der Ansteuerschaltung 12 über die Stromstelleinrichtung 10 erzeugt werden, eine Zuordnung zum erzielten Schweißergebnis erzeugt wird, das über die Qualitätsgröße gewählt wurde.

Bei der Steuervorrichtung von Fig. 12 liegt keine Wirkverbindung zwischen dem Ausgang der Korrelationseinrichtung 16 und der Ansteuerschaltung 12 vor. Es handelt sich folglich um eine Einrichtung, die im Open-loop-Betrieb arbeitet, und nicht um eine Regeleinrichtung. Das Korrelationsergebnis wird über die Ausgabeeinrichtung 15 ausgegeben, die vorteilhaft eine Anzeige, ein Drucker und/oder ein Interface ist.

Die Vorrichtung von Fig. 12 erlaubt folglich eine quantifizierte Beurteilung von Schweißprozessen, besonders solchen, die unter quasikonstanten Prozessbedingungen ablaufen. Ein Beispiel hierfür ist, abgesehen von Punktschweißverfahren, die manuelle, handgeführte Erzeugung von nicht punktförmigen Schweißverbindungen, z.B. von Schweißnähten oder Schweißraupen. Durch Beobachtung der Anzeige der Ausgabeeinrichtung 15 oder etwa aufgrund eines ausgegebenen akustischen Signals kann die Person, welche die Schweißung manuell durchführt, beispielsweise die Nachführungsgeschwindigkeit des Elektrodenmaterials oder die Geschwindigkeit des Vorrückens der Schweißstelle optimal einstellen bzw. einhalten.

Bei Verwendung automatischer Schweißeinrichtungen kann deren Vorschubgeschwindigkeit bzw. Nachführungsgeschwindigkeit bei gleichbleibenden Betriebsverhältnissen durch manuelle Einstellung aufgrund der erzielten Korrelation auf das Schweißergebnis hin optimiert werden. Auf diese Weise ist mit der Vorrichtung von Fig. 12 eine Prognose und damit eine Steuerung des Schweißergebnisses möglich.

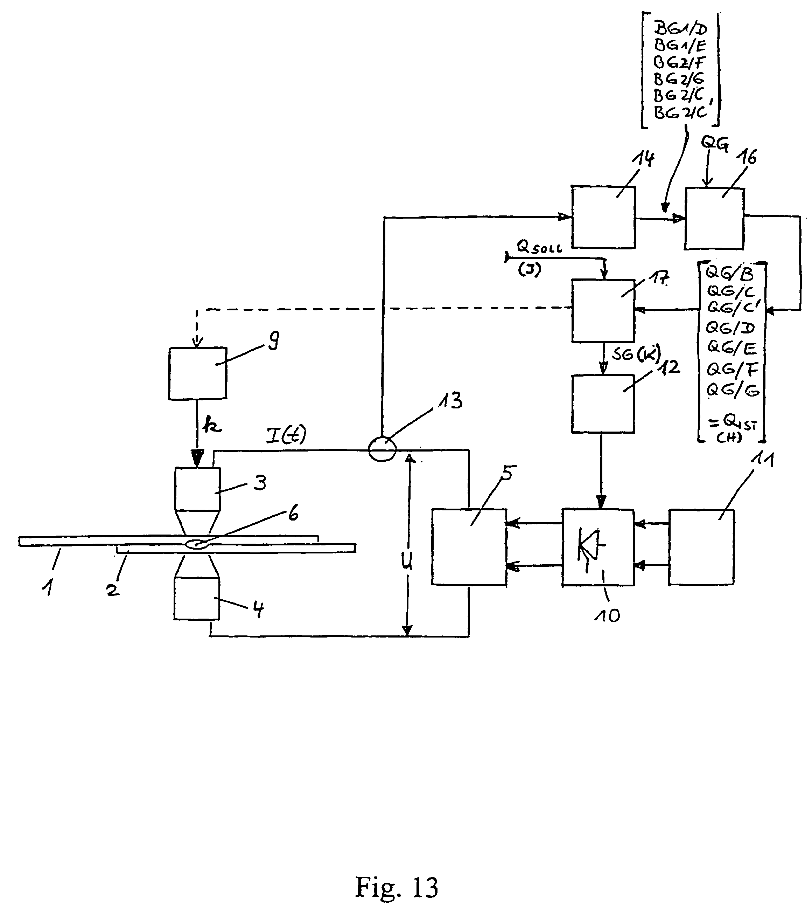

In Fig. 13 ist schließlich eine erfindungsgemäße Regelvorrichtung dargestellt. Sie unterscheidet sich von der Vorrichtung von Fig. 12 darin, dass das Korrelationsergebnis von der Korrelationseinrichtung 16 zu einer Regelung in einem geschlossenen Regelkreis dient. Das Korrelationsergebnis, das z.B. dem Istwert $Q_{IST}$ (H) der entsprechenden gewählten Prozessvariablen entspricht, wird in der Regeleinrichtung 17 mit einem Sollwert $Q_{SOLL}$ (J) verglichen, der einer guten bis optimalen Korrelation zwischen Prozessvariabler und erzieltem Schweißergebnis entspricht. Der Sollwert $Q_{SOLL}$ (J) kann bei wechselnden Prozessbedingungen neu ermittelt werden. Die Regeleinrichtung 17 gibt eine Stellgröße SG (K) an die Ansteuerschaltung 12 ab, die das zugeordnete Stellglied darstellt. Aufgrund des geschlossenen Regelkreises wird, ggf. entsprechend einer eingestellten oder fest vorgesehenen Regelcharakteristik der Regeleinrichtung 17, der Strom I(t) bzw. seine zeitliche Charakteristik so gesteuert, dass das Schweißergebnis, z.B. die relative Scherfestigkeit von Schweißpunkten, möglichst eng um den Sollwert schwankt oder mit ihm zusammenfällt.

Die Regeleinrichtung 17 kann ferner, wie durch die gestrichelte Wirkverbindung mit der Presseinrichtung 9 angedeutet ist, auch so ausgebildet sein, dass sie den Pressdruck k steuert bzw. regelt.

## Beispiele für Korrelationserzeugungen

Im folgenden wird die allgemeine Methodik zur Gewinnung einer Korrelation unter Verwendung eines neuronalen Netzwerks erläutert.

Die 'klassische' Erzeugung einer konkreten numerischen Korrelation zwischen Prozessvariablen bzw. Prozessparametern und dem Prozessergebnis (Schweißqualität) ist wegen der großen Komplexität der Einflußgrößen und ihrer Wirkung auf das Verfahrensergebnis nicht möglich. Der Vorteil neuronaler Netzwerke liegt darin, dass sie die Erzeugung solcher Korrelationen erlauben.

Berücksichtigt man beim Lernvorgang des neuronalen Netzes eine ausreichend große Anzahl von Übungsmustern, so ist davon auszugehen, dass die im Praxiseinsatz auftretenden Schwankungen der nicht gezielt beeinflussbaren Parameter bei der Ermittlung der gesuchten Korrelation ausreichend gut berücksichtigt worden sind. Zugleich muss in den Trainingsmustern eine ausreichend hohe Anzahl von Versuchsreihen vorhanden sein, bei denen beeinflussbare Variable variiert wurden.

Die erfindungsgemäßen Systeme sind jedoch nicht auf bestimmte Kombinationen von Variablen bzw. Parametern beschränkt.

Typischste Prozessvariable sind der zeitliche Verlauf des Stroms I(t) und die entsprechenden Absolutwerte.

Das im nachfolgenden Beispiel herangezogene Lernverfahren der Backpropagation ist ein Gradientenabstiegsverfahren. Wenn man den Fehler eines neuronalen Netzes als Funktion der Gewichte $w_{1...n}$ des Netzwerks aufträgt, erhält man eine Fehlerfläche, die sich im zweidimensionalen Fall anschaulich darstellen läßt. Die Fehlerfunktion

$$E(w) = E(w_1, ..., w_n)$$

gibt den Fehler an, den das Netzwerk bei gegebenen Gewichten $w_1...w_n$ über alle Trainingsmuster aufsummiert besitzt. Mit dem Gradientenverfahren, d.h., der Methode des steilsten Abstiegs, wird nun versucht, möglichst schnell ein globales Minimum der Fehlerfunktion zu finden, also eine Konfiguration der Gewichte, bei der die Fehlersumme über ein Trainingsmuster minimal ist. Wie jedes Gradientenverfahren ist auch das Verfahren der Backpropagation mit einer Reihe von Problemen verbunden, die dadurch entstehen, dass es ein lokales Verfahren ist, welches keine Information über die Fehlerfläche insgesamt hat, sondern aus der Kenntnis der lokalen Umgebung (des Gradienten bzw. bei Erweiterungen des Verfahrens zusätzlich einiger vorher besuchter Stellen der Fehlerfläche) ein Minimum suchen muß. Eine einfache und häufig benutzte Methode zur Vermeidung der Probleme der Backpropagation auf flachen Niveaus und in tiefen Schluchten der Fehlerfunktion ist in D.E. Rumelhart, J.L. McClelland, Parallel Distributed Processing:

Exploration in the Microstructure of Cognition, Volume 1: Foundations, The MIT Press, 1988, beschrieben. Während die Gewichtsänderung $\Delta_p w_{ij}$ im Backpropagation-Verfahren nach der Regel

$$\Delta_p w_{ij} = \eta o_{pi} \delta_{pj}$$

arbeitet, wird bei der Backpropagation mit Momentum-Term (auch als konjungierter Abstieg (conjugate gradient descent) bezeichnet) ein Term $\alpha \Delta_p w_{ij}(t)$ eingeführt, der die bereits vollzogene Gewichtsänderung zum Zeitpunkt t bei der Berechnung der Änderung zum Zeitpunkt t+1 berücksichtigt:

$$\Delta_p w_{ij}(t+1) = \eta o_{pi} \delta_{pj} + \alpha \Delta_p w_{ij}(t).$$

**Beispiel 1**

Es wurden Punktschweißungen von Draht-Kreuzungspunkten (Längsdraht und Querdraht jeweils 6 mm Durchmesser) durchgeführt. Der Verlauf des Schweißstroms I(t) sowie der Verlauf des durch Verarbeitung in Echtzeit erhaltenen Signals F sind für einen Schweißvorgang in Fig. 6 dargestellt.

Zur Messung wurde eine Rogowski-Spule verwendet, die entsprechend die 1. Ableitung dI(t)/dt (Signal A) des Strom I(t) lieferte (entsprechend den Verfahrensschritten I und II). Aus dem Signal A wurde der Strom I(t) (Signal A*) durch Integration erzeugt. Aus dem Signal A wurde durch Differenzieren gemäß Schritt III die 2. Ableitung $d^2I(t)/dt^2$ als Signal B erhalten, das wiederum in dem anschließenden Schritt V frequenzabhängig durch die Übertragungsfunktion $V(f) = e^{2f}$ gewichtet wurde (höhere Frequenzen stärker verstärkt als niedrige) und das Signal D als frequenzgewichtete 2. Ableitung lieferte. Das Signal D wurde anschließend noch entsprechend Schritt VI nach der Zeit t differenziert und ergab so das in Fig. 6 dargestellte Signal F als nach der Zeit t differenzierte frequenzgewichtete 2. Ableitung $d[d^2I(t)/dt^2]f_i/dt$.

Zur Erzeugung einer Korrelation zwischen dem Signal F und der Scherfestigkeit der Schweißpunkte als Qualitätsgröße QG für eine gegebene Stromsteuercharakteristik wurde ein neuronales Netzwerk herangezogen.

Für die Versuche wurde ein an der Universität Stuttgart entwickelter Simulator für neuronale Netzwerke ('SNNS') verwendet. Der Vorteil dieses Simulators liegt in der relativ großen Anzahl frei programmierbarer Lernalgorithmen.

Die Echtzeitsignale F wurden durch 50 digitale Bandfilter ($BP_1$, $BP_2$, ... $BP_{50}$) mit einer Bandbreite von 100 Hz und einer Steilheitsbegrenzung von 8 dB bis 5 kHz verarbeitet. Von diesen Signalen wurden zeitliche Mittelwerte über die gesamte Dauer des Schweißvorgangs gebildet, um Streuungen so weit wie möglich herauszumitteln. Diese Signale stellen die Frequenzbereichsgrößen $FG_1$, $FG_2$, ... $FG_{50}$ dar.

Zu den Vorversuchen wurde ein neuronales Netzwerk mit 50 Eingangsneuronen, 10 Verbindungsneuronen und 20 Ausgangsneuronen verwendet. Den Eingangsneuronen wurden die Frequenzbereichsgrößen $FG_1$, $FG_2$, ... $FG_{50}$ zugeführt, die in Echtzeit erfasst und gespeichert worden waren. Zu den gespeicherten Frequenzbereichsgrößen wurden die entsprechenden Scherfestigkeiten ermittelt. Die Ausgangsneuronen waren Festigkeitsklassen der relativen Scherfestigkeit der Schweißverbindungen zwischen 0 und 100 % zugeordnet. Dieses neuronale Netz erzielte nach einer ausreichenden Anzahl von Lernvorgängen nach dem oben erläuterten Backpropagation-Algorithmus (mit Momentum-Term) eine gute Genauigkeit der Korrelation zwischen der variierten Prozessvariablen und der relativen Scherfestigkeit bei einer Fehlerquote von nur etwa 5 %. Die relativen Scherfestigkeiten der Schweißverbindungen lagen im Bereich von 74,3 bis 92,7%. Die Fehlerquote reflektiert den Einfluss nicht reproduzierbarer Prozessparameter.

**Beispiel 2**

In einem weiteren Versuch wurden zeitlich variable Frequenzbereichsgrößen verwendet. Die Ausgänge der Bandpassfilter wurden direkt bzw. nach einer zeitlichen Mittelung über eine kurze Zeitdauer von wenigen ms (5-20 ms) den Eingangsneuronen des neuronalen Netzes zugeführt. Das neuronale Netz bestimmte nach der Lemphase für die zeitlich variablen Frequenzbereichsgrößen periodisch die Qualitätsgröße QG bzw. die entsprechenden Qualitätsklassen. Dies geschieht abhängig von der gewählten Abtastrate und der Mittelung der Frequenzbereichsgrößen während der gesamten Dauer des Schweißvorgangs (z.B. 200 ms) beispielsweise alle 10 ms.

Bereits nach einigen Lernvorgängen wurde eine gute Korrelation mit einer Fehlerquote von etwa 10 % erzielt. Diese Korrelation eignet sich für die Implementierung in ein erfindungsgemäßes Regelsystem, bei dem die Prozessvariable in Echtzeit so geregelt wird, dass eine möglichst hohe Festigkeit der Schweißverbindungen erzielt wird.

Bei Verwendung eines dynamischen neuronalen Netzwerks, das zur Auswertung von zeitlichen Signalverläufen geeignet ist (z.B. ein Time Delay Neuronal Network), und Steuerung des Schweißstroms gemäß einer vorgegebenen Strom-Zeit-Charakteristik ergibt sich mit einem digitalen Signalprozessor (DSP) bei äußerst kurzer Signalverarbeitungszeit (< 80 ns) ein hochdynamisches System zur Regelung von Widerstandsschweißvorgängen in Echtzeit.

Die Erfindung stellt einen Durchbruch bei der Automatisierung von Schweißprozessen dar, da sie erstmals trotz der extrem komplexen Modulation des Schweißstroms eine qualitätsbezogene Steuerung und auch Regelung von Schweißprozessen erlaubt und daher auch mit erheblichen wirtschaftlichen Vorteilen verbunden ist.

**Liste der Bezugszeichen und Abkürzungen**

| | |
|---|---|
| 1 | Blech |
| 2 | Blech |
| 3 | Elektrode |
| 4 | Elektrode |
| 5 | Schweißstromquelle |
| 6 | Schweißpunkt |
| 7 | Draht |
| 8 | Draht |
| 9 | Presseinrichtung |
| 10 | Stromstelleinrichtung |
| 11 | Primärstromquelle       10 + 12 = Stelleinrichtung |
| 12 | Ansteuerschaltung |
| 13 | Stromerfassungseinrichtung |
| 14 | Auswertungseinrichtung |
| 15 | Ausgabeeinrichtung |
| 16 | Korrelationseinrichtung |
| 17 | Regeleinrichtung |

| | |
|---|---|
| A*, A, B, C, C', D, E, F, G, H, J, K BG1/D, BG1/E, BG2/C, BG2/C', BG2/F, BG2/G | Signale mit Qualitätsgröße korrelierbare Bewertungsgrößen |
| QG/B; QG/C; QG/D; QG/E; QG/C'; QG/F; QG/G | Qualitätsgrößen |
| $f_i$ | Frequenzen |
| I | Strom |
| k | Schweißkraft |
| QG | Qualitätsgröße |
| $Q_{IST}$ | Istwert der Regelgröße |
| $Q_{SOLL}$ | Sollwert der Regelgröße |
| SG | Stellgröße |
| t | Zeit |
| U | Spannung (Schweißspannung) |
| Φ | Verbindungsfläche des Schweißpunktes 6 |

**Patentansprüche**

**1.** Verfahren zur Erfassung der Qualität von Preßschweiß- und Schmelzschweißprozessen und insbesondere von Widerstandsschweißprozessen und/oder der Qualität damit erzeugter Schweißverbindungen, das folgende Schritte umfasst:

(I) Erfassung des Stroms (I(t)), der durch die Schweißstelle fließt oder der mit der Leistungserzeugung an der Schweißstelle korreliert ist (A*),
(II) Bildung der 1. Ableitung des erfassten Stroms (I(t)) (A*) nach der Zeit t (dI(t)/dt) (A),
(III) Bildung der 2. Ableitung des Stroms (I(t)) nach der Zeit t ($d^2I(t)/dt^2$) (B),
(IV) als wahlweisen Schritt Bildung der 3. Ableitung des Stroms (I(t)) nach der Zeit t ($d^3I(t)/dt^3$) (C),
(V) als wahlweisen Schritt
frequenzabhängige Gewichtung der 2. Ableitung ($d^2I(t)/dt^2$) (B) bzw. der 3. Ableitung ($d^3I(t)/dt^3$) (C) des Stroms

(I(t)) durch frequenzabhängige Dämpfung oder Verstärkung, wobei bei höheren Frequenzen ($f_i$) stärker verstärkt oder schwächer gedämpft wird als bei niedrigeren Frequenzen ($f_i$), unter Erhalt einer frequenzgewichteten 2. Ableitung ($[d^2I(t)/dt^2]f_i$)(D) bzw. einer frequenzgewichteten 3. Ableitung ($[d^3I(t)/dt^3]f_i$)(E), die eine erste Bewertungsgröße (BG1/D bzw. BG1/E) darstellen,

(VI) als wahlweisen Schritt
Bildung der Ableitung

- der 2. Ableitung ($d^2I(t)/dt^2$) (B) nach der Zeit t ($d^3I(t)/dt^3$) (C) bzw.
- der 3. Ableitung ($d^3I(t)/dt^3$) (C) nach der Zeit t ($d^4I(t)/dt^4$) (C') bzw.
- der frequenzgewichteten 2. Ableitung ($[d^2I(t)/dt^2]f_i$) (D) nach der Zeit t ($d[d^2I(t)/dt^2]f_i/dt$) (F) bzw.
- der frequenzgewichteten 3. Ableitung ($[d^3I(t)/dt^3]f_i$) (E) nach der Zeit t ($d[d^3I(t)/dt^3]f_i/dt$) (G),

die eine zweite Bewertungsgröße (BG2/C bzw. BG2/C' bzw. BG2/F bzw. BG2/G) darstellen,
und

(VII) Erzeugung einer Korrelation oder Verwendung einer vorgegebenen Korrelation einer Bewertungsgröße (BG), welche

- die 2. Ableitung des Stroms (I(t)) nach der Zeit t ($d^2I(t)/dt^2$) (B) und/oder
- die 3. Ableitung des Stroms (I(t)) nach der Zeit t ($d^3I(t)/dt^3$) (C) und/oder
- die erste Bewertungsgröße (BG1/D; BG1/E) und/oder
- die zweite Bewertungsgröße (BG2/C; BG2/C'; BG2/F; BG2/G) darstellt,

mit einer auf den Schweißprozess und/oder auf erzeugte Schweißverbindungen bezogenen Qualitätsgröße (QG) unter Erhalt einer entsprechenden Qualitätsgröße (QG/B; QG/C; QG/D; QG/E; QG/C'; QG/F; QG/G).

2. Verfahren nach Anspruch 1, **dadurch gekennzeichnet, dass** in Schritt VII die Korrelation der Bewertungsgröße (BG) mit der Qualitätsgröße (QG) unter Verwendung eines neuronalen Netzwerks vorgenommen wird.

3. Verfahren nach Anspruch 2, **dadurch gekennzeichnet, dass** in Schritt VII folgende Maßnahmen durchgeführt werden:

(VIIa) Frequenzanalyse der Bewertungsgröße (BG) unter Erhalt von Frequenzteilbereichen zugeordneten Frequenzbereichsgrößen ($FG_1$, $FG_2$, ... $FG_n$),
(VIIb) Zuführung der Frequenzbereichsgrößen ($FG_1$, $FG_2$, ... $FG_n$) als Eingangsgrößen zu Eingangsneuronen eines neuronalen Netzwerks
und
(VIIc) Zuordnung von entsprechenden Qualitätsgrößen (QG/B; QG/C; QG/D; QG/E; QG/C'; QG/F; QG/G), die vorzugsweise Qualitätsklassen entsprechen, zu den Ausgangsneuronen des neuronalen Netzwerks.

4. Verfahren nach Anspruch 3, **dadurch gekennzeichnet, dass** die Frequenzanalyse in Schritt VIIa durch Frequenzbereichen zugeordnete Bandpassfilter ($BP_1$, $BP_2$, ... $BP_n$) durchgeführt wird, wobei die erzeugten Frequenzbereichsgrößen ($FG_1$, $FG_2$, ... $FG_n$) gegebenenfalls mit vorgegebenen, unterschiedlichen Verstärkungs- oder Dämpfungsfaktoren gewichtet werden.

5. Verfahren nach Anspruch 3, **dadurch gekennzeichnet, dass** die Frequenzanalyse in Schritt VIIa durch Fourieranalyse vorgenommen wird, wobei die erhaltenen Frequenzkomponenten gegebenenfalls mit vorgegebenen, unterschiedlichen Verstärkungs- oder Dämpfungsfaktoren gewichtet werden.

6. Verfahren nach einem oder mehreren der Ansprüche 1 bis 5, **dadurch gekennzeichnet, dass** eine oder mehrere qualitätsrelevante Prozessvariable oder davon abgeleitete Größen in Abhängigkeit von erhaltenen Qualitätsgrößen (QG/B; QG/C; QG/D; QG/E; QG/C'; QG/F; QG/G) gesteuert oder geregelt werden.

7. Verfahren nach einem oder mehreren der Ansprüche 3 bis 6, **dadurch gekennzeichnet, dass** in Schritt VIIa die Frequenzanalyse in einem Gesamt-Frequenzbereich von 0 bis 500 kHz und vorzugsweise von 10 Hz bis 100 kHz durchgeführt wird.

8. Verfahren nach einem oder mehreren der Ansprüche 3 bis 7, **dadurch gekennzeichnet, dass** in Schritt VIIa die Frequenzanalyse unter Verwendung von Frequenzteilbereichen einer Bandbreite von 10 Hz bis 1 kHz und vorzugsweise von 50 bis 500 Hz durchgeführt wird.

9. Verfahren nach einem oder mehreren der Ansprüche 3 bis 8, **dadurch gekennzeichnet, dass** die Frequenzbereichsgrößen ($FG_1$, $FG_2$, ... $FG_n$) vor der weiteren Verarbeitung nach einem Mittelungsverfahren gemittelt oder nach einem Summationsverfahren summiert bzw. integriert werden.

10. Verfahren nach einem oder mehreren der Ansprüche 1 bis 9
zur Regelung der Prozessqualität und/oder der Qualität erzeugter Schweißverbindungen,
**gekennzeichnet durch** einen weiteren Schritt VIII, in dem folgende Maßnahmen durchgeführt werden:

(VIIIa) Festlegung eines Wertes oder Wertebereichs einer oder mehrerer Qualitätsgrößen (QG/B; QG/C; QG/D; QG/E; QG/C'; QG/F; QG/G) als Sollwert ($Q_{SOLL}$) (J),
(VIIIb) Vergleichen der erhaltenen Qualitätsgrößen (QG/B; QG/C; QG/D; QG/E; QG/C'; QG/F; QG/G) als Istwerte ($Q_{IST}$) (H) mit dem Sollwert ($Q_{SOLL}$) (J) unter Ermittlung der Regelabweichung ($|Q_{SOLL}-Q_{IST}|$) und
(VIIIc) Erzeugung einer Stellgröße (SG) (K), die eine oder mehrere qualitätsrelevante Prozessvariable oder davon abgeleitete Größen beeinflusst, zur Minimierung der Regelabweichung ($|Q_{SOLL}-Q_{IST}|$).

11. Verfahren nach einem oder mehreren der Ansprüche 1 bis 10, wobei die Schritte I und II gemeinsam unter Verwendung eines Rogowski-Gürtels durchgeführt werden, der direkt die 1. Ableitung (dI(t)/dt) (A) des Stroms (I(t)) liefert.

12. Verfahren nach einem oder mehreren der Ansprüche 1 bis 10, wobei in Schritt I der Strom (I(t)) (A*) unter Verwendung eines Hall-Generators erfasst wird.

13. Verfahren nach einem oder mehreren der Ansprüche 1 bis 12, wobei bei der Erzeugung nicht punktförmiger Schweißverbindungen einer oder mehrere der Schritte I bis VIII in vorgegebenen festen Zeitabständen oder nach vorgegebenen festen Schweißnahtlängen oder Schweißraupenlängen durchgefiihrt werden.

14. Verfahren nach einem oder mehreren der Ansprüche 1 bis 13, wobei die Gewichtung durch frequenzabhängige Dämpfung oder Verstärkung in Schritt V so durchgeführt wird, dass
innerhalb vorgegebener Bereiche der Frequenzen ($f_i$) mit einem jeweils konstanten Dämpfungsgrad gedämpft bzw. mit einem jeweils konstanten Verstärkungsfaktor verstärkt wird.

15. Verfahren nach einem oder mehreren der Ansprüche 1 bis 14, wobei die Gewichtung in Schritt V innerhalb eines Frequenzbereichs von 1 Hz bis 10 kHz durchgeführt wird.

16. Verfahren nach einem oder mehreren der Ansprüche 1 bis 15, wobei in einem oder mehreren der Schritte I bis VIII entsprechende elektrische Signale (A*, A, B, C, C', D, E, F, G, H, J, K) erzeugt oder verarbeitet werden, die analoge oder digitale Signale sind und die betreffende Größe repräsentieren.

17. Verfahren nach Anspruch 16, wobei eines oder mehrere der Signale A*, A, B, C, C', D, E, F, G, H, J, K eine Spannung, einen Strom oder ein moduliertes Trägersignal darstellen.

18. Verfahren nach einem oder mehreren der Ansprüche 1 bis 17, wobei einer oder mehrere der Schritte I, II, III, IV, V, VI, VII und VIII zeitlich kontinuierlich, quasikontinuierlich oder diskontinuierlich, vorzugsweise periodisch zu vorgegebenen Zeitpunkten bzw. innerhalb vorgegebener Zeitintervalle oder vorgegebener Zeitfenster, durchgeführt werden.

19. Verfahren nach einem oder mehreren der Ansprüche 1 bis 18, wobei eines oder mehrere der Signale A*, A, B, C, C', D, E, F, G, H, J, K kontinuierlich oder diskontinuierlich, vorzugsweise periodisch zu vorgegebenen Zeitpunkten bzw. innerhalb vorgegebener Zeitintervalle oder vorgegebener Zeitfenster, erfasst bzw. verarbeitet werden.

20. Verfahren nach einem oder mehreren der Ansprüche 1 bis 19, wobei als Qualitätsgröße (QG) eine oder mehrere der folgenden Größen herangezogen werden:

- die mechanische Festigkeit einer Schweißverbindung,
- der Energieverbrauch zur Erzeugung einer Schweißverbindung,

- die Schweißleistung zur Erzeugung einer Schweißverbindung,
- die Schweißdauer zur Erzeugung einer Schweißverbindung,
- der Schweißgutverbrauch bzw. der Verbrauch an abschmelzendem Elektrodenmaterial,
- die Freiheit von Einschlüssen,
- die Schweißnahtüberhöhung.

21. Verfahren nach einem oder mehreren der Ansprüche 1 bis 20, wobei in Schritt VII zur Korrelation ein Algorithmus vorgegeben oder ermittelt wird, vorzugsweise ein Algorithmus, der sich aus einem neuronalen Netzwerk nach dem Lernvorgang ergibt.

22. Verfahren nach einem oder mehreren der Ansprüche 1 bis 21, wobei der in Schritt VII ermittelte Algorithmus nach Ablauf vorgegebener fester Zeitintervalle und/oder nach Ermittlung von Betriebsparametern, die von den bei der Ermittlung eines Algorithmus vorliegenden Betriebsparametern abweichen, neu ermittelt wird.

23. Verfahren nach einem oder mehreren der Ansprüche 1 bis 22, wobei in Schritt VII ein selbstlernendes System und insbesondere ein selbstoptimierendes neuronales Netzwerk verwendet wird, welche die Lernerfahrung bezüglich der Korrelation zwischen der Bewertungsgröße (BG) und der Qualitätsgröße (QG) zeitlich beibehalten.

24. Verfahren nach Anspruch 22 oder 23, wobei in Schritt VII ein neu ermittelter Algorithmus mit dem zuvor ermittelten und angewandten Algorithmus nach einem oder mehreren Bewertungskriterien verglichen wird und der neu ermittelte Algorithmus dann angewandt wird, wenn dieser vom vorher ermittelten und angewandten Algorithmus hinreichend verschieden ist.

25. Verfahren nach einem oder mehreren der Ansprüche 10 bis 24, wobei die Regelung in Schritt VIII so durchgeführt wird, dass eine P-, PI-, PID- oder PDPI-Charakteristik resultiert.

26. Verfahren nach einem oder mehreren der Ansprüche 10 bis 24, wobei Schritt VIII unter Anwendung von Fuzzy-Logik durchgeführt wird.

27. Verfahren nach einem oder mehreren der Ansprüche 1 bis 26, wobei nach Schritt VII und/oder in Schritt VIII als Prozessvariable bzw. davon abgeleitete Größen die Schweißspannung (U(t)) und/oder der durch die Schweißstelle fließende Strom (I(t)) und/oder die Geschwindigkeit des Vorrückens der Schweißstelle bei nicht punktförmigen Schweißverbindungen beeinflusst werden.

28. Verfahren nach Anspruch 27, wobei nach Schritt VII und/oder in Schritt VIII als Prozessvariable bzw. davon abgeleitete Größen eine oder mehrere der folgenden Variablen beeinflusst werden:

- der angewandte Pressdruck (k),
- die Schweißspannung (U),
- die Dauer eines Schweißvorgangs,
- der Zeitpunkt und/oder die Dauer einer Erhöhung und/oder einer Verringerung des durch die Schweißstelle fließenden Stroms (I(t)),
- die Steilheit einer Erhöhung und/oder einer Verringerung des durch die Schweißstelle fließenden Stroms (I(t)),
- die Dauer eines konstanten oder quasikonstanten, durch die Schweißstelle fließenden Stroms (I(t)),
- der Zeitpunkt der Abschaltung des durch die Schweißstelle fließenden Stroms (I(t)),
- die Geschwindigkeit des Vorrückens der Schweißstelle bei der Herstellung nicht punktförmiger Schweißverbindungen.

29. Vorrichtung zur Erfassung der Qualität von Preßschweiß- und Schmelzschweißprozessen und insbesondere von Widerstandsschweißprozessen und/oder der Qualität damit erzeugter Schweißverbindungen, insbesondere zur Durchführung des Verfahrens nach den Ansprüchen 1 bis 9 und 11 bis 24, die aufweist:

- eine Stromerfassungseinrichtung (13), die erfasst:

  • den Strom (I(t)), der durch die Schweißstelle fließt oder der mit der Leistungserzeugung an der Schweißstelle korreliert ist (Ausgangssignal A*), oder

- die 1. Ableitung des Stroms (I(t)) (A*) nach der Zeit t (dI(t)/dt) (Ausgangssignal A),

  - eine Auswertungseinrichtung (14), die mit der Stromerfassungseinrichtung (13) verbunden ist und deren Ausgangssignale (A oder A) empfängt und folgende Verarbeitungsschritte durchführt:

  - im Fall des Ausgangssignals A :
    den vorgeschalteten Schritt

    (II) Bildung der 1. Ableitung des erfassten Stroms (I(t)) (A*) nach der Zeit t (dI(t)/dt) (A)

  - und nach Schritt II bzw. im Fall des Ausgangssignals A:

    (III) Bildung der 2. Ableitung des Stroms (I(t)) nach der
    Zeit t $(d^2I(t)/dt^2)$ (B),
    (IV) als wahlweisen Schritt
    Bildung der 3. Ableitung des Stroms (I(t)) nach der
    Zeit t $(d^3I(t)/dt^3)$ (C),
    (V) als wahlweisen Schritt
    frequenzabhängige Gewichtung der 2. Ableitung $(d^2I(t)/dt^2)$ (B) bzw. der 3. Ableitung $(d^3I(t)/dt^3)$ (C)
    des Stroms (I(t)) durch frequenzabhängige Dämpfung oder Verstärkung, wobei bei höheren Frequenzen ($f_i$) stärker verstärkt oder schwächer gedämpft wird als bei niedrigeren Frequenzen ($f_i$), unter
    Erhalt einer frequenzgewichteten 2. Ableitung $([d^2I(t)/dt^2]f_i)$ (D) bzw. einer frequenzgewichteten 3.
    Ableitung $([d^3I(t)/dt^3]f_i)$ (E), die eine erste Bewertungsgröße (BG1/D bzw. BG1/E) darstellen,
    (VI) als wahlweisen Schritt
    Bildung der Ableitung

    - der 2. Ableitung $(d^2I(t)/dt^2)$ (B) nach der Zeit t $(d^3I(t)/dt^3)$ (C) bzw.
    - der 3. Ableitung $(d^3I(t)/dt^3)$ (C) nach der Zeit t $(d^4I(t)/dt^4)$ (C') bzw.
    - der frequenzgewichteten 2. Ableitung $([d^2I(t)/dt^2]f_i)$ (D) nach der Zeit t $(d[d^2I(t)/dt^2]f_i/dt)$ (F)
      bzw.
    - der frequenzgewichteten 3. Ableitung $([d^3I(t)/dt^3]f_i)$ (E) nach der Zeit t $(d[d^3I(t)/dt^3]f_i/dt)$ (G),

    die eine zweite Bewertungsgröße (BG2/C bzw. BG2/C' bzw. BG2/F bzw. BG2/G) darstellen,

sowie

  - eine Korrelationseinrichtung (16), die der Auswertungseinrichtung (14) nachgeschaltet ist und folgenden Schritt VII durchführt:

    (VII) Erzeugung einer Korrelation oder Verwendung einer vorgegebenen Korrelation einer Bewertungsgröße (BG), welche

    - die 2. Ableitung des Stroms (I(t)) nach der Zeit t $(d^2I(t)/dt^2)$ (B) und/oder
    - die 3. Ableitung des Stroms (I(t)) nach der Zeit t $(d^3I(t)/dt^3)$ (C) und/oder
    - die erste Bewertungsgröße (BG1/D; BG1/E) und/oder
    - die zweite Bewertungsgröße (BG2/C; BG2/C'; BG2/F; BG2/G) darstellt,

    mit einer auf den Schweißprozess und/oder auf erzeugte Schweißverbindungen bezogenen Qualitätsgröße (QG) unter Erhalt einer entsprechenden Qualitätsgröße (QG/B; QG/C; QG/D; QG/E; QG/C'; QG/F; QG/G).

**30.** Vorrichtung nach Anspruch 29, **dadurch gekennzeichnet, dass** die Korrelationseinrichtung (16) ein neuronales Netz aufweist, das die Korrelation der Bewertungsgröße (BG) mit der Qualitätsgröße (QG/B; QG/C; QG/D; QG/E; QG/C'; QG/F; QG/G) vornimmt.

**31.** Vorrichtung nach Anspruch 30, **dadurch gekennzeichnet, dass** die Korrelationseinrichtung (16) in Schritt VII folgende Maßnahmen durchführt:

(VIIa) Frequenzanalyse der Bewertungsgröße (BG) unter Erhalt von Frequenzteilbereichen zugeordneten Frequenzbereichsgrößen ($FG_1$, $FG_2$, ... $FG_n$),

(VIIb) Zuführung der Frequenzbereichsgrößen ($FG_1$, $FG_2$, ... $FG_n$) als Eingangsgrößen zu Eingangsneuronen des neuronalen Netzwerks

und

(VIIc) Zuordnung von entsprechenden Qualitätsgrößen (QG/B; QG/C; QG/D; QG/E; QG/C'; QG/F; QG/G), die vorzugsweise Qualitätsklassen entsprechen, zu den Ausgangsneuronen des neuronalen Netzwerks.

**32.** Vorrichtung nach Anspruch 31, **dadurch gekennzeichnet, dass** die Korrelationseinrichtung (16) Frequenzbereichen zugeordnete Bandpassfilter ($BP_1$, $BP_2$, ... $BP_n$) aufweist, welche die Frequenzanalyse in Schritt VIIa durchführen, wobei die erzeugten Frequenzbereichsgrößen ($FG_1$, $FG_2$, ... $FG_n$) gegebenenfalls mit vorgegebenen, unterschiedlichen Verstärkungs- oder Dämpfungsfaktoren gewichtet werden.

**33.** Vorrichtung nach Anspruch 31, **dadurch gekennzeichnet, dass** die Korrelationseinrichtung (16) eine Fourieranalyseeinrichtung aufweist, welche die Frequenzanalyse in Schritt VIIa vornimmt, wobei die erhaltenen Frequenzkomponenten gegebenenfalls mit vorgegebenen, unterschiedlichen Verstärkungs- oder Dämpfungsfaktoren gewichtet werden.

**34.** Vorrichtung nach einem oder mehreren der Ansprüche 29 bis 33, die eine Stelleinrichtung (10, 12) aufweist, mit der eine oder mehrere der folgenden Prozessvariablen beeinflussbar sind:

- der angewandte Pressdruck (k),
- die Schweißspannung (U),
- die Dauer eines Schweißvorgangs,
- der Zeitpunkt und/oder die Dauer einer Erhöhung und/oder einer Verringerung des durch die Schweißstelle fließenden Stroms (I(t)),
- die Steilheit einer Erhöhung und/oder einer Verringerung des durch die Schweißstelle fließenden Stroms (I(t)),
- die Dauer eines konstanten oder quasikonstanten, durch die Schweißstelle fließenden Stroms (I(t)),
- der Zeitpunkt der Abschaltung des durch die Schweißstelle fließenden Stroms (I(t)),
- die Geschwindigkeit des Vorrückens der Schweißstelle bei der Herstellung nicht punktförmiger Schweißverbindungen.

**35.** Vorrichtung nach Anspruch 34, bei der die Stelleinrichtung (10, 12) eine Ansteuerschaltung (12) und eine von der Ansteuerschaltung (12) ansteuerbare Stromstelleinrichtung (10) aufweist, die den durch die Schweißstelle fließenden Strom (I(t)) über die Schweißstromquelle (5) beeinflusst.

**36.** Vorrichtung nach einem oder mehreren der Ansprüche 29 bis 35 zur Regelung der Prozessqualität von Preßschweiß- und Schmelzschweißprozessen und insbesondere von Widerstandsschweißprozessen und/oder der Qualität damit erzeugter Schweißverbindungen,

insbesondere zur Durchführung des Verfahrens nach den Ansprüchen 10 bis 28,

die eine Regeleinrichtung (17) aufweist, die mit der Korrelationseinrichtung (16) verbunden ist und von ihr Qualitätsgrößen (QG/B; QG/C; QG/D; QG/E; QG/C'; QG/F; QG/G) als Istwert ($Q_{IST}$) (H) erhält und durch Vergleichen des Istwertes ($Q_{IST}$) (H) mit einem Sollwert ($Q_{SOLL}$) (J), der als Wert oder Wertebereich einer oder mehrerer Qualitätsgrößen (QG/B; QG/C; QG/D; QG/E; QG/C'; QG/F; QG/G) zuvor festgelegt wurde, die Regelabweichung ($|Q_{SOLL} - Q_{IST}|$) ermittelt und eine Stellgröße (SG) (K) erzeugt, die eine oder mehrere Prozessvariable oder davon abgeleitete Größen beeinflusst, zur Minimierung der Regelabweichung ($|Q_{SOLL} - Q_{IST}|$).

**37.** Vorrichtung nach Anspruch 36, die eine Stelleinrichtung (10, 12) aufweist, welche die Stellgröße (SG) (K) von der Regeleinrichtung (17) empfängt und die Schweißspannung (U) und/oder den durch die Schweißstelle fließenden Strom (I(t)) und/oder die Geschwindigkeit des Vorrückens der Schweißstelle bei nicht punktförmigen Schweißverbindungen entsprechend der Stellgröße (SG) (K) beeinflusst.

**38.** Vorrichtung nach einem oder mehreren der Ansprüche 29 bis 37, wobei die Stromerfassungseinrichtung (13) im Stromkreis zwischen der Schweißstromquelle (5) und den Elektroden (3, 4) oder in Wirkverbindung mit diesem Stromkreis angeordnet ist.

**39.** Vorrichtung nach einem oder mehreren der Ansprüche 29 bis 37, wobei die Stromerfassungseinrichtung (13) bei einer Elektronenstrahlschweißeinrichtung den über das Werkstück bzw. die elektronenaufnehmende Elektrode fließenden Strom (I(t)) erfasst.

**40.** Vorrichtung nach einem oder mehreren der Ansprüche 36 bis 39, bei der die Stelleinrichtung (10, 12) eine Ansteuerschaltung (12), die das Stellsignal (SG) (K) von der Regeleinrichtung (17) erhält, und eine von der Ansteuerschaltung (12) ansteuerbare Stromstelleinrichtung (10) aufweist, die den durch die Schweißstelle fließenden Strom (I(t)) über die Schweißstromquelle (5) beeinflusst.

**41.** Vorrichtung nach einem oder mehreren der Ansprüche 30 bis 40, bei der die Stromstelleinrichtung (10) eine Thyristorschaltung, eine Phasenanschnittschaltung, ein Frequenzumrichter oder eine Einrichtung zur Steuerung der Strom- oder Spannungsamplitude ist.

**42.** Vorrichtung nach einem oder mehreren der Anspüche 36 bis 41, bei der ein durch die Korrelationseinrichtung (16) erzeugter Sollwert ($Q_{SOLL}$) (J) verwendet wird.

**43.** Vorrichtung nach einem oder mehreren der Ansprüche 29 bis 42, bei der die Stromerfassungseinrichtung (13) ein Rogowski-Gürtel, der die 1. Ableitung des Stroms (I(t)) nach der Zeit t liefert, oder ein Hall-Generator ist.

**44.** Vorrichtung nach einem oder mehreren der Ansprüche 29 bis 43, bei der die Korrelationseinrichtung (16) als Qualitätsgröße eine oder mehrere der folgenden Größen anwendet:

- die mechanische Festigkeit einer Schweißverbindung,
- den Energieverbrauch zur Erzeugung einer Schweißverbindung,
- die Schweißleistung zur Erzeugung einer Schweißverbindung,
- die Schweißdauer zur Erzeugung einer Schweißverbindung,
- den Schweißgutverbrauch bzw. den Verbrauch an abschmelzendem Elektrodenmaterial,
- die Freiheit von Einschlüssen,
- die Schweißnahtüberhöhung.

**45.** Vorrichtung nach einem oder mehreren der Ansprüche 36 bis 44, wobei die Regeleinrichtung (17) über die Stellgröße (SG) (K) eine oder mehrere der folgenden Prozessvariablen beeinflusst:

- den angewandten Pressdruck (k),
- die Schweißspannung (U),
- die Dauer eines Schweißvorgangs,
- den Zeitpunkt und/oder die Dauer einer Erhöhung und/oder einer Verringerung des durch die Schweißstelle fließenden Stroms (I(t)),
- die Steilheit einer Erhöhung und/oder einer Verringerung des durch die Schweißstelle fließenden Stroms (I(t)),
- die Dauer eines konstanten oder quasikonstanten, durch die Schweißstelle fließenden Stroms (I(t)),
- die Geschwindigkeit des Vorrückens der Schweißstelle bei der Herstellung nicht punktförmiger Schweißverbindungen.

**46.** Vorrichtung nach einem oder mehreren der Ansprüche 36 bis 45, wobei die Regeleinrichtung (17) so ausgelegt ist, dass sie eine P-, PI-, PID- oder PDPI-Charakteristik ergibt.

**47.** Vorrichtung nach einem oder mehreren der Ansprüche 36 bis 46, wobei die Regeleinrichtung (17) so ausgelegt ist, dass sie eine Fuzzy-Regelung durchführt.

**48.** Vorrichtung nach einem oder mehreren der Ansprüche 29 bis 47, die ferner

- eine Ausgabeeinrichtung (15) aufweist, die der Auswertungseinrichtung (14) nachgeschaltet ist und ausgibt:

  • die erste Bewertungsgröße (BG1/D, BG1/E)
     und/oder
  • die zweite Bewertungsgröße (BG2/F, BG2/G, BG2/C, BG2/C')
     und/oder
  • die Qualitätsgröße (QG/B; QG/C; QG/D; QG/E; QG/C'; QG/F; QG/G).

**49.** Schweißvorrichtung zum Preßschweißen oder Schmelzschweißen und insbesondere zum Widerstandsschweißen, insbesondere zur Durchführung des Verfahrens nach den Ansprüchen 1 bis 28, die aufweist:

- Elektroden (3, 4), zwischen denen die zu verschweißenden Werkstücke (Bleche 1, 2; Drähte 7, 8) anzuordnen sind oder von denen eine Elektrode das Werkstück darstellt,
- eine Schweißstromquelle (5), die mit den Elektroden (3, 4) verbunden und schaltbar und/oder steuerbar ist, sowie
- eine Vorrichtung nach einem oder mehreren der Ansprüche 29 bis 48.

**Claims**

1. Method for determining the quality of pressure welding and fusion welding processes and in particular resistance welding processes and / or the quality of weld joints thereby produced which method includes the following steps:

   (I) determining the current (I(t)) which flows through the welding point or is correlated with the power production at the welding point (A*),
   (II) formation of the 1$^{st}$ derivative of the determined current (I(t))(A*) with respect to the time t (dI(t)/dt)(A),
   (III) formation of the 2$^{nd}$ derivative of the current (I(t)) with respect to the time t ($d^2I(t)/dt^2$)(B),
   (IV) as an optional step
   formation of the 3$^{rd}$ derivative of the current (I(t)) with respect to the time t ($d^3I(t)dt^3$)(C),
   (V) as an optional step
   frequency-dependent weighting of the 2nd derivative ($d^2I(t)/dt^2$)(B) or the 3$^{rd}$ derivative ($d^3I(t)/dt^3$)(C) of the current (I(t)) through frequency-dependent attenuation or amplification wherein there is more amplification or less attenuation in the case of higher frequencies ($f_i$) than in the case of lower frequencies ($f_i$), with the obtaining of a frequency-weighted 2$^{nd}$ derivative ($[d^2I(t)/dt^2]f_i$)(D) or a frequency-weighted 3$^{rd}$ derivative ($[d^3I(t)dt^3]f_i$)(E) which represent a first assessment value (BG1/D or BG1/E),
   (VI) as an optional step
   formation of the derivative

   - of the 2$^{nd}$ derivative ($d^2I(t)/dt^2$)(B) after the time t ($d^3I(t)/dt^3$)(C) or
   - the 3$^{rd}$ derivative ($d^3I(t)/dt^3$)(C) after the time t ($d^4I(t)dt^4$)(C') or
   - the frequency-weighted 2$^{nd}$ derivative ($[d^2I(t)/dt^2]f_i$)(D) after the time t ($d[d^2I(t)dt^2]f_i/dt$)(F) or
   - the frequency-weighted 3$^{rd}$ derivative ($[d^3I(t)/dt^3]f_i$(E) after the time t ($d[d^3I(t)/dt^3]f_i/dt$) (G),

   which represent a second assessment value (BG2/C or BG2/C' or BG2/F or BG2/G
   and
   (VII) production of a correlation or use of a pre-selected correlation of an assessment value (BG) which represents

   - the 2$^{nd}$ derivative of the current (I(t)) with respect to the time t($d^2I(t)/dt^2$)(B) and / or
   - the 3$^{rd}$ derivative of the current (I(t)) with respect to the time t ($d^3I(t)/dt^3$)(C) and / or
   - the first assessment value (BG1/D;BG1/E) and / or
   - the second assessment value (BG2/C; BG2/C'; BG2/F; BG2/G)

   with a quality value (QG) relating to the welding process and / or weld joints produced, with the obtaining of a corresponding quality value (QG/B, QG/C; QG/D; QG/E; QG/C'; QG/F; QG/G).

2. Method according to claim 1, **characterised in that** the correlation of the assessment value (BG) with the quality value (QG) is effected in step VII using a neuronal network.

3. Method according to claim 2, **characterised in that** the following measures are carried out in step VII:

   (VIIa) frequency analysis of the assessment value (BG) with the obtaining of frequency range values ($FG_1$, $FG_2$, ... $FG_n$), assigned to partial frequency ranges ($FG_1$, $FG_2$ ... $FG_n$),
   (VIIb) feeding of the frequency range values ($FG_1$, $FG_2$, ... $FG_n$) as input values to input neurons of a neuronal network and
   (VIIc) assignment of corresponding quality values (QG/B; QG/C; QG/D; QG/E; QG/C': QG/F; QG/G) which preferably correspond to quality classes to the output neurons, to the neuronal network.

4. Method according to claim 3, **characterised in that** the frequency analysis is effected in stage VIIa through band-pass filters ($BP_1$, $BP_2$, ... $BP_n$) assigned to frequency ranges wherein the frequency range values ($FG_1$, $FG_2$, ... $FG_n$) produced are optionally weighted with pre-selected, differing amplification or attenuation factors.

5. Method according to claim 3, **characterised in that** the frequency analysis is effected in stage VIIa through Fourier analysis wherein the frequency components obtained are optionally weighted with pre-selected, differing amplification or attenuation factors.

6. Method according to one or more of the claims 1 to 5, **characterised in that** one or more process variables relating to quality or values derived therefrom are controlled or regulated according to quality values obtained (QG/B; QG/C; QG/D; QG/E; QG/C'; QG/F: QG/G).

7. Method according to one or more of the claims 3 to 6, **characterised in that** the frequency analysis is effected in stage VIIa in an overall frequency range of 0 to 500 kHz and preferably of 10 Hz to 100 kHz.

8. Method according to one or more of the claims 3 to 7, **characterised in that** the frequency analysis is effected in stage VIIa using partial frequency ranges of a bandwidth of 10 Hz to 1 kHz and preferably of 50 to 500 Hz.

9. Method according to one or more of the claims 3 to 8, **characterised in that** the frequency range values ($FG_1$, $FG_2$, ... $FG_n$) are averaged before the further processing according to an averaging process or added or integrated according to a summation process.

10. Method according to one or more of the claims 1 to 9 for the closed-loop control of the process quality and / or the quality of weld joints produced,
**characterised by** a further step VIII, in which the following measures are carried out:

(VIIIa) fixing of a value or range of values of one or more quality values (QG/B; QG/C; QG/D; QG/E; QG/C'; QG/F; QG/G) as a desired value ($Q_{SOLL}$)(J),
(VIIIb) comparing the quality values obtained (QG/B; QG/C; QG/D; QG/E; QG/C'; QG/F; QG/G) as actual values ($Q_{IST}$) (H) with the desired value ($Q_{SOLL}$)(J), with the control deviation ($|Q_{SOLL}-Q_{IST}|$) being ascertained and
(VIIIc) producing a correcting variable (SG)(C) which influences one or more process variables relating to quality or values derived therefrom for the purpose of minimising the control deviation ($|Q_{SOLL}-Q_{IST}|$).

11. Method according to one or more of the claims 1 to 10 wherein steps I and II are effected in common using a Rogowski belt which directly supplies the 1st derivative (dI(t)/dt)(A) of the current (I(t)).

12. Method according to one or more of the claims 1 to 10 wherein the current (I(t))(A*) is detected in step 1 using a Hall generator.

13. Method according to one or more of the claims 1 to 12 wherein during the production of non-point-form weld joints one or more of steps I to VIII are effected in pre-selected, fixed time spaces or according to pre-selected, fixed weld seam lengths or bead lengths.

14. Method according to one or more of the claims 1 to 13 wherein the weighting is effected in step V through frequency-dependent attenuation or amplification in such a way that
within pre-selected ranges of the frequencies ($f_i$) attenuation takes place with a constant degree of attenuation or amplification takes place with a constant amplification factor.

15. Method according to one or more of the claims 1 to 14 wherein the weighting is effected in step V within a frequency range of 1 Hz to 10 kHz.

16. Method according to one or more of the claims 1 to 15 wherein corresponding electrical signals (A*, A, B, C, C', D, E, F, G, H, J, K) are produced or processed in one or more of steps I to VIII which are analog or digital signals and represent the value in question.

17. Method according to claim 16 wherein one or more of the signals A*, A, B, C, C', D, E, F, G, H, J, K represent a voltage, a current or a modulated carrier signal.

18. Method according to one or more of the claims 1 to 17 wherein one or more of the steps I, II, III, IV, V, VI, VII and VII are carried out continuously, quasi continuously or discontinuously in terms of time, preferably periodically at pre-selected points in time or within pre-selected intervals of time or pre-selected time windows.

19. Method according to one or more of the claims 1 to 18 wherein one or more of the signals A*, A, B, C, C', D, E, F, G, H, J, K are determined or processed continuously or discontinuously, preferably periodically at pre-selected points in time or within pre-selected intervals of time or pre-selected time windows.

20. Method according to one or more of the claims 1 to 19 wherein one or more of the following values are used as a quality value (QG):

   - the mechanical strength of a weld joint,
   - the energy consumption for producing a weld joint,
   - the welding power for producing a weld joint,
   - the welding duration for producing a weld joint,
   - the welding stock consumption or the consumption of melting electrode material,
   - the freedom from inclusions,
   - the weld seam elevation.

21. Method according to one or more of the claims 1 to 20 wherein an algorithm is pre-selected or ascertained in step VII for correlation, preferably an algorithm which results from a neuronal network after the learning process.

22. Method according to one or more of the claims 1 to 21 wherein the algorithm ascertained in step VII is newly ascertained after the expiry of a pre-determined, fixed interval of time and / or after ascertaining operating parameters which deviate from the operating parameters existing when an algorithm is ascertained.

23. Method according to one or more of the claims 1 to 222 wherein a self-learning system and in particular a self-optimising neuronal network is used in step VII which retain the learning experience in time relating to the correlation between the assessment value (BG) and the quality value (QG).

24. Method according to claim 22 or 23 wherein a newly ascertained algorithm is compared in step VII with the previously ascertained and used algorithm according to one or more assessment criteria and the newly ascertained algorithm is used if it is sufficiently different from the previously ascertained and used algorithm.

25. Method according to one or more of the claims 10 to 24 wherein the control is effected in step VIII in such a way that a P, PI, PID or PDPI characteristic results.

26. Method according to one or more of the claims 10 to 24 wherein step VIII is effected using fuzzy logic.

27. Method according to one or more of the claims 1 to 26 wherein after step VII and / or in step VIII the welding voltage (U(t)) and / or the current (I(t)) flowing through the welding point and / or the speed of the advancing of the welding point in non-point-form weld joints are influenced as a process variable or values derived therefrom.

28. Method according to claim 27 wherein after step VII and / or in step VIII one or more of the following variables are influenced as a process variable or values derived therefrom:

   - the pressure (k),
   - the weld voltage (U),
   - the duration of a welding process,
   - the point in time and / or the duration of an increase and / or a decrease in the current (I(t)) flowing through the welding point,
   - the steepness of an increase and / or a decrease in the current (I(t)) flowing through the welding point,
   - the duration of a constant or quasi constant current (I(t)) flowing through the welding point,
   - the point in time of switching off the current (I(t)) flowing through the welding point,
   - the speed of advancing of the welding point during the production of non-point-form weld joints.

29. Device for determining the quality of pressure welding and fusion welding processes and in particular resistance welding processes and / or the quality of weld joints thereby produced, in particular for carrying out the method according to claims 1 to 9 and 11 to 24, comprising:

- a current detection device (13) which detects:

  . the current $(I(t))$ which flows through the welding point or which is correlated with the power production at the welding point (output signal A*),
  or
  . the 1st derivative of the current $(I(t))(A^*)$ with respect to the time t $(dI(t)/dt)$ (output signal A),

- an assessment device (14) which is connected to the current detection device (13) and receives its output signals (A* or A) and carries out the following processing steps:

  . in the case of the output signal A*:

    the prior step

      (II) formation of the 1st derivative of the detected current $(I(t))(A^*)$ with respect to the time t $(dI(t)/dt)(A)$

  . and after step II or in the case of the output signal A:

      (III) formation of the 2nd derivative of the current $(I(t))$ with respect to the time t $(d^2I(t)/dt^2)(B)$,
      (IV) as an optional step
      formation of the 3rd derivative of the current $(I(t))$ with respect to the time t$(d^3I(t)/dt^3)(C)$,
      (V) as an optional step
      frequency-dependent weighting of the 2nd derivative $(d^2I(t)/dt^2)(B)$ or the 3rd derivative $(d^3I(t)/dt^3)(C)$ of the current $(I(t))$ through frequency-dependent attenuation or amplification wherein more amplification or less attenuation is effected with higher frequencies $(f_i)$ than with lower frequencies $(f_i)$, with the obtaining of a frequency-weighted 2nd derivative $([d^2I(t)/dt^2]f_i(D)$ or a frequency-weighted 3rd derivative $([d^3I(t)/dt^3]f_i(E)$ which represent a first assessment value (BG1/D or BG1/E),
      (VI) as an optional step
      formation of the derivative

- of the 2nd derivative $(d^2I(t)/dt^2)(B)$ with respect to the time t $(d^3I(t)/dt^3)(C)$
- or the 3rd derivative $(d^3I(t)/dt^3)(C)$ with respect to the time t$(d^4I(t)/dt^4)(C)$
  or
- of the frequency-weighted 2nd derivative $([d^2I(t)/dt^2]f_i)(D)$ with respect to the time t $(d[d^2I(t)/dt^2]f_i/dt(F)$
  or
- of the frequency-weighted 3rd derivative $([d^3I(t)/dt^3]f_i(E)$ with respect to the time t $(d[d^3I(t)/dt^3]f_i/dt)(G)$

  which represent a second assessment value (BG2/C or BG2/C' or BG2/F or BG2/G)
  and

- a correlation device (16) which is connected after the assessment device (14) and carries out the following step VII:

  (VII) production of a correlation or use of a pre-selected correlation of an assessment value (BG) which represents

  - the 2nd derivative of the current $(I(t))$ with respect to the time t $(d^2I(t)/dt^2)(B)$
    and / or
  - the 3rd derivative of the current $(I(t))$ with respect to the time t $(d^3I(t)/dt^3)(C)$
    and / or
  - the first assessment value (BG1/D; BG1/E)
    and / or
  - the second assessment value (BG2/C; BG2/C': BG2/C'; BG2/F; BG2/G)

with a quality value (QG) relating to the welding process and / or weld joints produced, with the obtaining of a corresponding quality value (QG/B; QG/C; QG/D: QG/E; QG/C; QG/F; QG/G).

30. Device according to claim 29, **characterised in that** the correlation device (16) has a neuronal network which carries out the correlation of the assessment value (BG) with the quality value (QG/B; QG/C; QG/D; QG/E; QG/C'; QG/F'; QG/G).

31. Device according to claim 30, **characterised in that** the correlation device (16) carries out the following measures in step VII:

(VIIa) frequency analysis of the assessment value (BG), with the obtaining of frequency range values ($FG_1$, $FG_2$, ... $FG_n$) assigned to partial frequency regions,
(VIIb) feeding of the frequency range values ($FG_1$, $FG_2$, ... $FG_n$) as input values to input neurons of the neuronal network
and
(VIIc) assignment of corresponding quality values (QG/B; QG/C; QG/D; QG/E; QG/C'; QG/F; QG/G) which preferably correspond to quality classes, to the output neurons of the neuronal network.

32. Device according to claim 31, **characterised in that** the correlation device (16) has band-pass filters ($BP_1$, $BP_2$, ... $BP_n$) assigned to frequency ranges which carry out the frequency analysis in step VIIa wherein the frequency range values ($FG_1$, $FG_2$, ... $FG_n$) produced are optionally weighted with pre-selected, differing amplification or attenuation factors.

33. Device according to claim 31, **characterised in that** the correlation device (16) comprises a Fourier analysis device which carries out the frequency analysis in step VIIa wherein the frequency components obtained are optionally weighted with pre-selected, differing amplification or attenuation factors.

34. Device according to one or more of the claims 29 to 33 which has an actuator device (10, 12), with which one or more of the following process variables can be influenced:

- the pressure applied (k),
- the welding voltage (U),
- the duration of a welding process,
- the point in time and / or the duration of an increase and / or a decrease in the current (I(t)) flowing through the welding point,
- the steepness of an increase and / or a decrease of the current (I(t)) flowing through the welding point,
- the duration of a constant or quasi constant current (I(t)) flowing through the welding point,
- the point in time of switching off the current (I(t)) flowing through the welding point,
- the speed of the advancing of the welding point during the production of non-point-form weld joints.

35. Device according to claim 34 wherein the actuator device (10, 12) has a control circuit (12) and a current adjusting device (10) which can be controlled by the control circuit (12), the current adjusting device (10) influencing the current (I(t)) flowing through the welding point through the welding power source (5).

36. Device according to one or more of the claims 29 to 35 for the closed-loop control of the process quality of pressure welding and fusion welding processes and in particular resistance welding processes and / or the quality of weld joints thereby produced,
in particular for carrying out the method according to claims 10 to 28,
which has a control device (17) which is connected to the correlation device (16) and receives from it quality values (QG/B; QG/C; QG/D; QG/E; QG/C'; QG/F; QG/G as an actual value ($Q_{IST}$)(H) and by comparing the actual value ($Q_{IST}$)(H) with a desired value ($Q_{SOLL}$)(J) which has been previously fixed as the value or value range of one or more quality values (QG/B; QG/C; QG/D; QG/E; QG/C'; QG/F; QG/G) ascertains the control deviation ($|Q_{SOLL} - Q_{IST}|$) and produces an adjusting value (SG)(K) which influences one or more process variables or values derived therefrom for the purpose of minimising the control deviation ($|Q_{SOLL} - Q_{IST}|$).

37. Device according to claim 36 which has an actuator device (10, 12) which receives the adjusting value (SG)(K) from the control device (17) and influences the welding voltage (U) and / or the current (I(t)) flowing through the welding point and / or the speed of the advancing of the welding point in the case of non-point-form weld joints corresponding to the adjusting value (SG)(K).

38. Device according to one or more of the claims 29 to 37 wherein the current detection device (13) is arranged in the circuit between the welding power source (5) and the electrodes (3, 4) or in effective connection with this circuit.

39. Device according to one or more of the claims 29 to 37 wherein the current detection device (13) in the case of an electron beam welding device detects the current (I(t)) flowing through the workpiece or the electron-absorbing electrode.

40. Device according to one or more of the claims 36 to 39 wherein the actuator device (10, 12) has a control circuit (12) which receives the adjusting signal (SG)(K) from the control device (17) and a current adjusting device (10) which can be controlled by the control circuit (12) and which influences the current (I(t)) flowing through the welding point through the welding power source (5).

41. Device according to one or more of the claims 30 to 40 wherein the current adjusting device (10) is a thyristor circuit, a phase angle control circuit, a frequency inverter or a device for controlling the current or voltage amplitude.

42. Device according to one or more of the claims 36 to 41 wherein a desired value ($Q_{SOLL}$) (J) produced through the correlation device (16) is used.

43. Device according to one or more of the claims 29 to 42 wherein the current detection device (13) is a Rogowski belt which supplies the $1^{st}$ derivative of the current (I(t)) with respect to the time t or is a Hall generator.

44. Device according to one or more of the claims 29 to 43 wherein the correlation device (16) uses one or more of the following values as a quality value:

- the mechanical strength of a weld joint,
- the energy consumption for producing a weld joint,
- the welding power for producing a weld joint,
- the welding duration for producing a weld joint,
- the welding stock consumption or the consumption of melting electrode material,
- the freedom from confinement,
- the weld seam elevation.

45. Device according to one or more of the claims 36 to 44 wherein the control device (17) influences one or more of the following process variables through the adjusting value (SG)(K);

- the pressure applied (k),
- the welding voltage (U),
- the duration of a welding process,
- the point in time and / or the duration of an increase and / or a decrease in the current (I(t)) flowing through the welding point,
- the steepness of an increase and / or a decrease in the current (I(t)) flowing through the welding point,
- the duration of a constant or quasi constant current (I(t)) flowing through the welding point,
- the speed of the advancing of the welding point in the production of non-point-form weld joints.

46. Device according to one or more of the claims 36 to 45 wherein the control device (17) is designed in such a way that a P, PI, PID or PDPI characteristic results.

47. Device according to one or more of the claims 36 to 46 wherein the control device (17) is designed in such a way that it carries out fuzzy control.

48. Device according to one or more of the claims 29 to 47 which also has

- an output device (15) which is connected after the assessment device (14) and produces:

  . the first assessment value (BG1/D, BG1/E)
  and / or

. the second assessment value (BG2/F, BG2/G, BG2/C, BG2/C')
and / or
. the quality value (QG/B; QG/C; QG/D; QG/E: QG/C'; QG/F; QG/G).

**49.** Welding device for pressure welding or fusion welding and in particular for resistance welding, in particular for carrying out the method according to the claims 1 to 28, comprising:

- electrodes (3, 4), between which the workpieces (sheets 1, 2; wires 7, 8) to be welded are to be arranged or of which one electrode constitutes the workpiece,
- a welding power source (5) which is connected to the electrodes (3, 4) and can be switched and / or controlled, and
- a device according to one or more of the claims 29 to 48.

**Revendications**

**1.** Procédé pour évaluer la qualité de procédés de soudage par pression et de soudage par fusion, et notamment de procédés de soudage par résistance et/ou de la qualité de joints soudés ainsi générés, comprenant les étapes suivantes:

(I) saisie du courant (I(t)) s'écoulant par le joint soudé ou corrélé à la génération de puissance sur le joint soudé (A*),
(II) formation de la 1$^e$ dérivée du courant saisi (I(t)) (A*) selon le temps t (dI(t)/dt) (A),
(III) formation de la 2$^e$ dérivée du courant (I(t)) selon le temps t ($d^2$I(t)/$dt^2$) (B),
(IV) comme étape optionnelle,
formation de la 3$^e$ dérivée du courant (I(t)) selon le temps t ($d^3$I(t)/$dt^3$) (C),
(V) comme étape optionnelle,
pondération en fonction de la fréquence de la 2$^e$ dérivée ($d^2$I(t)/$dt^2$) (B) ou de la 3$^e$ dérivée ($d^3$I(t)/$dt^3$) (C) du courant (I(t)) par amortissement ou amplification en fonction de la fréquence, l'amplification étant plus élevée ou l'amortissement étant plus faible à hautes fréquences ($f_i$) qu'à faibles fréquences ($f_i$), en obtenant une 2$^e$ dérivée pondérée par fréquence ($[d^2$I(t)/$dt^2]f_i$) (D) ou une 3$^e$ dérivée pondérée par fréquence ($[d^3$I(t)/$dt^3]f_i$) (E), représentant une première grandeur d'évaluation (BG1/D ou BG1/E),
(VI) comme étape optionnelle,
formation de la dérivée

- de la 2$^e$ dérivée ($d^2$I(t)/$dt^2$) (B) selon le temps t ($d^3$I(t)/$dt^3$) (C) ou
- de la 3$^e$ dérivée ($d^3$I(t)/$dt^3$) (C) selon le temps t ($d^4$I(t)/$dt^4$) (C') ou
- de la 2$^e$ dérivée pondérée par fréquence ($[d^2$I(t)/$dt^2]f_i$) (D) selon le temps t (d[$d^2$I(t)/$dt^2$] $f_i$/dt) (F) ou
- de la 3$^e$ dérivée pondérée par fréquence ($[d^3$I(t)/$dt^3]f_i$) (E) selon le temps t (d[$d^3$I(t)/$dt^3$] $f_i$/dt) (G),

représentant une deuxième grandeur d'évaluation (BG2/C ou BG2/C' ou BG2/F ou BG2/G),
et
(VII) génération d'une corrélation ou application d'une corrélation prédéfinie d'une grandeur d'évaluation (BG) représentant

- la 2$^e$ dérivée du courant (I(t)) selon le temps t ($d^2$I(t)/$dt^2$) (B), et/ ou
- la 3$^e$ dérivée du courant (I(t)) selon le temps t ($d^3$I(t)/$dt^3$) (C) et/ou
- la première grandeur d'évaluation (BG1/D; BG1/E) et/ou
- la deuxième grandeur d'évaluation (BG2 / C; BG2/C'; BG2/F; BG2/G),

avec une grandeur de qualité (QG) relative au procédés de soudage et/ou aux joints soudés générés, en obtenant une grandeur de qualité correspondante (QG/B; QG/C; QG/D; QG/E; QG/C'; QG/F; QG/G).

**2.** Procédé selon la revendication 1, **caractérisé en ce qu'**à l'étape VII, la corrélation de la grandeur d'évaluation (BG) avec la grandeur de qualité (QG) est effectuée en recourant à un réseau neuronal.

**3.** Procédé selon la revendication 2, **caractérisé en ce que** les mesures suivantes sont appliquées à l'étape VII:

(VIIa) analyse fréquentielle de la grandeur d'évaluation (BG) en obtenant des grandeurs de plages de fréquences associées à des plages de fréquences partielles ($FG_1$, $FG_2$, ... $FG_n$),
(VIIb) conduction des grandeurs de plages de fréquences ($FG_1$, $FG_2$, ... $FG_n$) en tant que grandeurs d'entrée vers les neurones d'entrée d'un réseau neuronal et
(VIIc) attribution de grandeurs de qualité correspondantes (QG/B; QG/C; QG/D; QG/E; QG/C'; QG/F; QG/G), correspondant de préférence à des classes de qualité, aux neurones de sortie du réseau neuronal.

**4.** Procédé selon la revendication 3, **caractérisé en ce que** l'analyse fréquentielle à l'étape VIIa est effectuée par des filtres passe-bande attribués à des plages de fréquences ($BP_1$, $BP_2$, ... $BP_n$), les grandeurs de plages de fréquences générées ($FG_1$, $FG_2$, ... $FG_n$) étant le cas échéant pondérées par différents facteurs d'amplification ou d'amortissement prédéfinis.

**5.** Procédé selon la revendication 3, **caractérisé en ce que** l'analyse fréquentielle à l'étape VIIa est entreprise par analyse de Fourier, les composants fréquentiels obtenus étant le cas échéant pondérés par différents facteurs d'amplification ou d'amortissement prédéfinis.

**6.** Procédé selon une ou plusieurs des revendications 1 à 5, **caractérisé en ce qu'**une ou plusieurs variables de procédés pertinentes pour la qualité ou des grandeurs dérivées de celles-ci sont commandées ou régulées en fonction des grandeurs de qualité obtenues (QG/B; QG/C; QG/D; QG/E; QG/C'; QG/F; QG/G).

**7.** Procédé selon une ou plusieurs des revendications 3 à 6, **caractérisé en ce qu'**à l'étape VIIa l'analyse fréquentielle est effectuée dans une plage globale de fréquences de 0 à 500 kHz, de préférence de 10 Hz à 100 kHz.

**8.** Procédé selon une ou plusieurs des revendications 3 à 7, **caractérisé en ce qu'**à l'étape VIIa l'analyse fréquentielle est effectuée en recourant à des plages de fréquences partielles d'une largeur de bande de 10 Hz à 1 kHz, de préférence de 50 à 500 Hz.

**9.** Procédé selon une ou plusieurs des revendications 3 à 8, **caractérisé en ce que** la moyenne des grandeurs de plages de fréquences ($FG_1$, $FG_2$, ... $FG_n$) est calculée avant traitement consécutif suivant une procédure d'établissement de moyenne, ou que les grandeurs de plages de fréquences sont totalisées ou intégrées suivant une procédure de totalisation.

**10.** Procédé selon une ou plusieurs des revendications 1 à 9 pour la régulation de la qualité de procédés et/ou de la qualité de joints soudés générés,
**caractérisé par** une autre étape VIII où les mesures suivantes sont appliquées:

(VIIIa) fixation d'une valeur ou d'une plage de valeurs d'une ou de plusieurs grandeurs de qualité (QG/B; QG/C; QG/D; QG/E; QG/C'; QG/F; QG/G) en tant que valeur de consigne ($Q_{SOLL}$) (J),
(VIIIb) comparaison des grandeurs de qualité obtenues (QG/B; QG/C; QG/D; QG/E; QG/C'; QG/F; QG/G) en tant que valeurs effectives ($Q_{IST}$) (H) avec la valeur de consigne ($Q_{SOLL}$) (J) en déterminant l'écart type ($|Q_{SOLL} - Q_{IST}|$),
et
(VIIIc) génération d'une grandeur de commande (SG) (K) influençant une ou plusieurs variables de procédé pertinentes pour la qualité ou des grandeurs dérivées de celles-ci, pour la minimisation de la déviation ($|Q_{SOLL} - Q_{IST}|$).

**11.** Procédé selon une ou plusieurs des revendications 1 à 10, où les étapes I et II sont les deux exécutées en recourant à une ceinture de Rogowski délivrant directement la 1$^e$ dérivée (dI(t)/dt) (A) du courant (I(t)).

**12.** Procédé selon une ou plusieurs des revendications 1 à 10, où à l'étape I le courant (1(t)) (A*) est saisi en recourant à un générateur Hall.

**13.** Procédé selon une ou plusieurs des revendications 1 à 12, où pour la génération de joints soudés non ponctuels, une ou plusieurs des étapes I à VIII sont exécutées à intervalles fixes prescrits ou suivant des longueurs fixes prescrites pour les cordons de soudure ou les chenilles de soudure.

**14.** Procédé selon une ou plusieurs des revendications 1 à 13, où la pondération par amortissement ou amplification en fonction de la fréquence est effectuée à l'étape V de manière à ce que l'amortissement ait lieu avec un degré d'amortissement constant, ou l'amplification ait lieu avec un facteur d'amplification constant dans des plages prédéfinies de fréquences (f$_i$).

15. Procédé selon une ou plusieurs des revendications 1 à 14, où la pondération de l'étape V est effectuée dans une plage de fréquences de 1 Hz à 10 kHz.

16. Procédé selon une ou plusieurs des revendications 1 à 15, où dans une ou plusieurs des étapes I à VIII des signaux électriques correspondants (A*, A, B, C, C', D, E, F, G, H, J, K) sont générés ou traités, lesquels sont des signaux analogiques ou numériques et représentent les grandeurs concernées.

17. Procédé selon la revendication 16, où un ou plusieurs des signaux A*, A, B, C, C', D, E, F, G, H, J, K représentent une tension, un courant ou un signal porteur modulé.

18. Procédé selon une ou plusieurs des revendications 1 à 17, où une ou plusieurs des étapes I, II, III, IV, V, VI, VII et VIII sont effectuées en continuité, quasi continuité ou discontinuité temporelle, de préférence périodiquement à des moments prescrits ou dans des intervalles prescrits ou dans des fenêtres prescrites de temps.

19. Procédé selon une ou plusieurs des revendications 1 à 18, où un ou plusieurs des signaux A*, A, B, C, C', D, E, F, G, H, J, K sont saisis ou traités de manière continue ou discontinue, de préférence périodiquement à des moments prescrits ou dans des intervalles prescrits ou dans des fenêtres prescrites de temps.

20. Procédé selon une ou plusieurs des revendications 1 à 19, où une ou plusieurs des grandeurs suivantes sont utilisées en tant que grandeur de qualité (QG):

   - la résistance mécanique d'un joint soudé,
   - la consommation d'énergie pour la génération d'un joint soudé,
   - la puissance de soudage pour la génération d'un joint soudé,
   - la durée de soudage pour la génération d'un joint soudé,
   - la consommation de métal d'apport ou la consommation de matériau d'électrode fusible,
   - l'exemption d'inclusions,
   - la surélévation du cordon de soudure.

21. Procédé selon une ou plusieurs des revendications 1 à 20, où à l'étape VII un algorithme est prescrit ou déterminé pour la corrélation, de préférence un algorithme résultant d'un réseau neuronal suivant le processus d'apprentissage.

22. Procédé selon une ou plusieurs des revendications 1 à 21, où l'algorithme déterminé à l'étape VII est re-déterminé à intervalles fixes prescrits et/ou après détermination de paramètres de service différents des paramètres de service existants à la détermination d'un algorithme.

23. Procédé selon une ou plusieurs des revendications 1 à 22, où est utilisé à l'étape VII un système auto-apprenant et notamment un réseau neuronal auto-optimisant, lesquels conservent dans le temps l'expérience d'apprentissage relative à la corrélation entre la grandeur d'évaluation (BG) et la grandeur de qualité (QG).

24. Procédé selon la revendication 22 ou 23, où à l'étape VII un algorithme nouvellement déterminé est comparé suivant un ou plusieurs critères d'évaluation à l'algorithme précédemment déterminé et appliqué, et où l'algorithme nouvellement déterminé est ensuite appliqué, si celui-ci est suffisamment différent de l'algorithme précédemment déterminé et appliqué.

25. Procédé selon une ou plusieurs des revendications 10 à 24, où la régulation de l'étape VIII est effectuée de manière à ce qu'une caractéristique P, PI, PID ou PDPI en résulte.

26. Procédé selon une ou plusieurs des revendications 10 à 24, où l'étape VIII est exécutée en recourant à une logique floue.

27. Procédé selon une ou plusieurs des revendications 1 à 26, où suivant l'étape VII et/ou à l'étape VIII sont influencés en tant que variables de procédé ou grandeurs dérivées de celle-ci, la tension de soudage (U(t)) et/ou le courant (I(t)) s'écoulant par le joint soudé et/ou la vitesse d'avance du joint soudé en cas de joint soudé non ponctuel.

**28.** Procédé selon la revendication 27, où après l'étape VII et/ou à l'étape VIII sont influencées en tant que variables de procédé ou grandeurs dérivées de celle-ci une ou plusieurs des variables suivantes:

- la pression appliquée (k),
- la tension de soudage (U),
- la durée d'un processus de soudage,
- le moment et/ou la durée d'une élévation et/ou d'une réduction du courant (I(t)) s'écoulant par le joint soudé,
- la pente d'une élévation et/ou d'une réduction du courant (I(t)) s'écoulant par le joint soudé,
- la durée d'un courant (I(t)) constant ou quasi-constant s'écoulant par le joint soudé,
- le moment de la coupure du courant (I(t)) s'écoulant par le joint soudé,
- la vitesse d'avance du joint soudé lors de la réalisation de joints soudés non ponctuels.

**29.** Dispositif pour évaluer la qualité de procédés de soudage par pression et de soudage par fusion, et notamment de procédés de soudage par résistance et/ou de la qualité des joints soudés ainsi générés, notamment pour l'exécution du procédé selon les revendications 1 à 9 et 11 à 24,
lequel présente:

- un dispositif de saisie du courant (13) comprenant:

  • le courant (I(t)) s'écoulant par le joint soudé ou corrélé à la génération de puissance sur le joint soudé (signal de sortie A*),
  ou
  • la 1$^e$ dérivée du courant (I(t)) (A*) selon le temps t (dI(t)/dt) (signal de sortie A),

- un dispositif d'évaluation (14) relié au dispositif de saisie du courant (13) et recevant les signaux de sortie (A* ou A) de ce dernier et exécutant les étapes de traitement suivantes:

  • dans le cas du signal de sortie A*:

    l'étape en amont

    (II) formation de la 1$^e$ dérivée du courant (I(t)) (A*) selon le temps t (dI(t)/dt) (A),

  • et après l'étape II ou dans le cas du signal de sortie A:

    (III) formation de la 2$^e$ dérivée du courant (I(t)) selon le temps t (d$^2$I(t)/dt$^2$) (B),
    (IV) comme étape optionnelle
    formation de la 3$^e$ dérivée du courant (I(t)) selon le temps t (d$^3$I(t)/dt$^3$) (C),
    (V) comme étape optionnelle
    pondération en fonction de la fréquence de la 2$^e$ dérivée (d$^2$I(t)/dt$^2$) (B) ou de la 3$^e$ dérivée (d$^3$I(t)/dt$^3$) (C) du courant (I(t)) par amortissement ou amplification en fonction de la fréquence, l'amplification étant plus élevée ou l'amortissement étant plus faible à hautes fréquences (f$_i$) qu'à faibles fréquences (f$_i$), en obtenant une 2$^e$ dérivée pondérée par fréquence ([d$^2$I(t)/dt$^2$]f$_i$) (D) ou une 3$^e$ dérivée pondérée par fréquence ([d$^3$I(t)/dt$^3$]f$_i$) (E), représentant une première grandeur d'évaluation (BG1/D ou BG1/E),
    (VI) comme étape optionnelle
    formation de la dérivée

      - de la 2$^e$ dérivée (d$^2$I(t)/dt$^2$) (B) selon le temps t (d$^3$I(t)/dt$^3$) (C)
      ou
      - de la 3$^e$ dérivée (d$^3$I(t)/dt$^3$) (C) selon le temps t (d$^4$I(t)/dt$^4$) (C')
      ou
      - de la 2$^e$ dérivée pondérée par fréquence ([d$^2$I(t)/dt$^2$]f$_i$) (D) selon le temps t (d[d$^2$I(t)/dt$^2$]fi/dt) (F)
      ou
      - de la 3$^e$ dérivée pondérée par fréquence ([d$^3$I(t)/dt$^3$]f$_i$) (E) selon le temps t (d[d$^3$I(t)/dt$^3$] f$_i$/dt) (G),

    représentant une deuxième grandeur d'évaluation (BG2/C ou BG2/C' ou BG2/F ou BG2/G),

ainsi que

- un dispositif de corrélation (16) en aval du dispositif d'évaluation (14) et exécutant l'étape VII suivante:

  (VII) génération d'une corrélation ou application d'une corrélation prédéfinie d'une grandeur d'évaluation (BG) représentant

  - la 2e dérivée du courant (I(t)) selon le temps t ($d^2I(t)/dt^2$) (B),
    et/ou
  - la 3e dérivée du courant (I(t)) selon le temps t ($d^3I(t)/dt^3$) (C),
    et/ou
  - la première grandeur d'évaluation (BG1/D; BG1/E)
    et/ou
  - la deuxième grandeur d'évaluation (BG2/C; BG2/C'; BG2/F; BG2/G),

  avec une grandeur de qualité (QG) relative au procédé de soudage et/ou aux joints soudés générés, en obtenant une grandeur de qualité correspondante (QG/B; QG/C; QG/D; QG/E; QG/C'; QG/F; QG/G).

**30.** Dispositif selon la revendication 29, **caractérisé en ce que** le dispositif de corrélation (16) présente un réseau neuronal effectuant la corrélation de la grandeur d'évaluation (BG) avec la grandeur de qualité (QG/B; QG/C; QG/D; QG/E; QG/C'; QG/F; QG/G).

**31.** Dispositif selon la revendication 30, **caractérisé en ce que** le dispositif de corrélation (16) exécute les mesures suivantes à l'étape VII:

  (VIIa) analyse fréquentielle de la grandeur d'évaluation (BG) en obtenant des grandeurs de plages de fréquences associées à des plages de fréquences partielles ($FG_1$, $FG_2$, ... $FG_n$),
  (VIIb) conduction des grandeurs de plages de fréquences ($FG_1$, $FG_2$, ... $FG_n$) en tant que grandeurs d'entrée vers les neurones d'entrée d'un réseau neuronal,
  et
  (VIIc) attribution de grandeurs de qualité correspondantes (QG/B; QG/C; QG/D; QG/E; QG/C'; QG/F; QG/G), correspondant de préférence à des classes de qualité, aux neurones de sortie du réseau neuronal.

**32.** Dispositif selon la revendication 31, **caractérisé en ce que** le dispositif de corrélation (16) présente des filtres passe-bande attribués à des plages de fréquences ($BP_1$, $BP_2$, ... $BP_n$), lesquels exécutent l'analyse fréquentielle à l'étape VIIa, les grandeurs de plages de fréquences générées ($FG_1$, $FG_2$, ... $FG_n$) étant le cas échéant pondérées par différents facteurs d'amplification ou d'amortissement prédéfinis.

**33.** Dispositif selon la revendication 31, **caractérisé en ce que** le dispositif de corrélation (16) présente un dispositif d'analyse de Fourier, lequel exécute l'analyse fréquentielle à l'étape VIIa, les composants fréquentiels obtenus étant le cas échéant pondérés par différents facteurs d'amplification ou d'amortissement prédéfinis.

**34.** Dispositif selon une ou plusieurs des revendications 29 à 33, présentant un actionneur (10, 12) qui peut influencer une ou plusieurs des variables de procédé suivantes:

  - la pression appliquée (k),
  - la tension de soudage (U),
  - la durée d'un processus de soudage,
  - le moment et/ou la durée d'une élévation et/ou d'une réduction du courant (I(t)) s'écoulant par le joint soudé,
  - la pente d'une élévation et/ou d'une réduction du courant (I(t)) s'écoulant par le joint soudé,
  - la durée d'un courant (I(t)) constant ou quasi-constant s'écoulant par le joint soudé,
  - le moment de la coupure du courant (I(t)) s'écoulant par le joint soudé,
  - la vitesse d'avance du joint soudé lors de la réalisation de joints soudés non ponctuels.

**35.** Dispositif selon la revendication 34, où l'actionneur (10, 12) présente un circuit de commande (12) et un dispositif de réglage du courant (10) pouvant être commandé par le circuit de commande (12), lequel influence le courant (I(t)) s'écoulant par le joint soudé via la source de courant de soudage (5).

**36.** Dispositif selon une ou plusieurs des revendications 29 à 35, pour le réglage de la qualité de procédés de soudage par pression et de soudage par fusion, et notamment de procédés de soudage par résistance et/ou de la qualité de joints soudés ainsi générés,

notamment pour l'exécution du procédé selon les revendications 10 à 28,

présentant un dispositif de régulation (17) relié au dispositif de corrélation (16), obtenant de celui-ci des grandeurs de qualité (QG/B; QG/C; QG/D; QG/E; QG/C'; QG/F; QG/G) en tant que valeur effective ($Q_{IST}$) (H), déterminant la déviation ($|Q_{SOLL} - Q_{IST}|$) par comparaison de la valeur effective ($Q_{IST}$) (H) avec une valeur de consigne ($Q_{SOLL}$) (J) préalablement fixée comme valeur ou plage de valeurs d'une ou de plusieurs grandeurs de qualité (QG/B; QG/C; QG/D; QG/E; QG/C'; QG/F; QG/G), et générant une grandeur de réglage (SG) (K), laquelle influence une ou plusieurs variables de procédés ou des grandeurs dérivées de celles-ci afin de minimiser la déviation ($|Q_{SOLL} - Q_{IST}|$).

37. Dispositif selon la revendication 36, présentant un actionneur (10, 12), lequel reçoit la grandeur de réglage (SG) (K) du dispositif de régulation (17) et influence la tension de soudage (U) et/ou le courant (I(t)) s'écoulant par le joint soudé et/ou la vitesse d'avance du joint soudé en cas de joint soudé non ponctuel en fonction de la grandeur de réglage (SG) (K).

38. Dispositif selon une ou plusieurs des revendications 29 à 37, où le dispositif de saisie du courant (13) est disposé dans le circuit électrique entre la source de courant de soudage (5) et les électrodes (3, 4), ou en liaison active avec ledit circuit électrique.

39. Dispositif selon une ou plusieurs des revendications 29 à 37, où le dispositif de saisie du courant (13) détermine pour un dispositif de soudage par bombardement électronique le courant (I(t)) s'écoulant par la pièce ou par l'électrode recevant le courant.

40. Dispositif selon une ou plusieurs des revendications 36 à 39, où l'actionneur (10, 12) présente un circuit de commande (12) obtenant le signal de réglage (SG) (K) du dispositif de régulation (17), et un dispositif de réglage du courant (10) pouvant être commandé par le circuit de commande (12), lequel influence le courant (I(t)) s'écoulant par le joint soudé via la source de courant de soudage (5).

41. Dispositif selon une ou plusieurs des revendications 30 à 40, où le dispositif de réglage du courant (10) est un circuit à thyristor, un circuit à réglage de l'angle de phase, un convertisseur de fréquence ou un dispositif de régulation de l'amplitude du courant ou de la tension.

42. Dispositif selon une ou plusieurs des revendications 36 à 41, où une valeur de consigne ($Q_{SOLL}$) (J) générée par le dispositif de corrélation (16) est appliquée.

43. Dispositif selon une ou plusieurs des revendications 29 à 42, où le dispositif de saisie du courant (13) est une ceinture de Rogowski délivrant la 1e dérivée du courant (I(t)) selon le temps t, ou un générateur Hall.

44. Procédé selon une ou plusieurs des revendications 29 à 43, où le dispositif de corrélation (16) applique une ou plusieurs des grandeurs suivantes en tant que grandeur de qualité :

- la résistance mécanique d'un joint soudé,
- la consommation d'énergie pour la génération d'un joint soudé,
- la puissance de soudage pour la génération d'un joint soudé,
- la durée de soudage pour la génération d'un joint soudé,
- la consommation de métal d'apport ou la consommation de matériau d'électrode fusible,
- l'exemption d'inclusions,
- la surélévation du cordon de soudure.

45. Dispositif selon une ou plusieurs des revendications 36 à 44, où le dispositif de régulation (17) influence par la grandeur de réglage (SG) (K) une ou plusieurs des variables de procédés suivantes:

- la pression appliquée (k),
- la tension de soudage (U),
- la durée d'un processus de soudage,
- le moment et/ou la durée d'une élévation et/ou d'une réduction du courant (I(t)) s'écoulant par le joint soudé,
- la pente d'une élévation et/ou d'une réduction du courant (I(t)) s'écoulant par le joint soudé,
- la durée d'un courant (I(t)) constant ou quasi-constant s'écoulant par le joint soudé,

- la vitesse d'avance du joint soudé lors de la réalisation de joints soudés non ponctuels.

**46.** Dispositif selon une ou plusieurs des revendications 36 à 45, où le dispositif de régulation (17) est conçu de manière à ce qu'une caractéristique P, PI, PID ou PDPI en résulte.

**47.** Dispositif selon une ou plusieurs des revendications 36 à 46, où le dispositif de régulation (17) est conçu de manière à exécuter une logique floue.

**48.** Dispositif selon une ou plusieurs des revendications 29 à 47, présentant en outre

- un dispositif de sortie (15) en aval du dispositif d'évaluation (14), lequel sort:

  • la première grandeur d'évaluation (BG1/D, BG1/E)
    et/ou
  • la deuxième grandeur d'évaluation (BG2/F, BG2/G, BG2/C, BG2/C')
    et/ou
  • la grandeur de qualité (QG/B; QG/C; QG/D; QG/E; QG/C'; QG/F; QG/G).

**49.** Dispositif de soudage pour le soudage par pression et le soudage par fusion, et notamment le soudage par résistance, notamment pour l'exécution du procédé selon les revendications 1 à 28, présentant :

- des électrodes (3, 4) entre lesquelles les pièces à souder (tôles 1, 2; fils 7, 8) doivent être disposées ou dont une électrode représente la pièce,
- une source de courant de soudage (5) reliée aux électrodes (3, 4) et commutable et/ou pouvant être commandée,
- ainsi qu'un dispositif selon une ou plusieurs des revendications 29 à 48.

Fig. 1

Fig. 2

Fig. 3

Grundwerkstoff, E=210.000N/mm$^2$

plastischer Bereich, E<210.000N/mm$^2$

Plasmaschicht

flüssige Bereiche,
E<<210.000N/mm$^2$.

plastischer Bereich, E<210.000N/mm$^2$

Grundwerkstoff, E=210.000N/mm$^2$

Fig. 4

8

$F_{Prüf}$

$\frac{1}{2} * F_{Prüf}$

$\frac{1}{2} * F_{Prüf}$

7

e

Fig. 5

Fig. 6

EP 1 249 298 B1

| Stromer-fassung | | Ableiten | | Ableiten | | Ableiten | | Gewichten |
| --- | --- | --- | --- | --- | --- | --- | --- | --- |
| I | A* | II | A | III | B | IV | B,C | V |

B,C,D,E

| Ableiten | | Korrelation | | Regelung |
| --- | --- | --- | --- | --- |
| VI | B,C,D,E,C´,F,G | VII | QG/B,QG/C,QG/D,QG/E, QG/C´,QG/F,QG/G | VIII |

Qist          Qsoll

SG

Fig. 7

| I | II | | III | | [IV]fak. | | [V]fak. | | [VI]fak. | | VII | |
|---|---|---|---|---|---|---|---|---|---|---|---|---|
| OUT | IN | OUT | IN | OUT | IN | OUT | IN | OUT | IN | OUT | IN | OUT |
| A* | A* | A | A | B | | | | | | | B | QG/B |
| A* | A* | A | A | B | B | C | | | | | C | QG/C |
| A* | A* | A | A | B | B | C | C | E | | | E | QG/E |
| A* | A* | A | A | B | B | C | | | C | C′ | C′ | QG/C′ |
| A* | A* | A | A | B | B | C | C | E | E | G | G | QG/G |
| A* | A* | A | A | B | | | B | D | | | B | QG/B |
| A* | A* | A | A | B | | | B | D | D | F | F | QG/F |
| A* | A* | A | A | B | | | | | B | C | C | QG/C |

Fig. 8

Fig. 9

EP 1 249 298 B1

Stromerfassung

I

A*

Ableiten

II

A

Ableiten

III

B

Gewichten

V

D

Ableiten

VI

F

Frequenzanalyse

BP₁ → <.>₁ → FG₁

BP₂ → <.>₁ → FG₂

BPₙ → <.>₁ → FGₙ

VIIa

VIIb

Neuronales Netz

VIIc

→ QG₁
→ QG₂
→ QG₃
→ QGₘ

Korrelation

VII

Fig. 10

Fig. 11

Fig. 12

Fig. 13